(19) **Europäisches Patentamt**
**European Patent Office**
**Office européen des brevets**

(11) **EP 4 171 135 A1**

(12) **EUROPEAN PATENT APPLICATION**
published in accordance with Art. 153(4) EPC

(43) Date of publication:
**26.04.2023 Bulletin 2023/17**

(21) Application number: **21837967.5**

(22) Date of filing: **09.07.2021**

(51) International Patent Classification (IPC):
*H04W 64/00* (2009.01)   *G01S 5/06* (2006.01)
*G01S 11/06* (2006.01)   *G10L 15/30* (2013.01)
*G10L 15/22* (2006.01)

(52) Cooperative Patent Classification (CPC):
**G01S 5/06; G01S 11/06; G10L 15/22; G10L 15/30; H04W 64/00**

(86) International application number:
**PCT/CN2021/105455**

(87) International publication number:
**WO 2022/007944 (13.01.2022 Gazette 2022/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.07.2020 CN 202010658726**

(71) Applicant: **Huawei Technologies Co., Ltd.**
**Longgang District**
**Shenzhen, Guangdong 518129 (CN)**

(72) Inventors:
• **YANG, Yuxin**
 **Shenzhen, Guangdong 518129 (CN)**
• **SHU, Haw-wei**
 **Shenzhen, Guangdong 518129 (CN)**
• **RAO, Weiwei**
 **Shenzhen, Guangdong 518129 (CN)**

(74) Representative: **Körber, Martin Hans**
**Mitscherlich PartmbB**
**Patent- und Rechtsanwälte**
**Sonnenstraße 33**
**80331 München (DE)**

(54) **DEVICE CONTROL METHOD, AND RELATED APPARATUS**

(57)   A device control method is disclosed. The method is applied to a communication system, and the communication system includes a first device, a second device, and a third device. The first device, the second device, and the third device communicate with each other by using a near field communication technology. The method includes: The second device sends a first message, where the first message carries an identity of the second device; the third device sends a second message, where the second message carries an identity of the third device; the first device determines an angle of arrival AOA of a signal of the second device based on the received first message; the first device determines an AOA of a signal of the third device based on the received second message; the first device sends a third message to the second device based on the AOA of the signal of the second device and the AOA of the signal of the third device; and the second device performs a response operation in response to the received third message. Embodiments of this application can implement coordinated control for a plurality of devices through a simple operation, thereby effectively improving user experience.

EP 4 171 135 A1

FIG. 1A

**Description**

This application claims priority to Chinese Patent Application No. 202010658726.X, filed with the China National Intellectual Property Administration on July 9, 2020 and entitled "DEVICE CONTROL METHOD AND RELATED APPARATUS", which is incorporated herein by reference in its entirety.

**TECHNICAL FIELD**

This application relates to the field of electronic technologies, and in particular, to a device control method and a related apparatus.

**BACKGROUND**

With development of technologies, smart home devices are increasingly popular. When a user performs voice wake-up on a specific smart home device at home, a plurality of smart home devices may respond. Because the smart home device cannot truly sense a real intent of the user, precise wake-up and control for the plurality of smart home devices cannot be implemented. For example, when there are a plurality of Huawei devices (such as a set-top box, a speaker, and a television) at home, if the user calls a Huawei device "xiaoyi, xiaoyi", all Huawei devices that receive a voice instruction from the user may be woken up and respond to the voice command, causing a trouble to the user. In addition, when the user intends to connect a mobile phone and a specific smart home device for pairing, the user needs to perform complex manual operations on a plurality of smart home devices.
In conclusion, coordinated control for the plurality of devices cannot be implemented through a simple operation currently. This leads to poor user experience.

**SUMMARY**

Embodiments of this application provide a device control method and a related apparatus, to implement coordinated control for a plurality of devices through a simple operation, thereby effectively improving user experience.
According to a first aspect, this application provides a device control method, where the method is applied to a communication system, the communication system includes a first device, a second device, and a third device, the first device, the second device, and the third device communicate with each other by using a near field communication technology, and the method includes:
The second device sends a first message, where the first message carries an identity of the second device; the third device sends a second message, where the second message carries an identity of the third device; the first device determines an angle of arrival (Angle of Arrival, AOA) of a signal of the second device based on the received first message, and determines an AOA of a signal of the third device based on the received second message; the first device sends a third message to the second device based on the AOA of the signal of the second device and the AOA of the signal of the third device; and the second device performs a response operation in response to the received third message.
This application provides a data sharing method. A first device may obtain an AOA of a signal of a second device and an AOA of a signal of a third device respectively based on messages sent by the second device and the third device, and then may determine a target device (for example, the second device) of the first device based on the AOA of the signal of the second device and the AOA of the signal of the third device; and the second device performs a response operation in response to a third message. In this way, coordinated control for a plurality of devices can be implemented through a simple operation, thereby effectively improving user experience.
In a possible implementation, that the second device sends a first message includes: The second device sends the first message in response to a detected voice command. That the third device sends a second message includes: The third device sends the second message in response to the detected voice command. That the second device performs a response operation in response to the received third message includes: The second device outputs response information in response to the received third message and the voice command. In this way, the second device and the third device may initiate AOA measurement in response to the voice command, and a target device determined based on the AOA of the signal of the second device and the AOA of the signal of the third device may also respond to the foregoing voice command. Therefore, the target device determined from the second device and the third device can be accurately controlled through a simple operation.
In a possible implementation, before that the second device sends a first message and before that the third device sends a second message, the method further includes: The first device sends a fourth message in response to the detected voice instruction, where the fourth message carries an identity of the first device. That the second device sends a first message includes: The second device sends the first message to the first device based on the fourth message. That the third device sends a second message includes: The third device sends the second message to the first device based on the fourth message. That the second device performs a response operation in response to the received third message includes: The second device outputs response information in response to the received third message and the voice command. In this way, the first device may initiate AOA measurement in response to the voice command, and a target device determined based on the AOA of the signal of the second device and the AOA of the signal of the third device may also respond to the foregoing voice command. Therefore, the target device determined from the second device and the third device can be accurately controlled through a simple operation.

In a possible implementation, before that the second device sends a first message, and before that the third device sends a second message, the method further includes: The first device sends a fourth message in response to a detected first user operation, where the fourth message carries an identity of the first device. That the second device sends a first message includes: The second device sends the first message to the first device based on the fourth message. That the third device sends a second message includes: The third device sends the second message to the first device based on the fourth message. In this way, the first device may initiate AOA measurement in response to the first user operation, and a target device determined based on the AOA of the signal of the second device and the AOA of the signal of the third device may also respond to the foregoing voice command. Therefore, the target device determined from the second device and the third device can be accurately controlled through a simple operation.

In a possible implementation, that the first device determines an angle of arrival AOA of a signal of the second device based on the received first message, and that the first device determines an AOA of a signal of the third device based on the received second message include: In response to the received first user operation, the first device determines the angle of arrival AOA of the signal of the second device based on the received first message, and determines the AOA of the signal of the third device based on the received second message. In this way, the second device and the third device may initiate AOA measurement at a scheduled time. When the first device detects the first user operation, the first device may determine the AOA of the signal of the second device and the AOA of the signal of the third device based on the messages sent by the second device and the third device. A target device determined based on the AOA of the signal of the second device and the AOA of the signal of the third device may also respond to the foregoing voice command. Therefore, the target device determined from the second device and the third device can be accurately controlled through a simple operation.

In a possible implementation, before that the first device sends a third message to the second device based on the AOA of the signal of the second device and the AOA of the signal of the third device, the method further includes: The first device determines a distance between the first device and the second device based on the received first message; and the first device determines a distance between the first device and the third device based on the received second message. That the first device sends a third message to the second device based on the AOA of the signal of the second device and the AOA of the signal of the third device includes: The first device sends the third message to the second device based on the AOA of the signal of the second device, the distance between the first device and the second device, the AOA of the signal of the third device, and the distance between the first device and the third device. In this way, a target device may be determined from the second device and the third device from two dimensions: an AOA of a signal and a distance. This improves a possibility of accurately controlling a target device in a plurality of devices.

In a possible implementation, before that the first device sends a third message to the second device based on the AOA of the signal of the second device and the AOA of the signal of the third device, the method further includes: The first device determines a received signal strength indication (Received Signal Strength Indication, RRSI) of the second device based on the received first message; and the first device determines an RRSI of the third device based on the received second message. That the first device sends a third message to the second device based on the AOA of the signal of the second device and the AOA of the signal of the third device includes: The first device sends the third message to the second device based on the AOA of the signal of the second device, the distance between the first device and the second device, the RRSI of the second device, the AOA of the signal of the third device, the distance between the first device and the third device, and the RRSI of the third device. In this way, a target device may be determined from the second device and the third device from three dimensions: an AOA of a signal, a distance, and an RRSI. This improves a possibility of accurately controlling a target device in a plurality of devices.

In a possible implementation, that the first device sends a third message to the second device based on the AOA of the signal of the second device and the AOA of the signal of the third device includes: When the first device determines, from the second device and the third device, that a device whose AOA of a signal is closest to 0 degrees is the second device, the first device sends the third message to the second device. In this way, a target device may be determined based on the AOA of the signal of the second device and the AOA of the signal of the third device.

In a possible implementation, that the first device sends the third message to the second device based on the AOA of the signal of the second device, the distance between the first device and the second device, the AOA of the signal of the third device, and the distance between the first device and the third device includes: The first device sends the third message to the second device when a difference between the AOA of the signal of second device and the AOA of the signal of the third device is greater than a first threshold, and the first device determines, from the second device and the third device, that a device whose AOA of a signal is smaller is the second device; or the first device sends the third message to the second device when a difference between the AOA of the signal of the second device and the AOA of the signal of third device is less than or equal to a second threshold, and the first device determines, from the second device and the third device, that a device with a smaller distance to the first device is the second device. In this way, a target device may be determined based on the AOA of the signal of the second device and the AOA of the signal of the third device, the distance between the first device and the second device, and the distance between the first device and the third device.

In a possible implementation, that the first device sends the third message to the second device based on the AOA of the signal of the second device, the distance between the first device and the second device, the RRSI of the second device, the AOA of the signal of the third device, the distance between the first device and the third device, and the RRSI of the third device includes: The first device sends the third message to the second device when the RRSI of the second device is greater than a preset RRSI, and the RRSI of the third device is less than or equal to the preset RRSI; or the first device determines, from the second device and the third device, that a device whose AOA of a signal is smaller is the second device, and the first device sends the third message to the second device when both the RRSI of the second device and the RRSI of the third device are greater than or less than or equal to a preset RRSI, and when a difference between the AOA of the signal of second device and the AOA of the signal of the third device is greater than a first threshold; or the first device determines, from the second device and the third device, that a device with a smaller distance to the first device is the second device, and the first device sends the third message to the second device when both the RRSI of the second device and the RRSI of the third device are greater than or less than or equal to a preset RRSI, and when a difference between the AOA of the signal of second device and the AOA of the signal of the third device is less than or equal to a second threshold. In this way, a target device may be determined based on the AOA of the signal of the second device, the AOA of the signal of the third device, the distance between the first device and the second device, the distance between the first device and the third device, the RRSI of the second device and the RRSI of the third device.

In a possible implementation, the first device determines the distance between the first device and the second device based on the received first message; and before that the first device determines a distance between the first device and the third device based on the received second message, the method further includes:

The first device receives the first message, and sends a fifth message to the second device; the second device receives the fifth message, and sends a sixth message to the first device; the first device receives the second message, and sends a seventh message to the second device; the second device receives the seventh message, and sends an eighth message to the first device; and the first device determines the distance between the first device and the second device based on the received first message. That the first device determines a distance between the first device and the third device based on the received second message includes: The first device determines the distance between the first device and the second device based on receiving moments and sending moments of the first message, the fifth message, and the sixth message; and the first device determines the distance between the first device and the third device based on receiving moments and sending moments of the second message, the seventh message, and the eighth message. In this way, the distance between the first device and the second device is determined based on the receiving moments and the sending moments of the first message, the fifth message, and the sixth message, and the distance between the first device and the third device is determined based on the receiving moments and the sending moments of the second message, the seventh message, and the eighth message, so that precision of distance measurement can be improved.

In a possible implementation, before that the second device receives the fifth message and sends a sixth message to the first device, the method further includes: The first device sends a ninth message to the second device; and the second device receives the ninth message. That the first device determines the distance between the first device and the second device based on the first message, the fifth message, and the sixth message includes: The first device determines the distance between the first device and the second device based on receiving moments and sending moments of the first message, the fifth message, the sixth message, and the ninth message. In this way, the distance between the first device and the second device is determined based on the receiving moments and the sending moments of the first message, the fifth message, and the sixth message, and the distance between the first device and the second device is determined based on the receiving moments and the sending moments of the first message, the fifth message, the sixth message, and the ninth message, so that precision of distance measurement can be improved.

In a possible implementation, the sixth message carries moments at which the second device sends the first message, receives the fifth message, and sends the sixth message.

In a possible implementation, the sixth message carries moments at which the second device sends the first message, receives the fifth message, receives the ninth message, and sends the sixth message.

In a possible implementation, before that the first device sends a third message to the second device based on the AOA of the signal of the second device and the AOA of the signal of the third device, the method further includes: A fourth device sends a tenth message, where the tenth message carries an identity of the fourth device; and the first device determines an angle of arrival AOA of a signal of the fourth device based on the received tenth message. That the first device sends a third message to the second device based on the AOA of the signal of the second device and the AOA of the signal of the third device includes: The first device sends the third message to the second device based on the AOA of the signal of the second device, the AOA of the signal of the third device, and the AOA of the signal of the fourth device.

In a possible implementation, before that the first device sends a third message to the second device based on the AOA of the signal of the second device and the AOA of the signal of the third device, the method further includes: The first device determines a distance between the first device and the fourth device and an RRSI of the fourth device based on the received tenth message. That the first device sends a third message to the second device based on the AOA of the signal of the second device and the AOA of the signal of the third device includes: The first device sends the third message to the second device based on the AOA of the signal of the second device, the distance between the first device and the second device, the AOA of the signal of the third device, and the distance between the first device and the third device.

In a possible implementation, before that the first device sends a third message to the second device based on the AOA of the signal of the second device and the AOA of the signal of the third device, the method further includes: The first device determines a received signal strength indicator RRSI of the second device based on the received first message; and the first device determines an RRSI of the third device based on the received second message. That the first device sends a third message to the second device based on the AOA of the signal of the second device and the AOA of the signal of the third device includes: The first device sends the third message to the second device based on the AOA of the signal of the second device, the distance between the first device and the second device, the RRSI of the second device, the AOA of the signal of the third device, the distance between the first device and the third device, the RRSI of the third device, the distance between the first device and the fourth device, and the RRSI of the fourth device.

In a possible implementation, that the first device sends the third message to the second device based on the AOA of the signal of the second device, the distance between the first device and the second device, the RRSI of the second device, the AOA of the signal of the third device, the distance between the first device and the third device, the RRSI of the third device, the distance between the first device and the fourth device, and the RRSI of the fourth device includes: The first device sends the third message to the second device when only the RRSI of the second device is greater than a preset RRSI among the second device, the third device and the fourth device; or when more than one of the second device, the third device and the fourth device has an RRSI greater than a preset RRSI, two devices whose AOAs of signals are closest to a preset angle are determined from devices whose RRSIs are greater than the preset RRSI and that are of the second device, the third device and the fourth device; or when none of the second device, the third device and the fourth device have RRSIs greater than a preset RRSI, two devices whose AOAs of signals are closest to a preset angle are determined from the second device, the third device and the fourth device, and when a difference between the AOAs of the signals of the two devices is greater than a first threshold, a device with a smaller AOA of a signal is determined from the two devices as the second device, and the first device sends the third message to the second device; or when more than one of the second device, the third device and the fourth device has an RRSI greater than a preset RRSI, two devices whose AOAs of signals are closest to a preset angle are determined from devices whose RRSIs are greater than the preset RRSI and that are of the second device, the third device and the fourth device; or when none of the second device, the third device and the fourth device have RRSIs greater than a preset RRSI, two devices whose AOAs of signals are closest to a preset angle are determined from the second device, the third device and the fourth device, and when a difference between the AOAs of the signals of the two devices is less than or equal to a second threshold, a device with a smaller distance to the first device is determined from the two devices as the second device, and the first device sends the third message to the second device.

According to a second aspect, this application provides a data sharing method, including: A first device receives a first message sent by a second device, where the first message carries an identity of the second device; the first device receives a second message sent by a third device, where the second message carries an identity of the third device; the first device determines an angle of arrival AOA of a signal of the second device based on the first message; the first device determines an AOA of a signal of the third device based on the second message; and the first device sends a third message to the second device based on the AOA of the signal of the second device and the AOA of the signal of the third device, where the third message is used to indicate the second device to perform a response operation.

This application provides a data sharing method. A first device may obtain an AOA of a signal of a second device and an AOA of a signal of a third device respectively based on messages sent by the second device and the third device, and then may determine a target device (for example, the second device) of the first device based on the AOA of the signal of the second device and the AOA of the signal of the third device; and the second device performs a response operation in response to a third message. In this way, coordinated control for a plurality of devices can be implemented through a simple operation, thereby effectively improving user experience.

In a possible implementation, the first message is sent by the second device in response to a voice command, the second message is sent by the second device in response to the detected voice command, and the third message is used to indicate the second device to output response information in response to the voice command. In this way, the second device and the third device may initiate AOA measurement in response to the voice command, and a target device determined based on the AOA of the signal of the second device and the AOA of the signal of the third device may also respond to the foregoing voice command. Therefore, the target device in the second device and the third device can be accurately controlled through a simple operation.

In a possible implementation, before that a first device receives a first message sent by a second device, and before that the first device receives a second message sent by a third device, the method further includes: The first device sends a fourth message in response to the detected voice command, where the fourth message carries an identity of the first device, the first message is sent by the second device based on the fourth message, the second message is sent by the third device based on the fourth message, and the third message is used to indicate the second device to output the response information in response to the voice command. In this way, the first device may initiate AOA measurement in response to the voice command, and a target device determined based on the AOA of the signal of the second device and the AOA of the signal of the third device may also respond to the foregoing voice command. Therefore, the target device in the second device and the third device can be accurately controlled through a simple operation.

In a possible implementation, before that a first device receives a first message sent by a second device, and before that the first device receives a second message sent by a third device, the method further includes: The first device sends a fourth message in response to a detected first user operation, where the fourth message carries an identity of the first device, the first message is sent by the second device based on the fourth message, and the second message is sent by the third device based on the fourth message. In this way, the first device may initiate AOA measurement in response to the first user operation, and a target device determined based on the AOA of the signal of the second device and the AOA of the signal of the third device may also respond to the foregoing voice command. Therefore, the target device determined from the second device and the third device can be accurately controlled through a simple operation.

In a possible implementation, that the first device determines an angle of arrival AOA of a signal of the second device based on the first message, and that the first device determines an AOA of a signal of the third device based on the second message include: In response to the received first user operation, the first device determines the angle of arrival AOA of the signal of the second device based on the first message, and determines the AOA of the signal of the third device based on the second message. In this way, the second device and the third device may initiate AOA measurement at a scheduled time. When the first device detects the first user operation, the first device may determine the AOA of the signal of the second device and the AOA of the signal of the third device based on the messages sent by the second device and the third device. A target device determined based on the AOA of the signal of the second device and the AOA of the signal of the third device may also respond to the foregoing voice command. Therefore, the target device determined from the second device and the third device can be accurately controlled through a simple operation.

In a possible implementation, before that the first device sends a third message to the second device based on the AOA of the signal of the second device and the AOA of the signal of the third device, the method further includes: The first device determines a distance between the first device and the second device based on the first message; and the first device determines a distance between the first device and the third device based on the second message. That the first device sends a third message to the second device based on the AOA of the signal of the second device and the AOA of the signal of the third device includes: The first device sends the third message to the second device based on the AOA of the signal of the second device, the distance between the first device and the second device, the AOA of the signal of the third device, and the distance between the first device and the third device. In this way, a target device may be determined from the second device and the third device from two dimensions: an AOA of a signal and a distance. This improves a possibility of accurately controlling a target device in a plurality of devices.

In a possible implementation, before that the first device sends a third message to the second device based on the AOA of the signal of the second device and the AOA of the signal of the third device, the method further includes: The first device determines a received signal strength indicator RRSI of the second device based on the first message; and the first device determines an RRSI of the third device based on the second message. That the first device sends a third message to the second device based on the AOA of the signal of the second device and the AOA of the signal of the third device includes: The first device sends the third message to the second device based on the AOA of the signal of the second device, the distance between the first device and the second device, the RRSI of the second device, the AOA of the signal of the third device, the distance between the first device and the third device, and the RRSI of the third device. In this way, a target device may be determined from the second device and the third device from three dimensions: an AOA of a signal, a distance, and an RRSI. This improves a possibility of accurately controlling a target device in a plurality of devices.

In a possible implementation, that the first device sends a third message to the second device based on the AOA of the signal of the second device and the AOA of the signal of the third device includes: When the first device determines, from the second device and the third device, that a device whose AOA of a signal is closest to 0 degrees is the second device, the first device sends the third message to the second device. In this way, a target device may be determined based on the AOA of the signal of the second device and the AOA of the signal of the third device.

In a possible implementation, that the first device sends the third message to the second device based on the AOA of the signal of the second device, the distance between the first device and the second device, the AOA of the signal of the third device, and the distance between the first device and the third device includes: The first device sends the third message to the second device when a difference between the AOA of the signal of second device and the AOA of the signal of the third device is greater than a first threshold, and the first device determines, from the second device and the third device, that a device whose AOA of a signal is smaller is the second device; or the first device sends the third message to the second device when a difference between the AOA of the signal of the second device and the AOA of the signal of third device is less than or equal to a second threshold, and the first device determines, from the second device and the third device, that a device with a smaller distance to the first device is the second device. In this way, a target device may be determined based on the AOA of the signal of the second device and the AOA of the signal of the third device, the distance between the first device and the second device, and the distance between the first device and the third device.

In a possible implementation, that the first device sends the third message to the second device based on the AOA of the signal of the second device, the distance between the first device and the second device, the RRSI of the second device, the AOA of the signal of the third device, the distance between the first device and the third device, and the RRSI of the third device includes: The first device sends the third message to the second device when the RRSI of the second device is greater than a preset RRSI, and the RRSI of the third device is less than or equal to the preset RRSI; or the first device determines, from the second device and the third device, that a device whose AOA of a signal is smaller is the second device, and the first device sends the third message to the second device when both the RRSI of the second device and the RRSI of the third device are greater than or less than or equal to a preset RRSI, and when a difference between the AOA of the signal of second device and the AOA of the signal of the third device is greater than a first threshold; or the first device determines, from the second device and the third device, that a device with a smaller distance to the first device is the second device, and the first device sends the third message to the second device when both the RRSI of the second device and the RRSI of the third device are greater than or less than or equal to a preset RRSI, and when a difference between the AOA of the signal of second device and the AOA of the signal of the third device is less than or equal to a second threshold. In this way, a target device may be determined based on the AOA of the signal of the second device, the AOA of the signal of the third device, the distance between the first device and the second device, the distance between the first device and the third device, the RRSI of the second device and the RRSI of the third device.

In a possible implementation, the first device determines the distance between the first device and the second device based on the first message; and before that the first device determines a distance between the first device and the third device based on the second message, the method further includes: The first device sends a fifth message to the second device based on the received first message; the first device receives a sixth message sent by the second device; the first device sends a seventh message to the second device based on the received second message; the first device receives an eighth message sent by the third device; and the first device determines the distance between the first device and the second device based on the first message. That the first device determines a distance between the first device and the third device based on the second message includes: The first device determines the distance between the first device and the second device based on receiving moments and sending moments of the first message, the fifth message, and the sixth message; and the first device determines the distance between the first device and the third device based on receiving moments and sending moments of the second message, the seventh message, and the eighth message. In this way, the distance between the first device and the second device is determined based on the receiving moments and the sending moments of the first message, the fifth message, and the sixth message, and the distance between the first device and the third device is determined based on the receiving moments and the sending moments of the second message, the seventh message, and the eighth message, so that precision of distance measurement can be improved.

In a possible implementation, before that the first device receives a sixth message sent by the second device, the method further includes: The first device sends a ninth message to the second device. That the first device determines the distance between the first device and the second device based on receiving moments and sending moments of the first message, the fifth message, and the sixth message includes: The first device determines the distance between the first device and the second device based on receiving moments and sending moments of the first message, the fifth message, the sixth message, and the ninth message. In this way, the distance between the first device and the second device is determined based on the receiving moments and the sending moments of the first message, the fifth message, and the sixth message, and the distance between the first device and the second device is determined based on the receiving moments and the sending moments of the first message, the fifth message, the sixth message, and the ninth message, so that precision of distance measurement can be improved.

In a possible implementation, the sixth message carries moments at which the second device sends the first message, receives the fifth message, and sends the sixth message.

In a possible implementation, the sixth message carries moments at which the second device sends the first message, receives the fifth message, receives the ninth message, and sends the sixth message.

According to a third aspect, this application provides a terminal, where the terminal is a first device, and the terminal includes: a processor, a near field communication module, and a memory, the processor is coupled to the memory, and the processor is connected to the near field communication module. The near field communication module is configured to receive a first message sent by a second device, where the first message carries an identity of the second device. The near field communication module is further configured to receive a second message sent by a third device, where the second message carries an identity of the third device. The processor is configured to determine an angle of arrival AOA of a signal of the second device based on the first message. The processor is further configured to determine an AOA of a signal of the third device based on the second message. The processor is further configured to determine, based on the AOA of the signal of the second device and the AOA of the signal of the third device, that the second device is a target device. The near field communication module is further configured to send a third message to the second device, where the third message is used to indicate the second device to perform a response operation.

In a possible implementation, the terminal further includes: two UWB antennas, where the near field communication module is a UWB communication module, and the UWB communication module is connected to the two UWB antennas. The near field communication module is specifically configured to receive, by using the two UWB antennas, the first message sent by the second device. The near field communication module is specifically configured to receive, by using the two UWB antennas, the second message sent by the third device. The processor is specifically configured to determine the angle of arrival AOA of the signal of the second device based on a phase difference of the first message on the two UWB antennas. The processor is specifically configured to determine the AOA of the signal of the third device based on a phase difference of the second message on the two UWB antennas.

In a possible implementation, the first message is sent by the second device in response to a voice command, the second message is sent by the second device in response to the detected voice command, and the third message is used to indicate the second device to output response information in response to the voice command.

In a possible implementation, before the near field communication module receives the first message sent by the second device and receives the second message sent by the third device, the processor is further configured to send a first instruction to the near field communication module in response to the detected voice command. The near field communication module is further configured to send a fourth message based on the first instruction, where the fourth message carries an identity of the first device, and the first message is sent by the second device based on the fourth message. The second message is sent by the third device based on the fourth message, and the third message is used to indicate the second device to output response information in response to the voice command.

In a possible implementation, before the near field communication module receives the first message sent by the second device and receives the second message sent by the third device, the processor is further configured to send a first instruction to the near field communication module in response to a detected first user operation. The near field communication module is further configured to send a fourth message based on the first instruction, where the fourth message carries an identity of the first device, the first message is sent by the second device based on the fourth message, and the second message is sent by the third device based on the fourth message.

In a possible implementation, the processor is specifically configured to: in response to the received first user operation, determine the angle of arrival AOA of the signal of the second device based on the first message, and determine the AOA of the signal of the third device based on the second message.

In a possible implementation, before determining, based on the AOA of the signal of the second device and the AOA of the signal of the third device, that the second device is the target device, the processor is further configured to: determine a distance between the first device and the second device based on the first message; and determine a distance between the first device and the third device based on the received second message. The processor is specifically configured to determine, based on the AOA of the signal of the second device, the distance between the first device and the second device, the AOA of the signal of the third device, and the distance between the first device and the third device, that the second device is the target device.

In a possible implementation, before the processor determines, based on the AOA of the signal of the second device and the AOA of the signal of the third device, that the second device is the target device, the processor is further configured to: determine a received signal strength indicator RRSI of the second device based on the received first message; and determine an RRSI of the third device based on the received second message. The processor is specifically configured to determine, based on the AOA of the signal of the second device, the distance between the first device and the second device, the RRSI of the second device, the AOA of the signal of the third device, the distance between the first device and the third device, and the RRSI of the third device, that the second device is the target device.

In a possible implementation, the processor is specifically configured to determine from the second device and the third device that the second device whose AOA of the signal is closest to 0 degrees is the target device.

In a possible implementation, the processor is specifically configured to: when a difference between the AOA of the signal of the second device and the AOA of the signal of the third device is greater than a first threshold, determine from the second device and the third device that the second device with a smaller AOA of a signal is the target device; or when a difference between the AOA of the signal of the second device and the AOA of the signal of the third device is less than or equal to a second threshold, determine from the second device and the third device that the second device with a smaller distance to the first device is the target device.

In a possible implementation, the processor is specifically configured to: when the RRSI of the second device is greater than a preset RRSI and the RRSI of the third device is less than or equal to the preset RRSI, determine that the second device is the target device; or when both the RRSI of the second device and the RRSI of the third device are greater than or less than or equal to a preset RRSI, and a difference between the AOA of the signal of the second device and the AOA of the signal of the third device is greater than a first threshold, determine from the second device and the third device that the second device with a smaller AOA of a signal is the target device; or when both the RRSI of the second device and the RRSI of the third device are greater than or less than or equal to a preset RRSI, and a difference between the AOA of the signal of the second device and the AOA of the signal of the third device is less than or equal to a second threshold, determine from the second device and the third device that the second device with a smaller distance to the first device is the target device.

In a possible implementation, before the processor determines the distance between the first device and the second device based on the first message, and determines the distance between the first device and the third device based on the second message, the near field communication module is further configured to:
send a fifth message to the second device after receiving the first message; receive a sixth message sent by the second device; send a seventh message to the third device after receiving the second message; and receive an eighth message sent by the third device. The processor is specifically configured to: determine the distance between the first device and the second device based on receiving moments and sending moments of the first message, the fifth message, and the sixth message; and determine the distance between the first device and the third device based on receiving moments and sending moments of the second message, the seventh message, and the eighth message.

In a possible implementation, the near field communication module is further configured to send a ninth message to the second device before receiving the sixth message sent by the second device. The processor is specifically configured to determine the distance between the first device and the second device based on receiving moments and sending moments of the first message, the fifth message, the sixth message, and the ninth message.

In a possible implementation, the sixth message carries moments at which the second device sends the first message, receives the fifth message, and sends the sixth message.

In a possible implementation, the sixth message carries moments at which the second device sends the first message, receives the fifth message, receives the ninth message, and sends the sixth message.

According to a fourth aspect, this application provides a chip system. The chip system may be disposed in a first device, a second device, or a third device. Using the first device as an example, the chip system includes a processor and a UWB chip. The UWB chip may receive, by using a UWB antenna, a first message sent by the second device, where the first message carries an identity of the second device. The UWB chip may further receive, by using the UWB antenna, a second message sent by the third device, where the second message carries an identity of the third device. The processor is configured to determine an angle of arrival AOA of a signal of the second device based on the first message. The processor is further configured to determine an AOA of a signal of the third device based on the second message. The processor is further configured to determine, based on the AOA of the signal of the second device and the AOA of the signal of the third device, that the second device is a target device. The UWB chip may further send a third message to the second device by using the UWB antenna, where the third message is used to indicate the second device to perform a response operation.

According to the chip system provided in this application, the chip system may be disposed in the first device. The first device measures the AOA of the signal of the second device and the AOA of the signal of the third device by using a UWB positioning measurement technology. Then, the first terminal may determine the target device (for example, the second device) of the first device based on the AOA of the signal of the second device and the AOA of the signal of the third device, and the second device performs the response operation in response to the third message. In this way, coordinated control for a plurality of devices can be implemented through a simple operation, thereby effectively improving user experience.

According to a fifth aspect, this application provides a communication apparatus, including one or more processors and one or more memories. The one or more memories are coupled to the one or more processors. The one or more memories are configured to store computer program code. The computer program code includes computer instructions. When the one or more processors execute the computer instructions, a communication apparatus is enabled to perform the device control method according to any one of the possible implementations of the second aspect.

According to a sixth aspect, an embodiment of this application provides a computer storage medium, including computer instructions. When the computer instructions are run on an electronic device, a communication apparatus is enabled to perform the device control method according to any one of the possible implementations of any one of the foregoing aspects.

According to a seventh aspect, an embodiment of this application provides a computer program product. When the computer program product runs on a computer, the computer is enabled to perform the device control method according to any one of the possible implementations of any one of the foregoing aspects.

**BRIEF DESCRIPTION OF DRAWINGS**

FIG. 1A and FIG. 1B are schematic scenario diagrams of a voice interaction scenario according to an embodiment of this application;

FIG. 2 is a schematic diagram of a system architecture according to an embodiment of this application;

FIG. 3A is a schematic diagram of a structure of an electronic device according to an embodiment of this application;

FIG. 3B is a schematic diagram of a coordinate system of an electronic device according to an embodiment of this application;

FIG. 3C to FIG. 3E each are a schematic diagram of UWB antenna distribution according to an embodiment of this application;

FIG. 4 is a schematic diagram of a structure of another electronic device according to an embodiment of this application;

FIG. 5A is a schematic flowchart of a device control method according to an embodiment of this application;

FIG. 5B is a schematic diagram of a ranging algorithm 1 according to an embodiment of this application;

FIG. 5C is a schematic flowchart of another device control method according to an embodiment of this application;

FIG. 5D is a schematic diagram of an AOA of a signal according to an embodiment of this application;

FIG. 5E is a schematic diagram of a ranging algorithm 2 according to an embodiment of this application;

FIG. 5F is a schematic flowchart of another device control method according to an embodiment of this application;

FIG. 5G is a schematic flowchart of determining a target device according to an embodiment of this application;

FIG. 5H-1 and FIG. SH-2 are another schematic flowchart of determining a target device according to an embodiment of this application;

FIG. 6A-1 and FIG. 6A-2 are a schematic flowchart of another device control method according to an embodiment of this application;

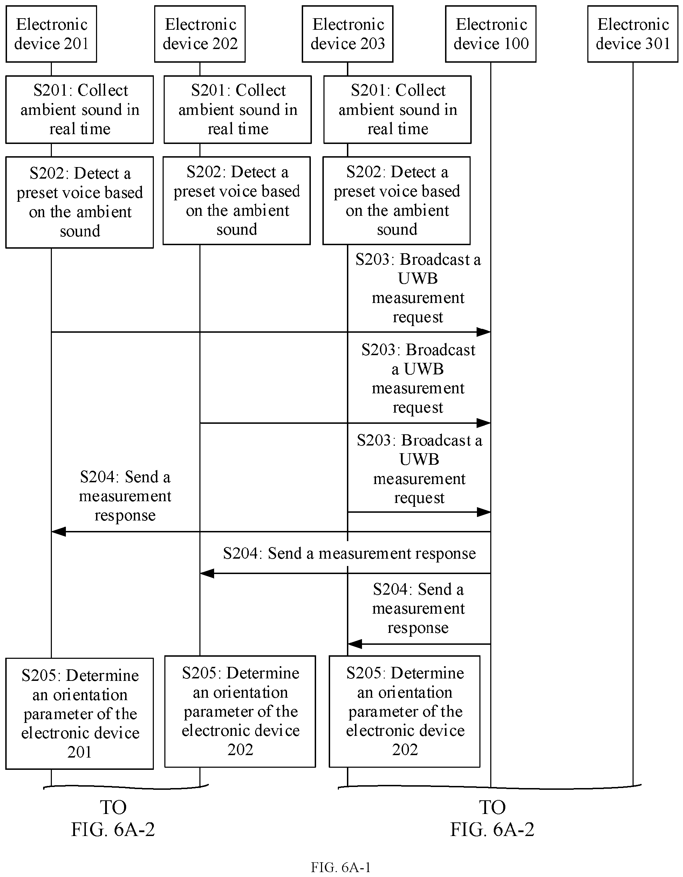

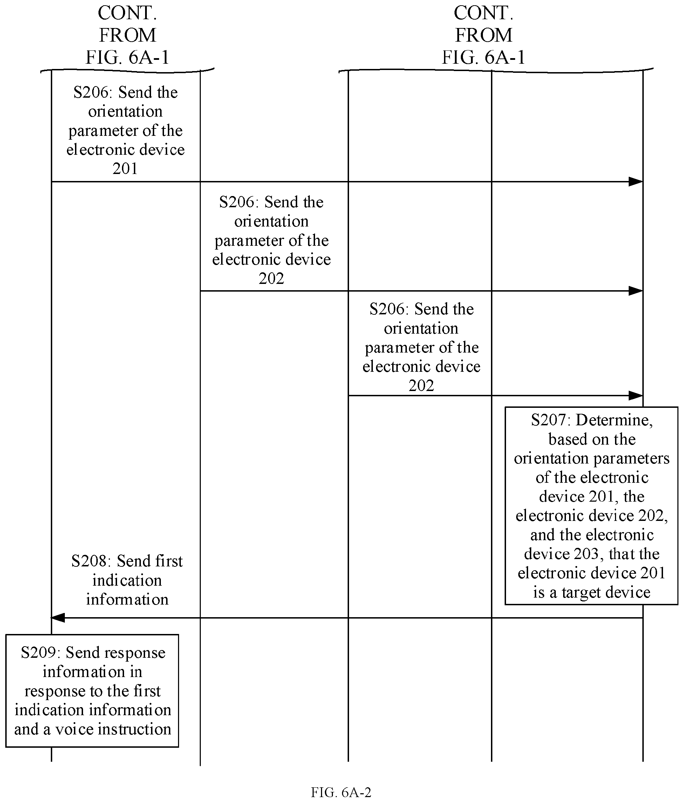

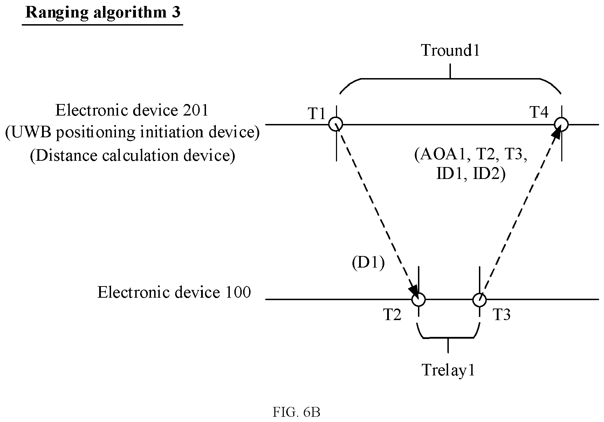

FIG. 6B is a schematic diagram of a ranging algorithm 3 according to an embodiment of this application;

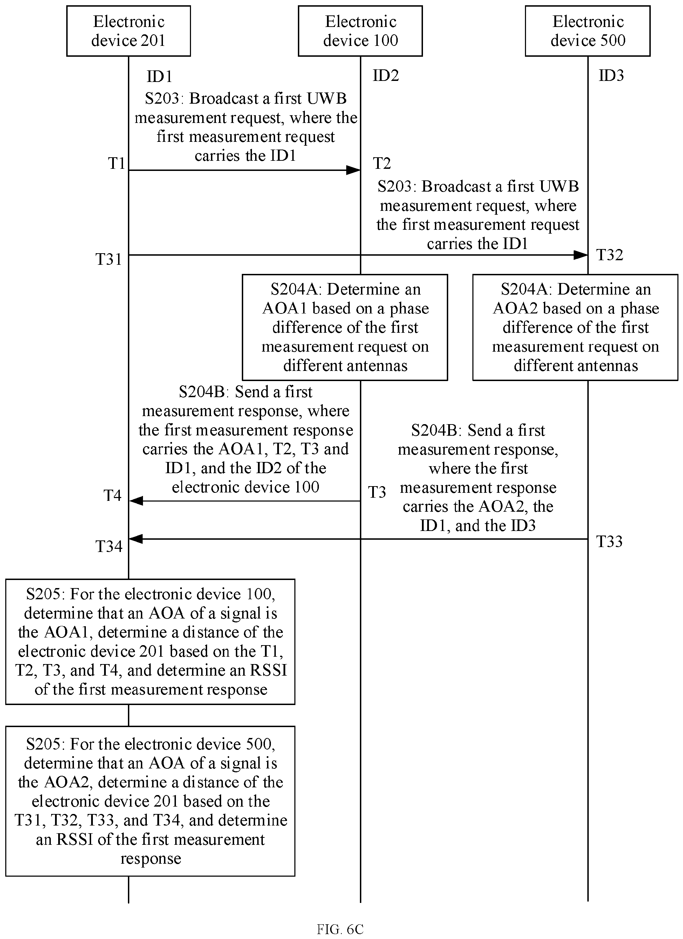

FIG. 6C is a schematic flowchart of another device control method according to an embodiment of this application;

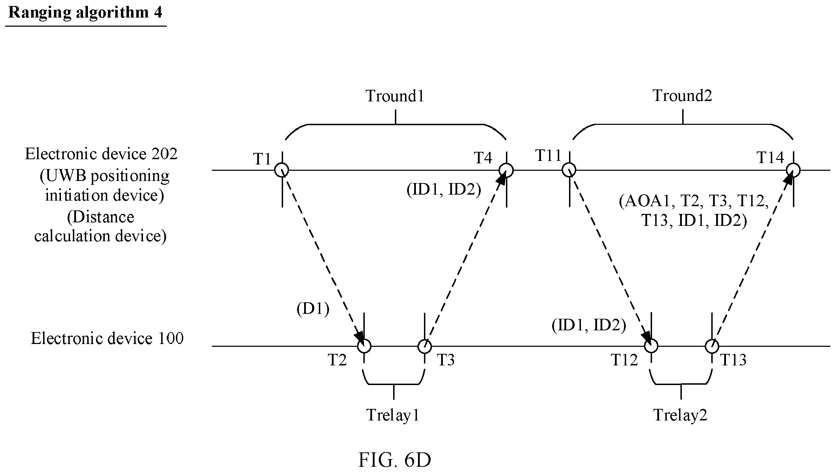

FIG. 6D is a schematic diagram of a ranging algorithm 4 according to an embodiment of this application;

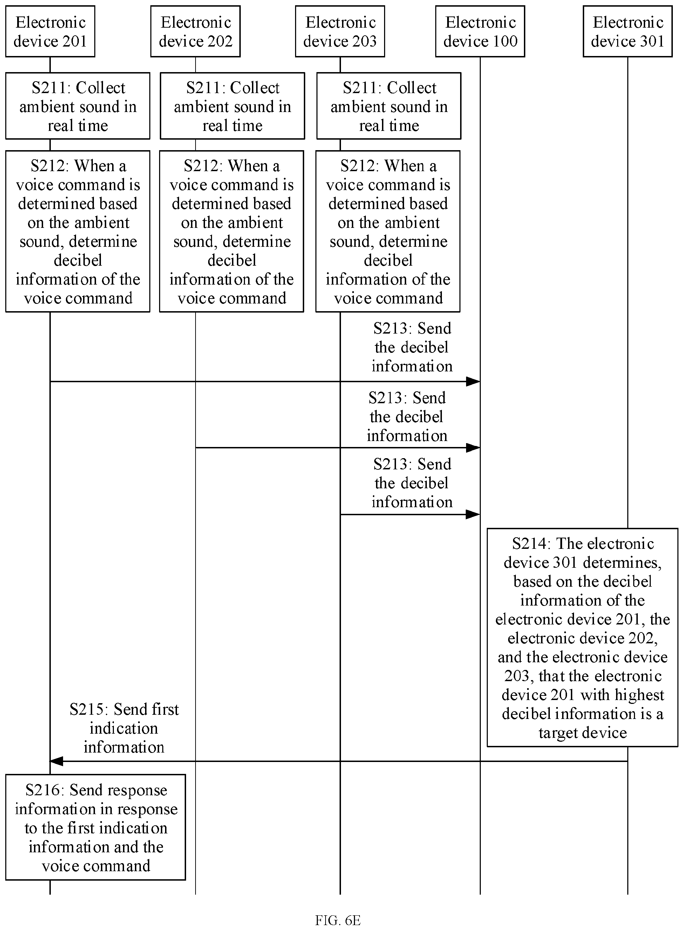

FIG. 6E is a schematic flowchart of another device control method according to an embodiment of this application;

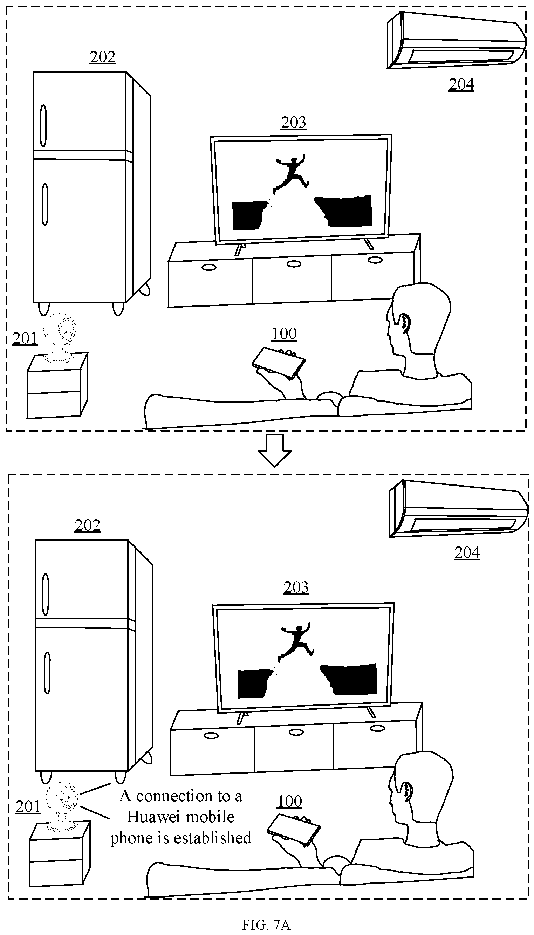

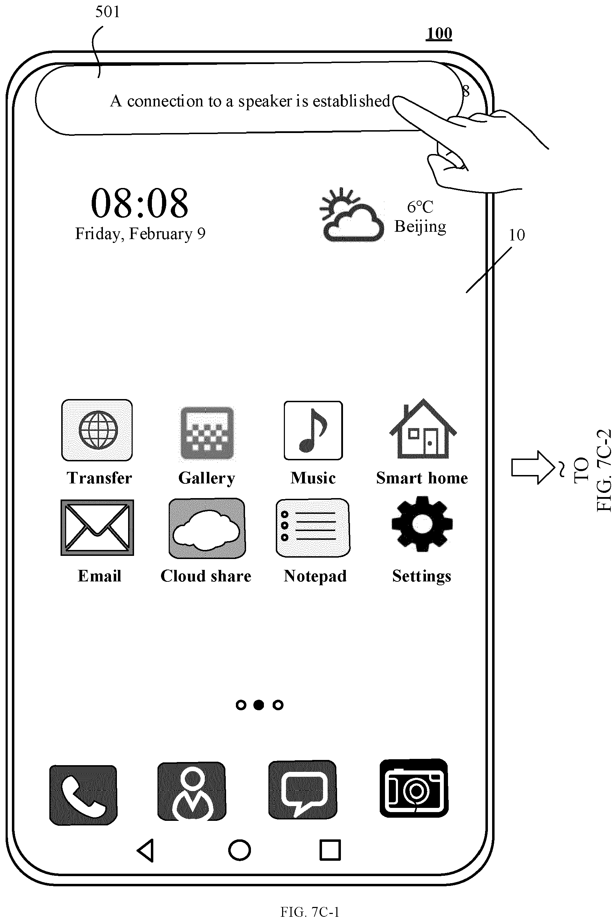

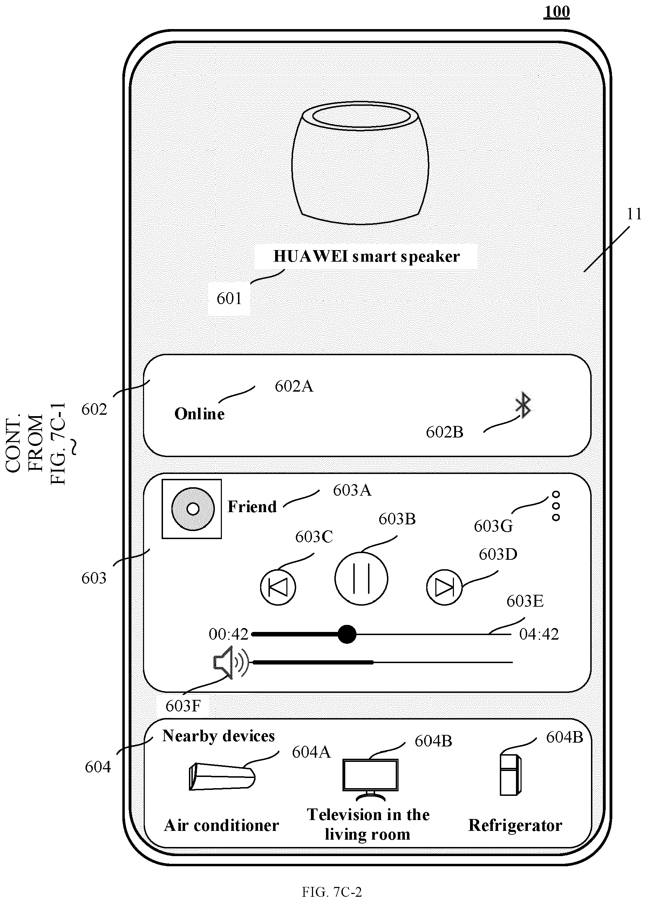

FIG. 7A is a schematic scenario diagram of a pairing and connection scenario according to an embodiment of this application;

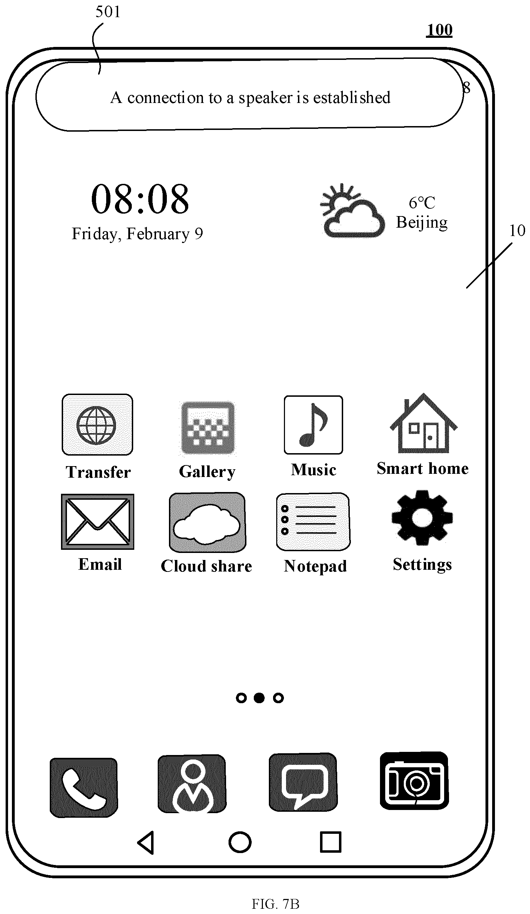

FIG. 7B to FIG. 7E each are a schematic diagram of a pairing and connection interface according to an embodiment of this application;

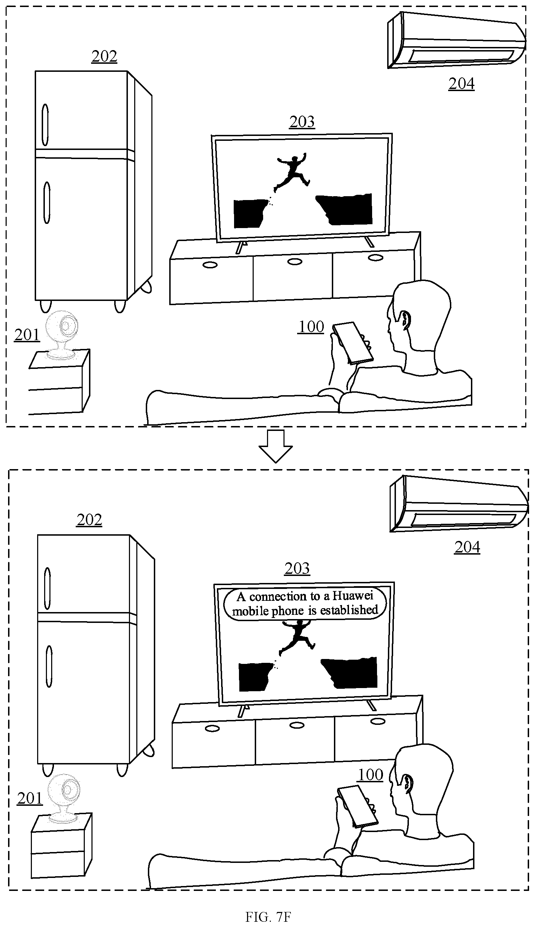

FIG. 7F is a schematic scenario diagram of another pairing and connection scenario according to an embodiment of this application;

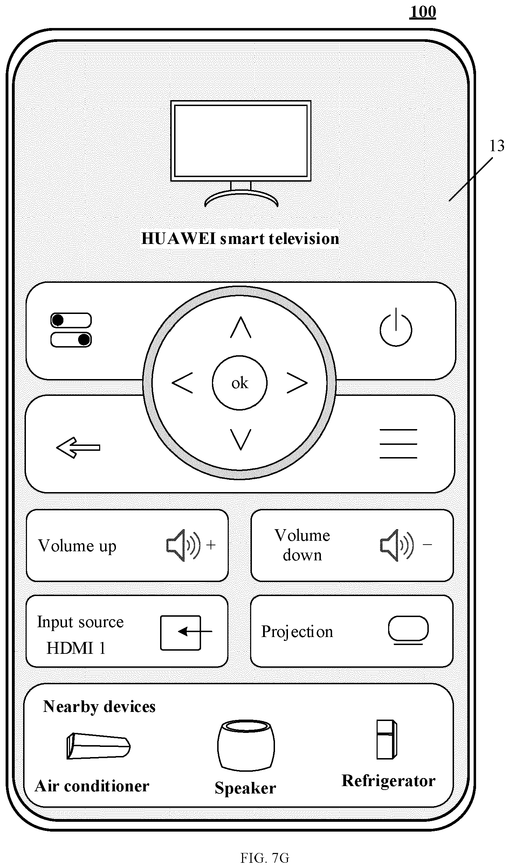

FIG. 7G is a schematic diagram of another pairing and connection interface according to an embodiment of this application;

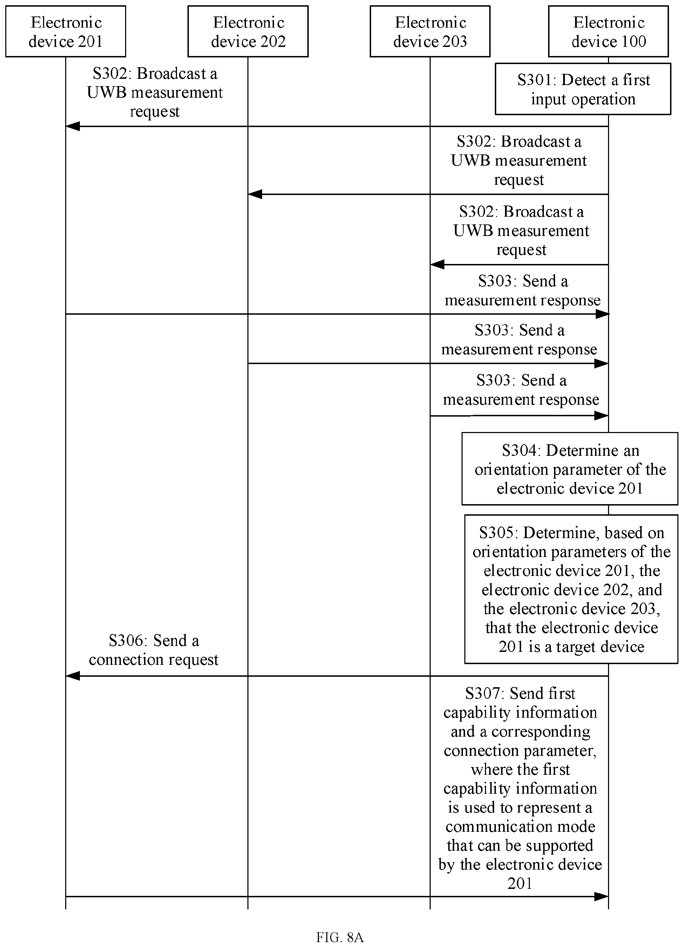

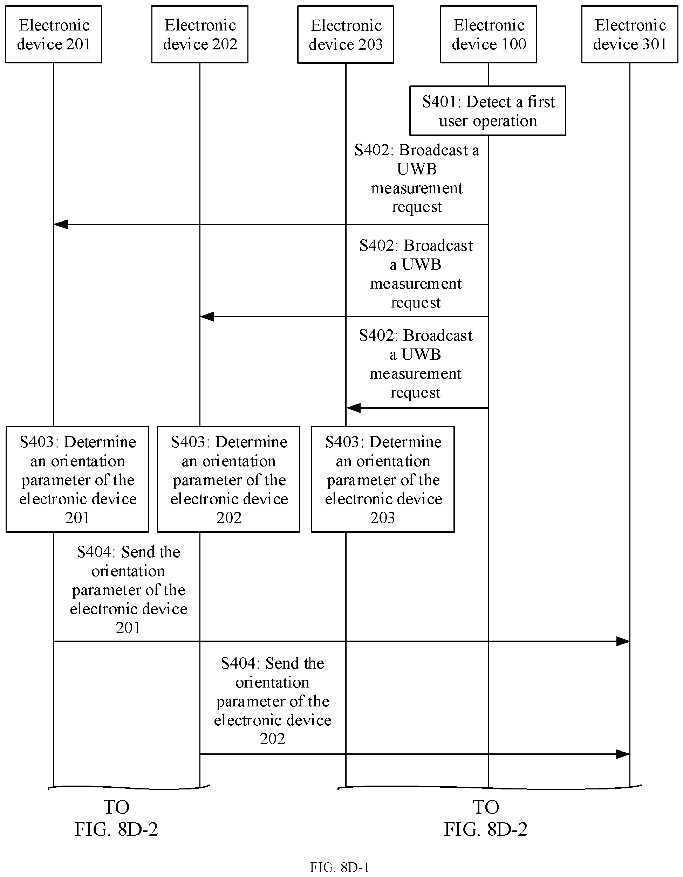

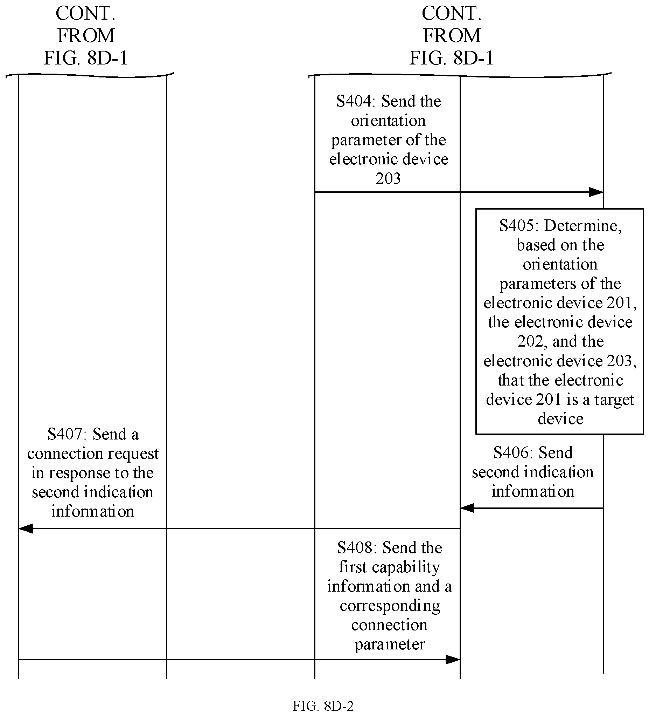

FIG. 8A is a schematic flowchart of another device control method according to an embodiment of this application;

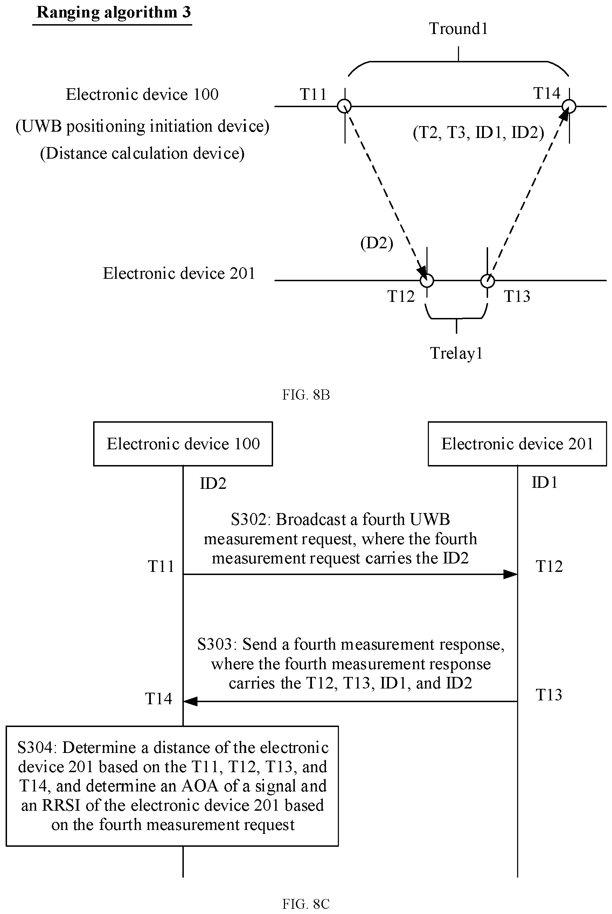

FIG. 8B is a schematic diagram of another ranging algorithm 3 according to an embodiment of this application;

FIG. 8C is a schematic flowchart of another device control method according to an embodiment of this application;

FIG. 8D-1 and FIG. 8D-2 are a schematic flowchart of another device control method according to an embodiment of this application;

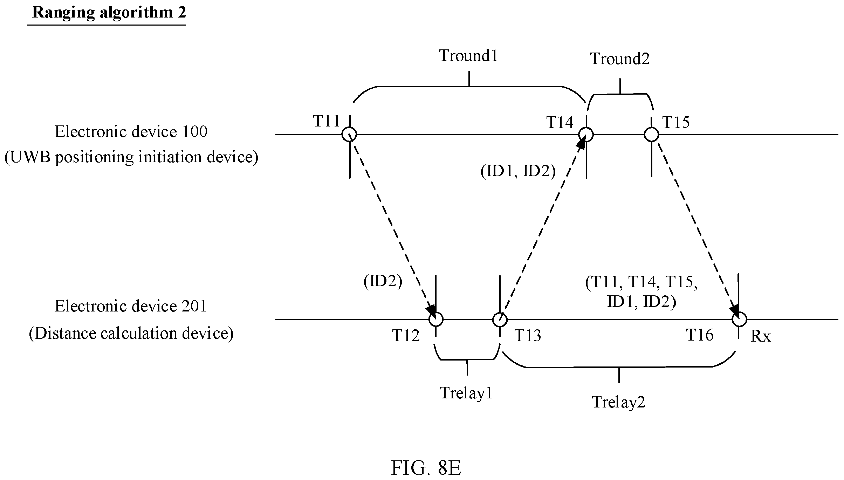

FIG. 8E is a schematic diagram of another ranging algorithm 2 according to an embodiment of this application;

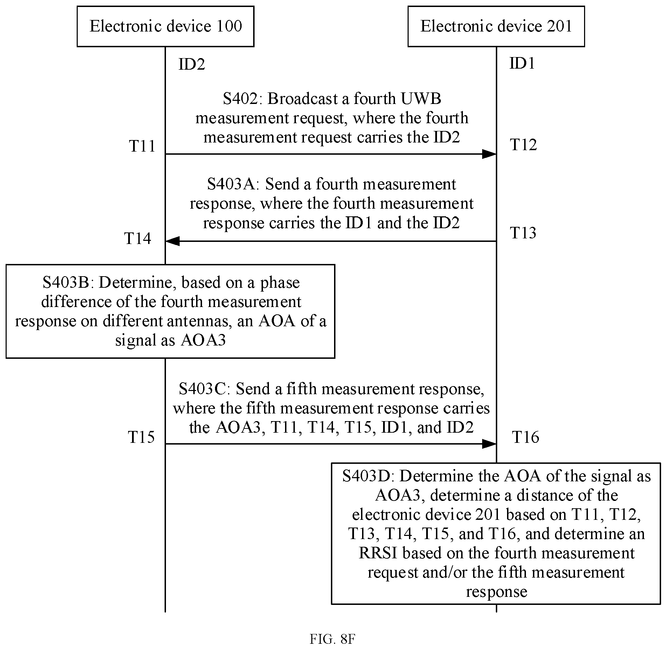

FIG. 8F is a schematic flowchart of another device control method according to an embodiment of this application;

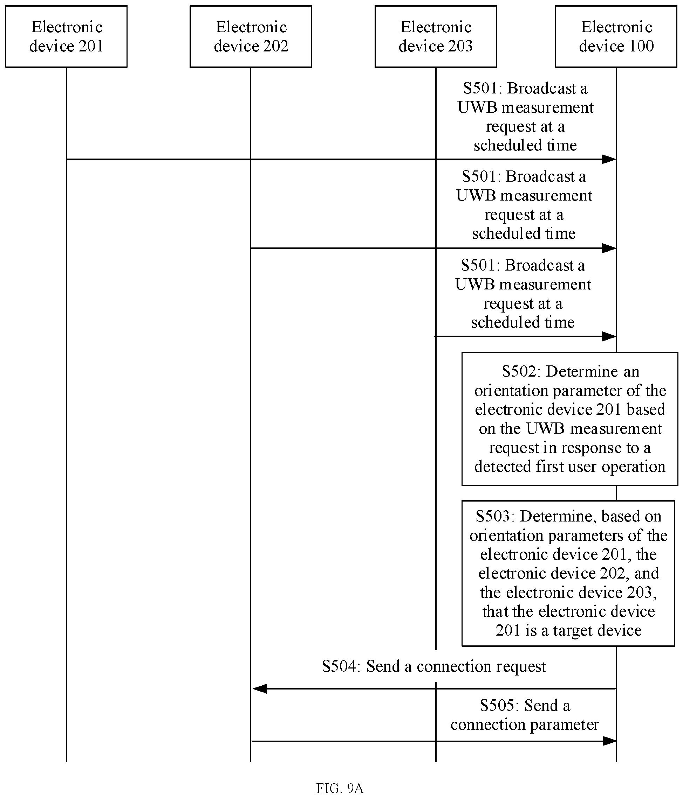

FIG. 9A is a schematic flowchart of another device control method according to an embodiment of this application;

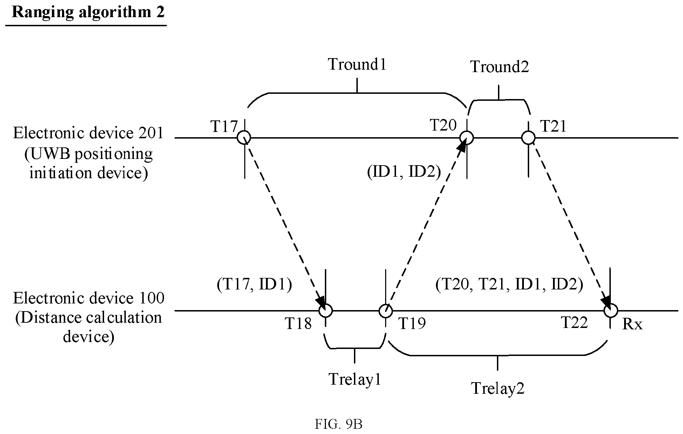

FIG. 9B is a schematic diagram of another ranging algorithm 2 according to an embodiment of this application;

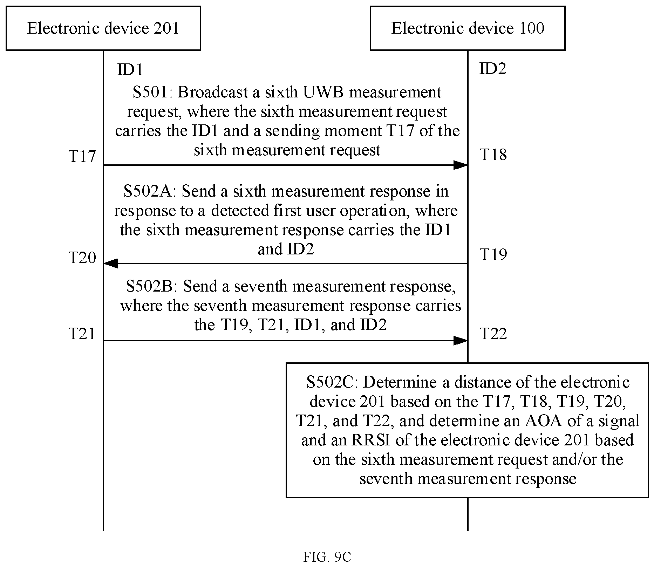

FIG. 9C is a schematic flowchart of another device control method according to an embodiment of this application;

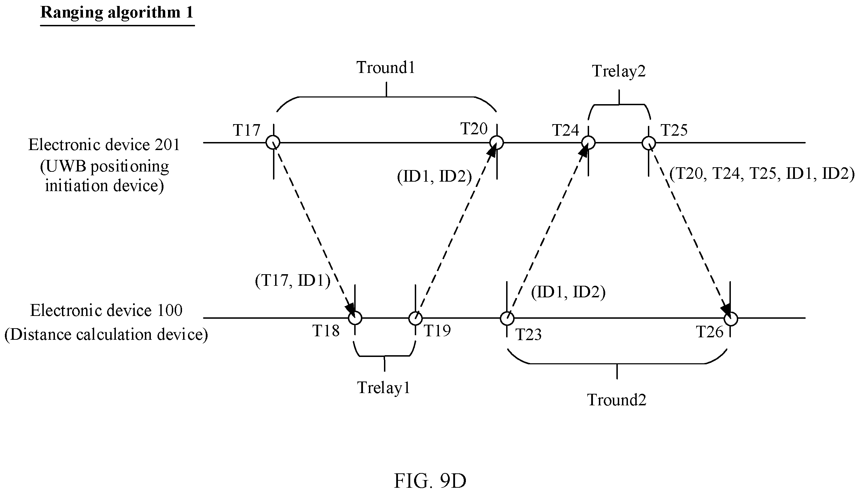

FIG. 9D is a schematic diagram of another ranging algorithm 1 according to an embodiment of this application;

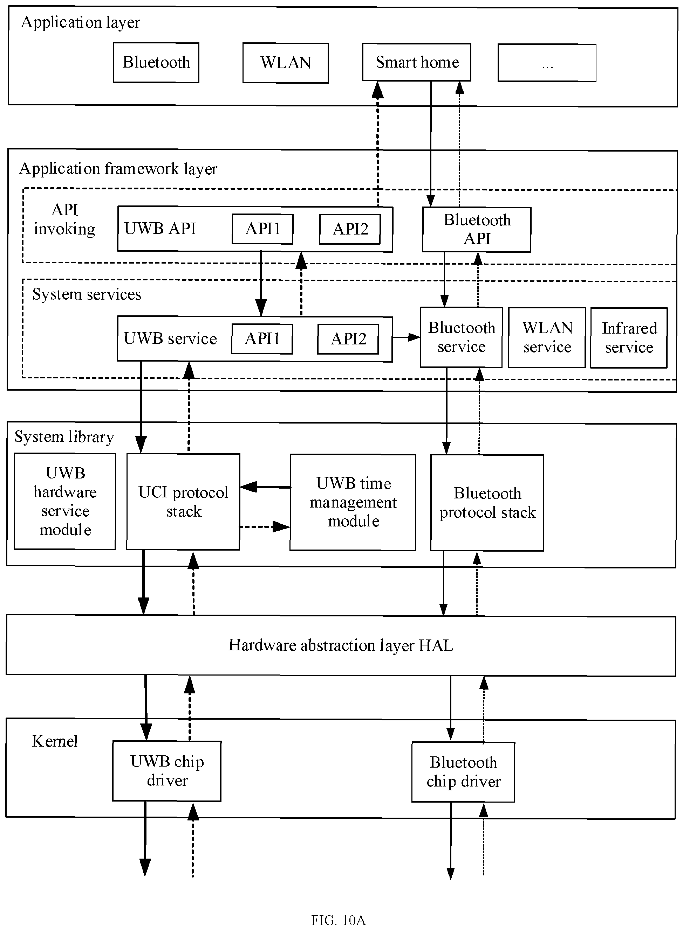

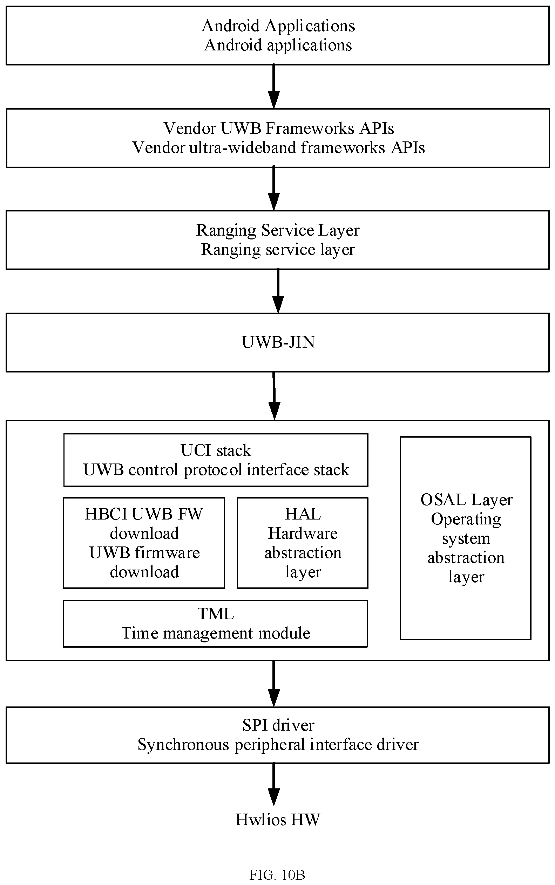

FIG. 10A and FIG. 10B each are a schematic diagram of a software architecture according to an embodiment of this application;

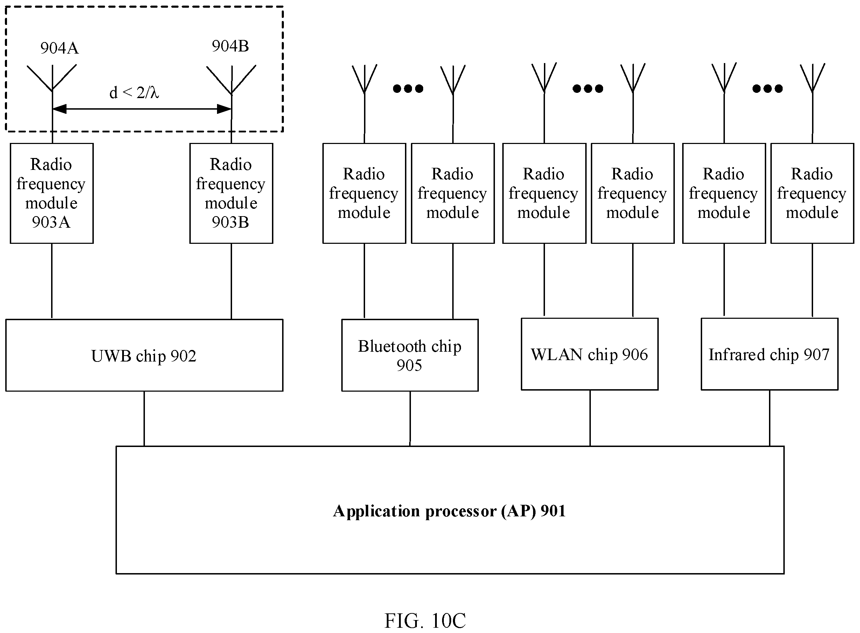

FIG. 10C is a schematic diagram of a structure of a hardware system according to an embodiment of this application; and

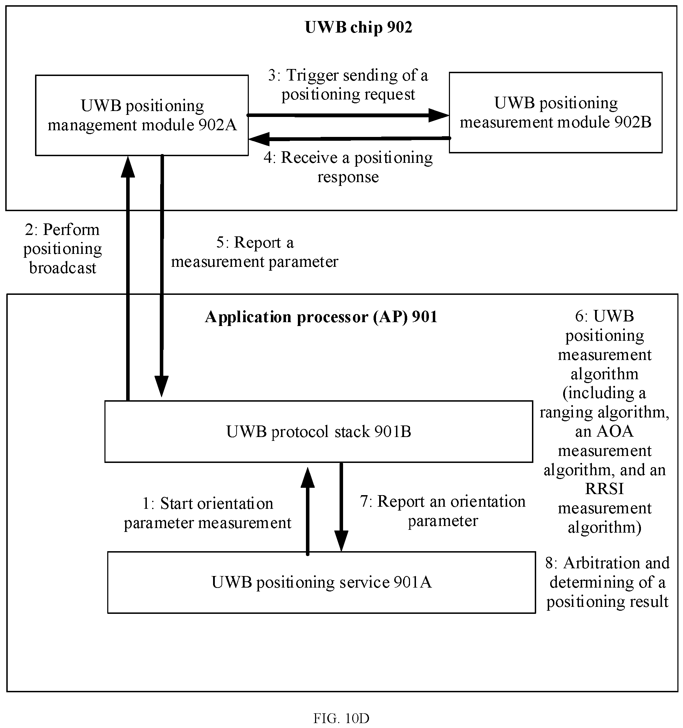

FIG. 10D is a schematic diagram of a structure of a UWB chip system according to an embodiment of this application.

**DESCRIPTION OF EMBODIMENTS**

The following describes technical solutions in embodiments of this application with reference to accompanying drawings. In the descriptions of embodiments of this application, "/" means "or" unless otherwise specified. For example, A/B may represent A or B. "and/or" in the text describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

Currently, smart home devices are increasingly popular, and there may be a plurality of smart home devices in a user's house, for example, a speaker, a television, and an air conditioner

In an implementation, a plurality of smart home devices in a specific area may access a network (for example, a local area network or the Internet), to implement interaction with the cloud or another device. The user may obtain online or local information by using a smart home device. For example, the user may control a home device such as a speaker or a television, to obtain news, weather, and travel, play a song, and shop online. The user may further control another smart home device by specifying a smart home device. For example, the user may control a speaker to turn on or off a light, turn on or off a curtain, or the like.

Currently, a user may interact with a smart home device by using a voice, a gesture, or the like. For example, the user may wake up the smart home device by using the voice, and then control the device by using the voice, the gesture, or the like.

It may be understood that an electronic device that can use voice interaction may generally include a microphone and have a speech recognition capability, to perform speech recognition on collected ambient sound. In some embodiments, an application processor (Application Processor, AP) of the smart home device remains powered on, and the microphone sends collected voice information to the AP. The AP recognizes the voice information, and may perform an operation corresponding to the voice information. For example, when recognizing that the voice information includes a preset wake-up word, the AP generates corresponding response information (for example, voice information "I am here"). In some embodiments, the microphone of the electronic device is connected to a microprocessor, the microprocessor remains powered on, and an AP of the electronic device is not powered on. The microphone sends the collected voice information to the microprocessor, and the microprocessor recognizes the voice information, and determines, based on the voice information, whether to wake up the AP, that is, power on the AP. For example, when recognizing that the voice information includes the preset wake-up word, the microprocessor wakes up the AP. The preset wake-up word may be set by the electronic device by default before delivery, or may be preset by the user in the electronic device according to a requirement of the user. This is not specifically limited herein.

An embodiment of this application provides a device control method. In the proposed method, when saying a voice instruction (for example, a preset wake-up word), a user points an electronic device 100 to a target device in a plurality of nearby smart home devices. The smart home device that receives and recognizes the voice instruction initiates measurement of an orientation parameter. The target device to which the user points may be determined based on orientation parameters of the plurality of smart home devices, and the target device responds to wake-up of the user. The orientation parameters of the smart home device may include a distance between the device and the electronic device 100, an AOA of a signal of the device on the electronic device 100, and a received signal strength indicator (received signal strength indicator, RSSI). The RSSI may be used to determine whether there is an obstacle between the device and the electronic device 100. For a scenario of a plurality of smart home devices, the proposed method can improve a possibility of accurately controlling a home device, thereby improving user experience.

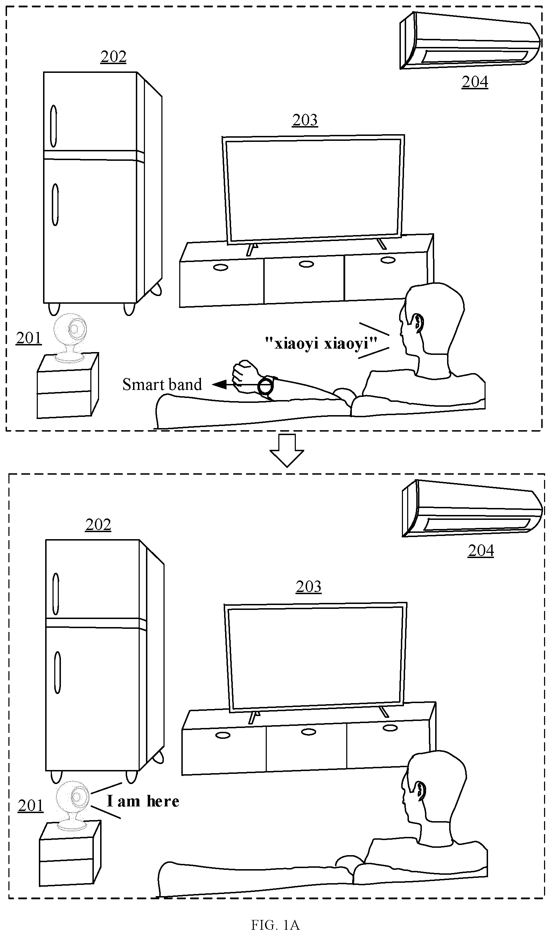

For example, as shown in FIG. 1A, there are a plurality of smart home devices near the user, for example, a speaker 201, a refrigerator 202, a television 203, and an air conditioner 204. Wake-up words for at least two of the plurality of smart home devices are the same. For example, wake-up words for the speaker 201, the refrigerator 202, the television 203, and the air conditioner 204 are the same (for example, "xiaoyi, xiaoyi"). When the user intends to wake up the speaker 201 in the plurality of smart home devices, the user points the electronic device 100 (for example, a smart band) to the speaker 201, and says a wake-up word "xiaoyi, xiaoyi" for the speaker 201. Devices that receive and detect the wake-up word in the plurality of smart home devices initiate measurement of an orientation parameter (that is, the orientation parameter relative to the smart band) respectively. After determining, based on the orientation parameters of the plurality of smart home devices, that the target device to which the user points is the speaker 201, the electronic device 100 sends indication information to the speaker 201, to indicate the speaker 201 to respond to the wake-up word of the user. As shown in FIG. 1A, after receiving the indication information, the speaker 201 sends voice information "I am here".

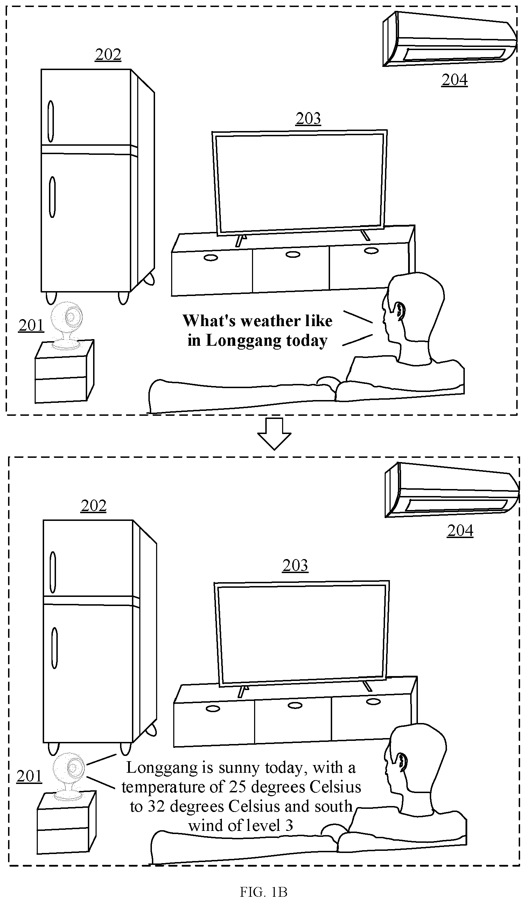

In some embodiments, after the speaker 201 responds to wake-up of the user, the speaker responds to an instruction (for example, a voice instruction or a gesture instruction) of the user, and interacts with the user until the user wakes up another smart home device. For example, as shown in FIG. 1B, after hearing a response of the speaker, the user says "What's weather like in Longgang today?". A plurality of smart home devices can all receive and detect voice information "What's weather like in Longgang today?". Only the speaker 201 that is woken up queries, based on the voice information "What's weather like in Longgang today?", the weather of Longgang today by using a network, and sends voice information "Longgang is sunny today, with a temperature of 25 degrees Celsius to 32 degrees Celsius and south wind of level 3" based on a query result.

It should be noted that the scenarios shown in FIG. 1A and FIG. 1B are merely used as examples to describe a multi-device scenario, and are not intended to limit this application. In various implementation scenarios, different from those shown in the figure, another quantity and/or another different type of devices may be provided. For example, more or fewer devices may be provided, or another device different from the devices shown in FIG. 1A and FIG. 1B is provided.

The following describes a communication system (for example, a smart home system) provided in an embodiment of this application. The smart home system can connect various devices (such as audio and video devices, air conditioner control, lighting system, curtain control, and digital cinema system) at home by using the Internet of Things technology, and provide a plurality of functions and means such as home appliance control, lighting control, indoor and outdoor remote control, environment monitoring, and scheduled control. Alternatively, the user may control various devices at home by using a smart home app installed on the electronic device 100 (for example, a mobile phone or a smart band).

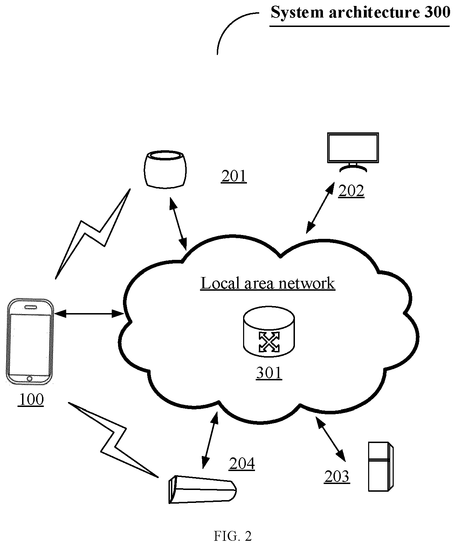

FIG. 2 is an example of a schematic diagram of a communication system 300 according to an embodiment of this application. As shown in FIG. 2, the communication system 300 includes the electronic device 100, an electronic device 201, an electronic device 202, an electronic device 203, an electronic device 204, and the like. The electronic device 100 may assist a user in selecting and controlling various smart home devices (such as a speaker, a television, a refrigerator, and an air conditioner) at home.

The electronic device (for example, the electronic device 100, the electronic device 201, the electronic device 202, the electronic device 203, or the electronic device 204) has an ultra wide band (ultra wide band, UWB) communication module, and may further have one or more of a Bluetooth communication module, a WLAN communication module, and an infrared communication module. The electronic device 100 is used as an example. The electronic device 100 may detect and scan an electronic device (for example, the electronic device 201, the electronic device 202, the electronic device 203, or the electronic device 204) near the electronic device 100 by transmitting a signal through one or more of the UWB communication module, the Bluetooth communication module, the WLAN communication module, and the infrared communication module, so that the electronic device 100 can discover the nearby electronic device by using one or more near field communication protocols of UWB, Bluetooth, WLAN, and infrared ray, establish a wireless communication connection to the nearby electronic device, and may transmit data to the nearby electronic device.

A type of an electronic device (for example, the electronic device 100, the electronic device 201, the electronic device 202, the electronic device 203, or the electronic device 204) is not specifically limited in this application. In some embodiments, the electronic device in embodiments of this application may be a portable device such as a mobile phone, a wearable device (for example, a smart band), a tablet computer, a laptop (laptop), a handheld computer, a notebook computer, an ultra-mobile personal computer (ultra-mobile personal computer, UMPC), a cellular phone, a personal digital assistant (personal digital assistant, PDA), or an augmented reality (Augmented reality, AR) \ virtual reality (virtual reality, VR) device. It may alternatively be a device such as a speaker, a television, a refrigerator, an air conditioner, a vehicle-mounted device, a printer, or a projector. An example embodiment of the electronic device includes but is not limited to an electronic device using iOS®, Android®, Microsoft®, or another operating system.

In a possible implementation, the electronic device 100, the electronic device 201, the electronic device 202, the electronic device 203, and the electronic device 204 may directly communicate with each other. In a possible implementation, the electronic device 100, the electronic device 201, the electronic device 202, the electronic device 203, and the electronic device 204 may be connected to a local area network (local area network, LAN) in a wired or wireless fidelity (wireless fidelity, Wi-Fi) connection manner. For example, the electronic device 100, the electronic device 201, the electronic device 202, the electronic device 203, and the electronic device 204 are all connected to a same electronic device 301, and the electronic device 100, the electronic device 201, the electronic device 202, the electronic device 203, and the electronic device 204 may indirectly communicate with each other by using the electronic device 301. The electronic device 301 may be one of the electronic device 100, the electronic device 201, the electronic device 202, the electronic device 203, and the electronic device 204, or may be an additional third-party device, for example, a router, a cloud server, a gateway, or an intelligent device controller. The cloud server may be a hardware server, or may be implanted in a virtualized environment. For example, the cloud server may be a virtual machine executed on a hardware server that may include one or more other virtual machines. The electronic device 301 may send data to the electronic device 100, the electronic device 201, the electronic device 202, the electronic device 203, and the electronic device 204 by using a network, or may receive data sent by the electronic device 100, the electronic device 201, the electronic device 202, the electronic device 203, and the electronic device 204.

The electronic device 301 may include a memory, a processor, and a transceiver. The memory may be configured to store a voice wake-up word and a program related to UWB positioning. The memory may be further configured to store an orientation parameter that is of an electronic device (for example, the electronic device 201) and that is obtained by using a UWB positioning technology. The memory may be further configured to store a message exchanged by using the electronic device 301, and data and/or a configuration related to the electronic device 100 and a nearby device. The processor may be configured to: when obtaining the orientation parameters of the plurality of nearby devices in the local area network, determine a target device that responds based on the orientation parameters of the plurality of nearby devices. The transceiver may be configured to communicate with an electronic device connected to the local area network. It should be noted that, in this embodiment of this application, a plurality of vicinities may be connected to a same local area network, or may not be connected to a same local area network. This is not specifically limited herein.

It may be understood that the structure shown in this embodiment does not constitute a specific limitation on the communication system 300. In some other embodiments of this application, the communication system 300 may include more or fewer devices than those shown in the figure.

The following describes the electronic device 100 in embodiments of this application.

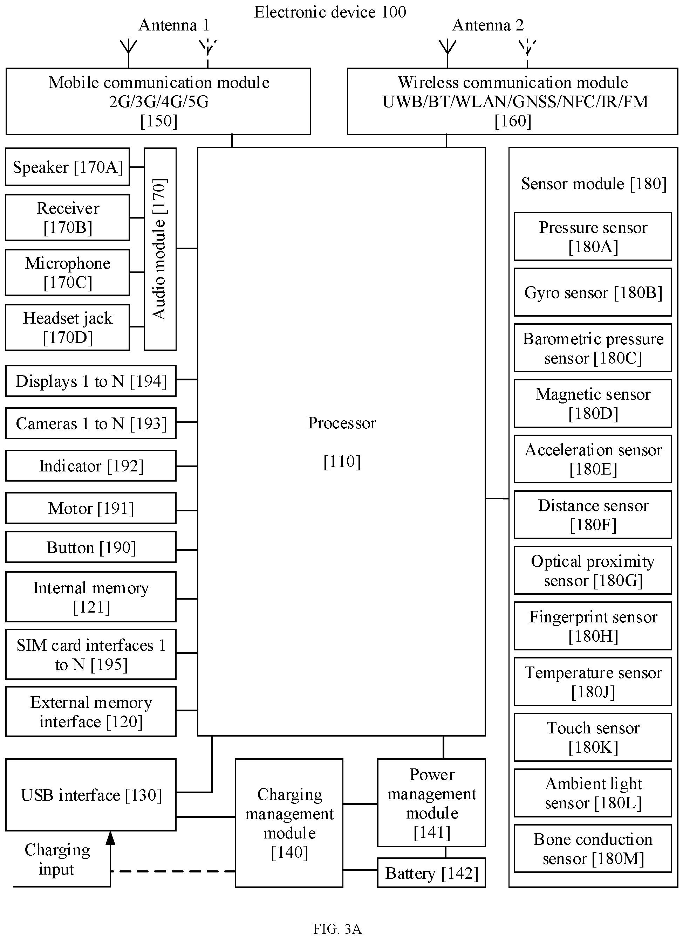

FIG. 3A is a schematic diagram of a structure of an example of an electronic device 100 according to an embodiment of this application.

The electronic device 100 includes a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

The NPU may perform an artificial intelligence operation by performing convolutional neural network (Convolutional Neural Network, CNN) processing. For example, a CNN model is used to perform a large amount of information identification and information filtering, to implement training and identification for smart scenes.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be coupled to the touch sensor 180K, a charger, a flash, the camera 193, and the like through different I2C bus interfaces respectively. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through an I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to peripheral components such as the display 194 and the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, and the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type C interface, or the like. The USB interface 130 may be configured to connect to the charger to charge the electronic device 100, may be configured to transmit data between the electronic device 100 and a peripheral device, or may be configured to connect to a headset to play audio by the headset. The interface may be further configured to connect to another electronic device such as an AR device.

It may be understood that an interface connection relationship between the modules illustrated in this embodiment of this application is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments in which wired charging is used, the charging management module 140 may receive a charging input from the wired charger through the USB interface 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, the antenna may be used in combination with a tuning switch.

The mobile communication module 150 may provide a solution applied to the electronic device 100 for wireless communication such as 2G/3 G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution applied to the electronic device 100, to wireless communication including a UWB, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processing module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communication (global system for mobile communication, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

UWB wireless communication is a wireless personal area network communication technology with low power consumption and high-speed transmission. Different from a continuous carrier mode used by a common communication technology, the UWB uses a pulse signal to transmit data. UWB uses non-sine wave narrow pulse signals of nanosecond (ns) to picosecond (ps) levels to transmit data, and a time modulation technology can greatly increase a transmission rate. Because very short pulses are used, transmit power of a UWB device is only a few percent of that of a current continuous carrier system during high-speed communication. Therefore, the power consumption is low.

Compared with the conventional narrowband system, a UWB system has the advantages of strong penetration, low power consumption, good anti-multipath effect, high security, low system complexity, and high positioning accuracy. UWB can be used in wireless communication applications that require high-quality services, such as wireless personal area networks (WPAN), home network connections, and short-distance radars. UWB will become a technical means to solve a contradiction between a demand for high-speed Internet access in enterprises, homes, and public places and an increasingly crowded allocation of a frequency resource.

In this embodiment of this application, the electronic device 100 may measure a distance and an RRSI by using one UWB antenna. The electronic device 100 may implement AOA measurement by using at least two UWB antennas. The following describes arrangement and distribution of UWB antennas provided as an example in embodiments of this application.

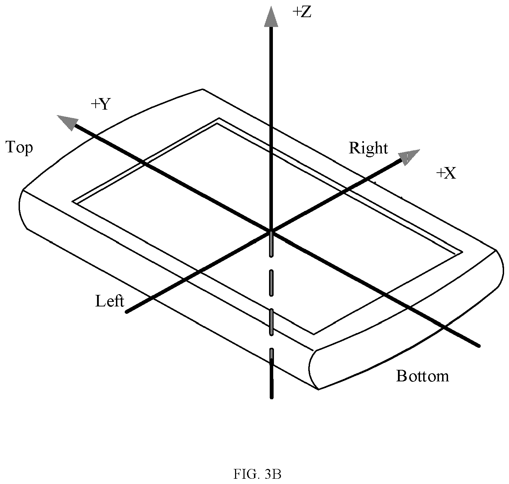

A reference coordinate system of the electronic device is first defined. For example, as shown in FIG. 3B, the coordinate system of the electronic device may be defined in the following manner: An X axis is parallel to a direction of a short side of a display of the electronic device, and points from a left side of the display to a right side of the display; a Y axis is parallel to a direction of a long side of the display, and points from a bottom of the display to a top of the display; and a Z axis is perpendicular to a plane formed by the X axis and the Y axis, that is, the Z axis is perpendicular to a plane on which the display is located. When the electronic device is horizontally placed and the display faces upwards, the Z axis is opposite to the gravity direction.

It should be noted that the top, the bottom, the left, and the right mentioned in embodiments of this application are relative, are described as examples in specific implementations, and should not be construed as a limitation on embodiments of this application. It may be understood that when a posture of the electronic device changes, the top, the bottom, the left, and the right of the electronic device mentioned in this embodiment of this application do not change.

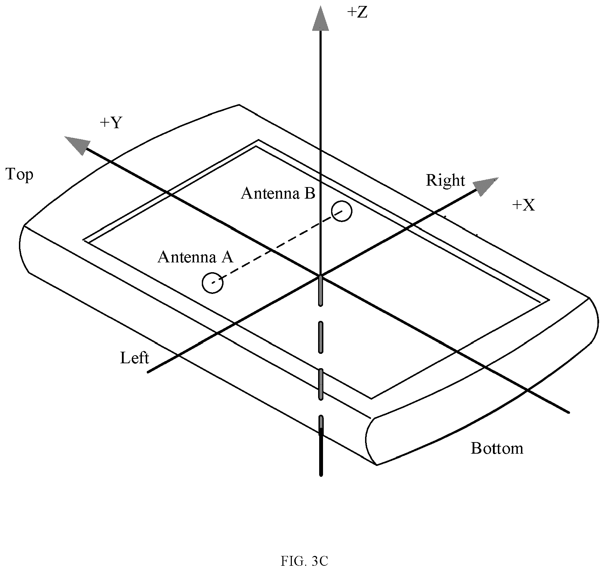

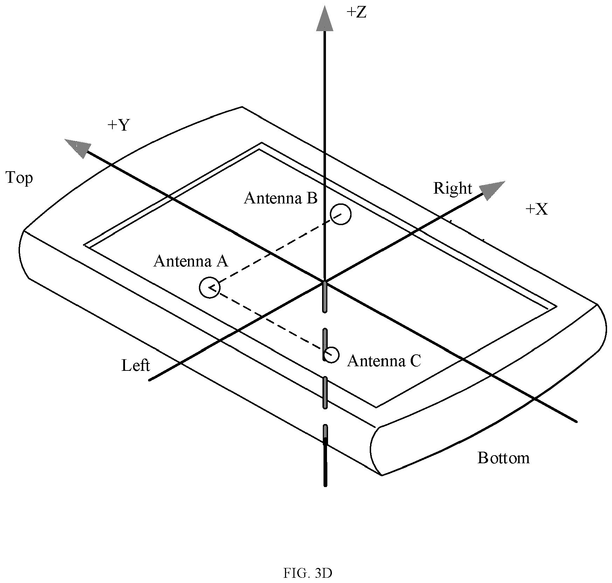

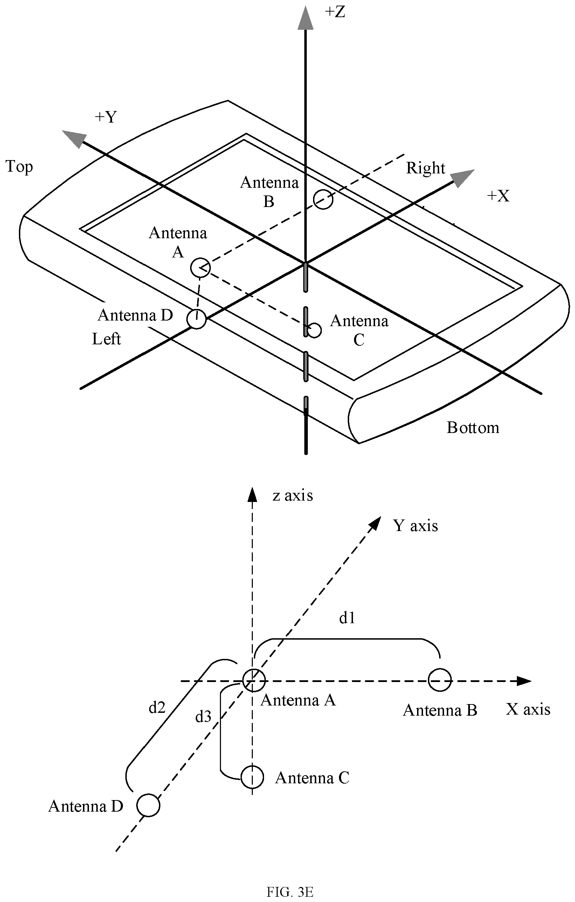

FIG. 3C to FIG. 3E show an example of the electronic device 100 with a UWB antenna. In FIG. 3C, the electronic terminal 100 has two UWB antennas, that is, an antenna A and an antenna B. A connection line between the antenna A and the antenna B is parallel to an X axis of the electronic device, and the two UWB antennas are arranged in a one-dimensional manner. In FIG. 3D, the electronic terminal 100 has three antennas, that is, an antenna A, an antenna B, and an antenna C. A connection line between the antenna B and the antenna C is parallel to a Y axis of the electronic device, and the three UWB antennas are arranged in a two-dimensional manner. In FIG. 3E, the electronic device has four UWB antennas, that is, an antenna A, an antenna B, an antenna C, and an antenna d. In some embodiments, a connection line between the antenna C and the antenna B is parallel to a Z axis of the electronic device, and the four UWB antennas are arranged in a three-dimensional manner. In FIG. 3C to FIG. 3E, a distance between the antenna A and the antenna V is d1, a distance between the antenna A and the antenna C is d2, and a distance between the antenna A and the antenna B is d3. d1, d2, and d3 are all less than $\lambda/2$, and $\lambda$ is a wavelength of an electromagnetic wave.

It should be noted that an arrangement manner of the UWB antenna and a distribution location of the UWB antenna on the electronic device shown in FIG. 3C to FIG. 3E are merely examples for description, and are not intended to limit this application. For example, in a same arrangement manner, in addition to a quantity of UWB antennas shown in FIG. 3C to FIG. 3E, the electronic device 100 may further have more UWB antennas. In a same arrangement manner, in addition to distribution locations of the UWB antennas shown in FIG. 3C to FIG. 3E, there may be other distribution locations.

In this embodiment of this application, the UWB antenna, the antenna 1 and the antenna 2 may be reused, or may be independent of each other. This is not specifically limited herein.

In some embodiments, when the electronic device is in a standby state, a UWB communication module of the electronic device 100 may be in a power-on state.

The electronic device 100 implements a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini LED, a micro LED, a micro OLED, a quantum dot light emitting diode (quantum dot light emitting diode, QLED), or the like. In some embodiments, the electronic device 100 may include one or N displays 194, where N is a positive integer greater than 1.

In some embodiments of this application, the display 194 displays interface content currently output by a system. For example, the interface content is an interface provided by an instant messaging application.

The electronic device 100 can implement a photographing function through the ISP, the camera 193, the video codec, the GPU, the display 194, the application processor, and the like.

The ISP is configured to process data fed back by the camera 193. For example, during photographing, a shutter is pressed, and a ray of light is transmitted to a photosensitive element of the camera through a lens. An optical signal is converted into an electrical signal. The photosensitive element of the camera transmits the electrical signal to the ISP for processing, and converts the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and the image is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)1, MPEG2, MPEG3, and MPEG4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external storage card such as a micro SD card, to extend a storage capability of the electronic device 100. The external memory card communicates with the processor 110 through the external memory interface 120, to implement a data storage function. For example, a file such as music or a video is stored in the external storage card.

The internal memory 121 may be configured to store computer-executable program code, and the executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a non-volatile memory, for example, at least one magnetic disk storage device, a flash memory, or a universal flash storage (universal flash storage, UFS).

The electronic device 100 may implement an audio function through the audio module 170, the speaker 170A, the receiver 170B, the microphone 170C, the headset jack 170D, the application processor, and the like. For example, the audio function may be music playing, recording, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike", or a "mic", is configured to collect a sound (for example, a sound of an ambient environment, including a sound made by a person or a sound made by a device), and convert a sound signal into an electrical signal. When making a call or sending voice information, a user may make a sound near the microphone 170C through the mouth of the user, to input a sound signal to the microphone 170C. The electronic device 100 may be provided with at least one microphone 170C. When a voice wakeup function of the electronic device is enabled, the microphone 163 may collect ambient sound in real time, to obtain audio data. A situation in which the microphone 163 collects a sound is related to an environment in which the microphone is located. For example, when an ambient environment is noisy, and the user says a wake-up word, a sound collected by the microphone 163 includes ambient noise and a sound of saying the wake-up word by the user. For another example, when the ambient environment is quiet, and the user says the wake-up word, a sound collected by the microphone 163 is a sound of saying the wake-up word by the user. For another example, when the ambient environment is noisy, the voice wakeup function of the electronic device is enabled, but the user does not say the wake-up word to wake up the electronic device, a sound collected by the microphone 163 is only ambient noise. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunication industry association of the USA (cellular telecommunication industry association of the USA, CTIA) standard interface.

The pressure sensor 180A is configured to sense a pressure signal, and can convert the pressure signal into an electrical signal. In some embodiments, the pressure sensor 180A may be disposed on the display 194. In some optional embodiments of this application, the pressure sensor 180A may be configured to: capture a pressure value generated when a finger part of the user touches the display, and transmit the pressure value to the processor, so that the processor identifies a finger part through which the user enters the user operation.

There are a plurality of types of pressure sensors 180A, such as a resistive pressure sensor, an inductive pressure sensor, and a capacitive pressure sensor. The capacitive pressure sensor may include at least two parallel plates made of a conductive material. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch position but have different touch operation intensity may correspond to different operation instructions. For example, when a touch operation with touch operation intensity less than a first pressure threshold is performed on a short message service message application icon, an instruction for viewing a short message service message is performed. When a touch operation with touch operation intensity greater than or equal to the first pressure threshold is performed on the short message service message application icon, an instruction for creating a new short message service message is performed. In some optional embodiments of this application, the pressure sensor 180A may transmit a detected capacitance value to the processor, so that the processor identifies a finger part (a knuckle, a finger pad, or the like) through which the user enters a user operation. In some optional embodiments of this application, the pressure sensor 180A may further calculate a quantity of touch points based on a detected signal, and transmit a calculated value to the processor, so that the processor identifies that the user enters a user operation through a single finger or a plurality of fingers.

The gyro sensor 180B may be configured to determine a moving posture of the electronic device 100. In some embodiments, an angular velocity of the electronic device 100 around three axes (namely, axes X, Y, and Z of the electronic device) may be determined through the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer. In some optional embodiments of this application, the acceleration sensor 180E may be configured to capture an acceleration value generated when a finger part of the user touches the display (or a finger of the user taps a rear side bezel of a side bezel of the electronic device 100), and transmit the acceleration value to the processor, so that the processor identifies a finger part through which the user enters a user operation.

In this embodiment of this application, the electronic device 100 may determine a posture change of the electronic device 100 by using a gyro sensor and/or an acceleration sensor, to further identify a user operation. For example, the current user operation is identified as a pointing operation based on the posture change of the electronic device 100. The pointing operation may be that the user points the electronic device 100 to a specific direction and keeps pointing to the specific direction within a preset time.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light emitting diode. The electronic device 100 detects infrared reflected light from a nearby object through the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a display for power saving. The optical proximity sensor 180G may also be used in a smart cover mode or a pocket mode to automatically perform display unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor 180K. The touch operation is an operation that the user touches the display 194 by using a hand, an elbow, a stylus, or the like. The touch sensor may transfer the detected touch operation to the application processor to determine a type of the touch event. The display 194 may provide a visual output related to the touch operation. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may alternatively be in contact with a body pulse to receive a blood pressure beating signal. In some embodiments, the bone conduction sensor 180M may alternatively be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to user settings and function control of the electronic device 100.

The motor 191 may generate a vibration prompt. The motor 191 may be used for an incoming call vibration prompt, or may be used for a touch vibration feedback. For example, touch operations performed on different applications (for example, a photographing application and an audio playing application) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light that may be configured to indicate a charging state and a battery power change, and may further be configured to indicate a message, a missed call, a notification, and the like.

The SIM card interface 195 is configured to connect to a SIM card. The SIM card may be inserted into the SIM card interface 195 or removed from the SIM card interface 195, to implement contact with or be separated from the electronic device 100.

The following uses the electronic device 201 as an example to describe a structure of a smart home device provided in an embodiment of this application.

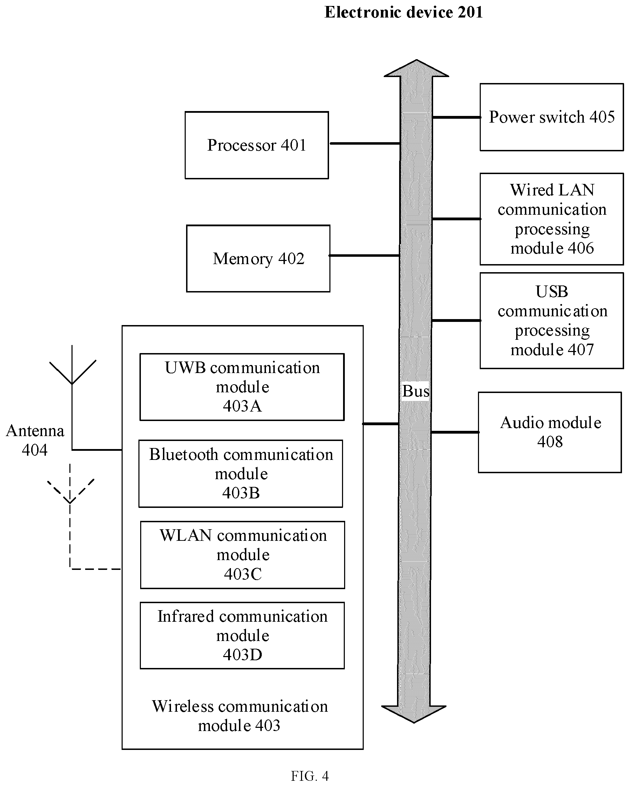

For example, FIG. 4 shows a schematic diagram of a structure of the electronic device 201 according to an embodiment of this application.

As shown in FIG. 4, the electronic device 201 may include: a processor 401, a memory 402, a wireless communication processing module 403, an antenna 404, a power switch 405, a wired LAN communication processing module 406, a USB communication processing module 407, and an audio module 408. Specifically:

The processor 401 may be configured to read and execute a computer readable instruction. During specific implementation, the processor 401 may mainly include a controller, an arithmetic unit, and a register. The controller is mainly responsible for decoding instructions and sending a control signal for an operation corresponding to the instructions. The arithmetic unit is mainly responsible for storing a register operand, an intermediate operation result, and the like that are temporarily stored during instruction execution. In specific implementation, a hardware architecture of the processor 401 may be an application-specific integrated circuit (ASIC) architecture, an MIPS architecture, an ARM architecture, an NP architecture, or the like.

In some embodiments, the processor 401 may be configured to parse a signal received by the wireless communication module 403 and/or the wired LAN communication processing module 406, for example, a probe request broadcast by the terminal 100. The processor 401 may be configured to perform a corresponding processing operation based on a parsing result, for example, generate a probe response.

In some embodiments, the processor 401 may be further configured to generate a signal sent by the wireless communication module 403 and/or the wired LAN communication processing module 406, for example, a Bluetooth broadcast signal or a beacon signal.

The memory 402 is coupled to the processor 401, and is configured to store various software programs and/or a plurality of groups of instructions. In a specific implementation, the memory 402 may include a high-speed random access memory, and may further include a non-volatile memory, for example, one or more magnetic disk storage devices, a flash device, or another non-volatile solid-state storage device. The memory 402 may store an operating system, for example, an embedded operating system such as uCOS, VxWorks, or RTLinux. The memory 402 may further store a communication program. The communication program may be used to communicate with the terminal 100, one or more servers, or an accessory device.

The wireless communication module 403 may include one or more of a UWB communication module 403A, a Bluetooth communication module 403B, a WLAN communication module 403C, and an infrared communication module 403D. The UWB communication module 403A may be integrated into a chip (System on Chip, SOC), and the UWB communication module 403A may alternatively be integrated with another communication module (for example, the Bluetooth communication module 403B) in hardware (or software).

In some embodiments, one or more of the UWB communication module 403A, the Bluetooth communication module 403B, the WLAN communication module 403C, and the infrared communication module 403D may listen to a signal transmitted by another device (for example, the electronic device 100), for example, a measurement signal or a scanning signal, and may send a response signal, for example, a measurement response or a scanning response, so that the another device (for example, the electronic device 100) can discover the electronic device 201, and establishes a wireless communication connection to the another device (for example, the electronic device 100) by using one or more near field communication technologies of UWB, Bluetooth, WLAN, or infrared, to transmit data.

In some other embodiments, one or more of the UWB communication module 403A, the Bluetooth communication module 403B, the WLAN communication module 403C, and the infrared communication module 403D may also transmit a signal, for example, broadcast a UWB measurement signal or a beacon signal, so that another device (for example, the electronic device 100) can discover the electronic device 201, and establish a wireless communication connection to the another device (for example, the electronic device 100) by using one or more wireless communication technologies of UWB, Bluetooth, WLAN, or infrared, to transmit data.

The wireless communication module 403 may further include a cellular mobile communication module (not shown). The cellular mobile communication processor module may communicate with another device (for example, a server) by using a cellular mobile communication technology.

The antenna 404 may be configured to transmit and receive an electromagnetic wave signal. Antennas of different communication modules may be multiplexed, or may be independent of each other, to improve antenna utilization. For example, an antenna of the Bluetooth communication module 403A may be multiplexed as an antenna of the WLAN communication module 403B. For example, the UWB communication module 403A needs to use an independent UWB antenna.

In this embodiment of this application, to implement UWB communication, the electronic device 201 has at least one UWB antenna.

The power switch 405 may be configured to control a power supply to supply power to the electronic device 201.

The wired LAN communication processing module 406 may be configured to communicate with another device in a same LAN by using a wired LAN, and may be further configured to connect to a WAN by using the wired LAN, and may communicate with a device in the WAN.

The USB communication processing module 407 may be configured to communicate with another device through a USB interface (not shown).

The audio module 408 may be configured to output an audio signal through an audio output interface, so that the electronic device 201 can support audio playback. The audio module may be configured to receive audio data through an audio input interface. The electronic device 201 may be a media playback device such as a television or a speaker, or may be a non-media playback device such as an air conditioner or a refrigerator. When a voice wake-up function of the electronic device 201 is enabled, the audio module 408 may collect ambient sound in real time, to obtain audio data. The audio module may further perform speech recognition on the audio data received by the audio module.

It should be understood that the electronic device 201 shown in FIG. 4 is merely an example, and the electronic device 201 may include more or fewer components than those shown in FIG. 4, may combine two or more components, or may have different component configurations. Components shown in the figure may be implemented by hardware including one or more signal processing and/or application-specific integrated circuits, software, or a combination of hardware and software.

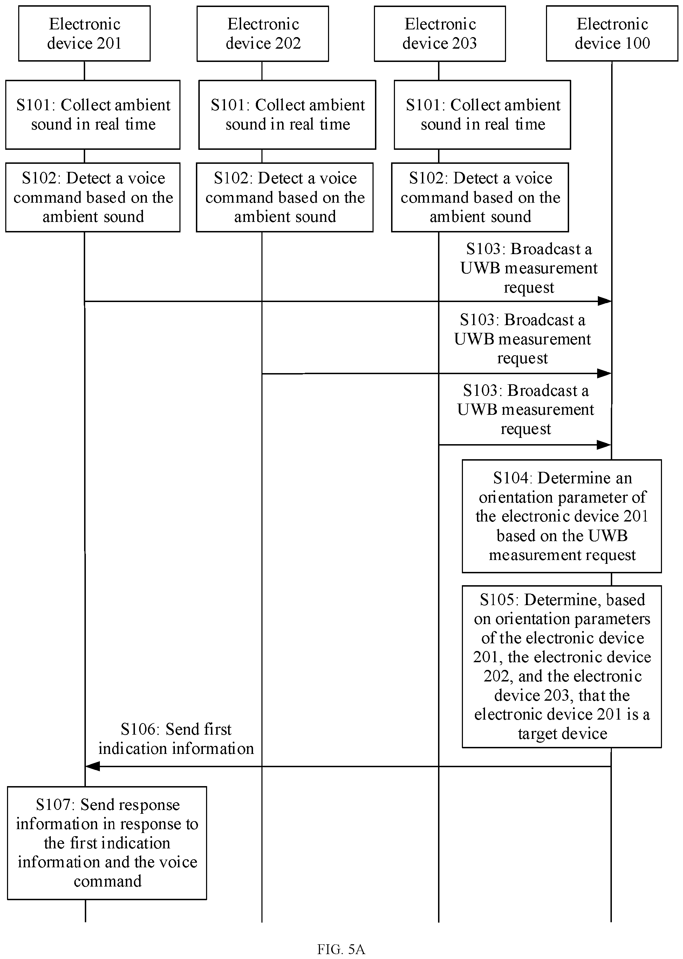

The following specifically describes a device control method provided in an embodiment of this application with reference to a voice interaction scenario. Devices in the method flowchart include the electronic device 100, the electronic device 201, the electronic device 202, and the electronic device 203. This embodiment of this application is not limited to the electronic device 100, the electronic device 201, the electronic device 202, and the electronic device 203. Devices involved in the method flowchart may include more or fewer devices. FIG. 5A is merely an example for explaining this application, and should not be construed as a limitation.

FIG. 5A shows a device control method according to an embodiment of this application. In the method, when detecting a voice command (for example, a preset wake-up word) of a user, the electronic device 201 initiates a UWB measurement request; and the electronic device 100 determines a distance between the electronic device 100 and the electronic device 201 based on the UWB measurement request. Specifically, the foregoing device control method includes but is not limited to steps S101 to S107.

S101: The electronic device 201 collects ambient sound in real time.

When the user intends to control the electronic device 201 by using a voice, the user points the electronic device 100 to the electronic device 201, and says a voice command. For example, when the user wants to wake up the electronic device 201, the user points the electronic device 100 to the electronic device 201 and says "xiaoyi, xiaoyi", in other words, the voice command includes the preset wake-up word "xiaoyi, xiaoyi". For example, when the user wants to control the electronic device 201 to play music, the user points the electronic device 100 to the electronic device 201 and says "play music".

For example, a three-dimensional coordinate system of the electronic device 100 is shown in FIG. 3B. In some embodiments, that the user points the electronic device 100 to the electronic device 201 means that a Y axis of the electronic device 100 points to the electronic device 201.

In some embodiments, the electronic device 201 may collect voice information in real time or when a voice wake-up function is enabled at a scheduled time.

S102: The electronic device 201 detects the voice command based on the ambient sound.

For example, the electronic device 201 collects, by using an audio module, a voice sent by the user. For example, specific content of the voice is "xiaoyi, xiaoyi". The electronic device 201 compares the specific content "xiaoyi, xiaoyi" of the collected voice with a voice keyword "xiaoyi, xiaoyi" of a pre-stored wake-up word, and if the specific content of the voice is consistent with the voice keyword of the pre-stored wake-up word, determines that the voice sent by the user is the wake-up word "xiaoyi, xiaoyi".

In some embodiments, the electronic device 201 detects, based on the ambient sound, the voice command sent by the user.

For example, the electronic device 201 collects, by using the audio module 408, a voice sent by the user. For example, specific content of the voice is "xiaoyi, xiaoyi". The electronic device 201 compares the specific content "xiaoyi, xiaoyi" of the collected voice with the voice keyword "xiaoyi, xiaoyi" of the pre-stored wake-up word, and compares a voice feature of the collected voice with a voice feature of a preset user. If the specific content of the voice is consistent with the voice keyword of the pre-stored wake-up word, and a matching degree between the voice feature of the collected voice and the voice feature of the preset user exceeds a specific threshold, it is determined that a preset user sends the wake-up word "xiaoyi, xiaoyi".

S103: The electronic device 201 broadcasts a UWB measurement request, and the electronic device 100 receives the UWB measurement request, where the UWB measurement request carries an identity document (Identity document, ID) ID1 of the electronic device 201.

After the electronic device 201 detects the voice command of the user, to determine a target device to be controlled by the voice command, the electronic device 201 initiates measurement of orientation parameter. In some embodiments, orientation parameters may include a distance between the electronic device 201 and the electronic device 100, an AOA of a signal of the electronic device 201 on the electronic device 100, and may further include an RRSI. The RRSI may be used to determine whether there is an obstacle between the electronic device 201 and the electronic device 100.

Specifically, the electronic device 201 broadcasts a first measurement request, and records a moment at which the first measurement request is sent as T1, where the first measurement request carries an ID1, and the first measurement request is used to measure an orientation parameter of the electronic device 201. The electronic device 100 receives, at a moment T2, the first measurement request sent by the electronic device 201, and records a receiving moment of the first measurement request as T2.

S104: The electronic device 100 determines an orientation parameter of the electronic device 201 based on the UWB measurement request.

In some embodiments, the UWB measurement request carries a sending moment of the UWB measurement request. The electronic device 100 may determine a distance between the electronic device 100 and the electronic device 201 based on the sending moment and a receiving moment of the UWB measurement request according to the UWB measurement request, and may further determine an AOA of a signal and an RRSI of the UWB measurement request according to the UWB measurement request.

S105: The electronic device 100 determines, based on orientation parameters of the electronic device 201, the electronic device 202, and the electronic device 203, that the electronic device 201 is a target device.

In some embodiments, the orientation parameters include a distance, an AOA of a signal, and an RRSI. The electronic device 100 determines, based on the orientation parameters of the electronic device 201, the electronic device 202, and the electronic device 203, from devices having no obstacle to the electronic device 100, that a device whose AOA is closest to a preset angle and that is closest to the electronic device 100 is the electronic device 201.

In some embodiments, the orientation parameters include a distance and an AOA of a signal, and the electronic device 100 determines, based on the orientation parameters of the electronic device 201, the electronic device 202, and the electronic device 203, that a device whose AOA is closest to a preset angle or that is closest to the electronic device 100 is the electronic device 201.

In some embodiments, the orientation parameter includes an AOA of a signal, and the electronic device 100 determines, based on an AOA of a signal of the electronic device 201, an AOA of a signal of the electronic device 202, and an AOA of a signal of electronic device 203, that a device whose AOA is closest to a preset angle is the electronic device 201.

S106: The electronic device 100 sends first indication information to the electronic device 201.

S107: The electronic device 201 sends response information in response to the first indication information and the voice command.

Based on the type of the electronic device 201, the response information can be presented in one or more forms of voice, text, image, animation, and the like. For example, the electronic device 201 is a display device (for example, a television) including a display, and the response information may be presented as text information "I am here". For example, the electronic device 201 is an audio device (for example, a speaker) including a loudspeaker, and the response information may be presented as voice information "I am here". For example, as shown in FIG. 1A, a speaker emits a voice "I am here".

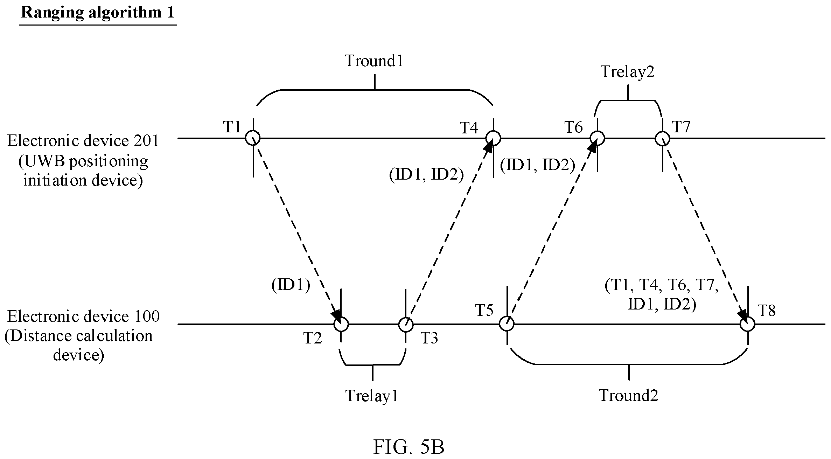

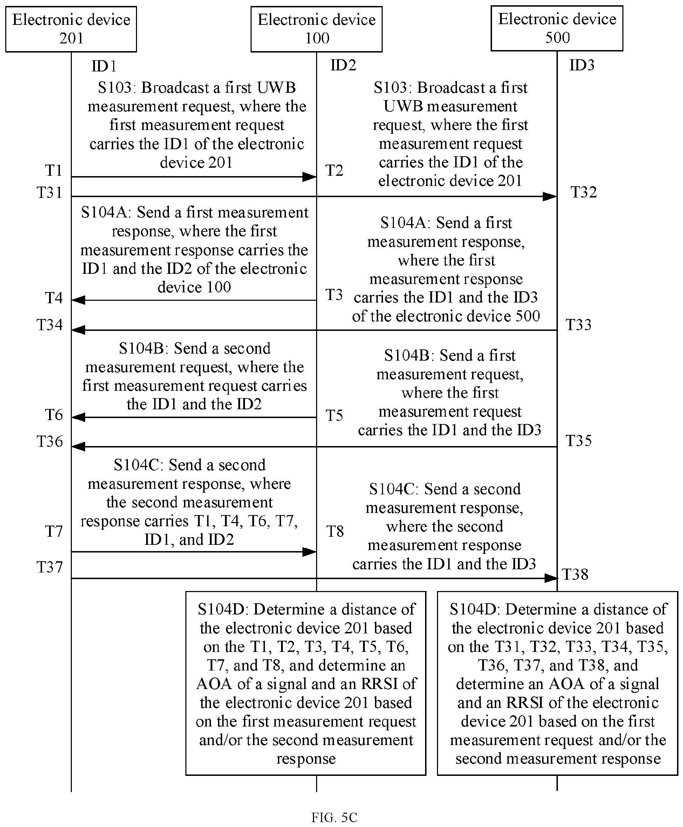

In some embodiments, as shown in FIG. 5B, the electronic device 201 initiates a UWB measurement request, the electronic device 100 calculates an orientation parameter of the electronic device 201, and the electronic device 100 may determine a distance between the electronic device 100 and the electronic device 201 by using a ranging algorithm 1. Refer to FIG. 5C. Step S104 may specifically include steps S104A to S104D.

S104A: The electronic device 100 sends a first measurement response to the electronic device 201 at a moment T3, where the first measurement response carries an ID 1 and an identity document ID 2 of the electronic device 100.

Specifically, the electronic device 100 sends the first measurement response to the electronic device 201 at the moment T3, and records a sending moment of the first measurement response as T3. The electronic device 201 receives the first measurement response at a moment T4, and records a receiving moment of the first measurement request as T4. The first measurement response carries the ID1 and the ID2.

S104B: The electronic device 100 sends a second measurement request to the electronic device 201 at a moment T5, where the second measurement request carries the ID 1 and the ID 2.

Specifically, the electronic device 100 sends the second measurement request to the electronic device 201 at the moment T5, and records a sending moment of the second measurement request as T5. The electronic device 201 receives the second measurement request at a moment T6, and records a receiving moment of the second measurement request as T6. The second measurement request carries the ID1 and the ID2.

S104C: The electronic device 201 sends a second measurement response to the electronic device 100 at a moment T7, where the second measurement request carries T1, T4, T6, T7, ID1, and ID2.

Specifically, the electronic device 201 sends the second measurement response to the electronic device 100 at the moment T7, and records a sending moment of the second measurement response as T7. The electronic device 100 receives the second measurement request at T8, and records a receiving moment of the second measurement request as T8. The second measurement request carries the T1, T4, T6, T7, ID1, and ID2.

S104D: Determine a distance between the electronic device 100 and the electronic device 201 based on the T1, T2, T3, T4, T5, T6, T7, and T8, and determine an AOA of a signal and an RRSI of the electronic device 201 based on the first measurement request and/or the second measurement response.

Specifically, step S104D may include the following steps.

(1) The electronic device 100 determines the distance between the electronic device 100 and the electronic device 201 based on the T1, T2, T3, T4, T5, T6, T7, and T8.

Specifically, the electronic device 100 determines an average one-way flight time T between the electronic device 100 and the electronic device 201 based on the T1, T2, T3, T4, T5, T6, T7, and T8. Then, it may be determined, based on a product of the one-way flight time T and a propagation speed C of an electromagnetic wave, that a distance D between the electronic device 100 and the electronic device 201 is C*T.

Refer to FIG. 5B. A time difference between the sending moment T1 of the first measurement request and the receiving moment T4 of the first measurement response is equal to Tround1, a time difference between the receiving moment T2 of the first measurement request and the sending moment T3 of the first measurement response is equal to Trelayl, a time difference between the sending moment T5 of the second measurement request and the receiving moment T8 of the second measurement response is equal to Tround2, and a time difference between the receiving moment T6 of the second measurement request and the sending moment T7 of the second measurement response is equal to Trelay2. In this embodiment of this application, the one-way flight time T may be represented as follows:

$$T = \frac{Tround1*Tround2 - Trelay1*Trelay2}{Tround1 + Tround2 + Trelay1 + Trelay2} \qquad \text{formula (1)}$$

(2) The electronic device 100 determines the AOA of the signal of the electronic device 201 based on the first measurement request and/or the second measurement response.

In this embodiment of this application, the electronic device 100 may calculate a signal receiving direction based on a phase difference of UWB antennas at different locations to which the first measurement request signal and/or the second measurement response arrive, to determine an orientation of the electronic device 201 relative to the electronic device 100.

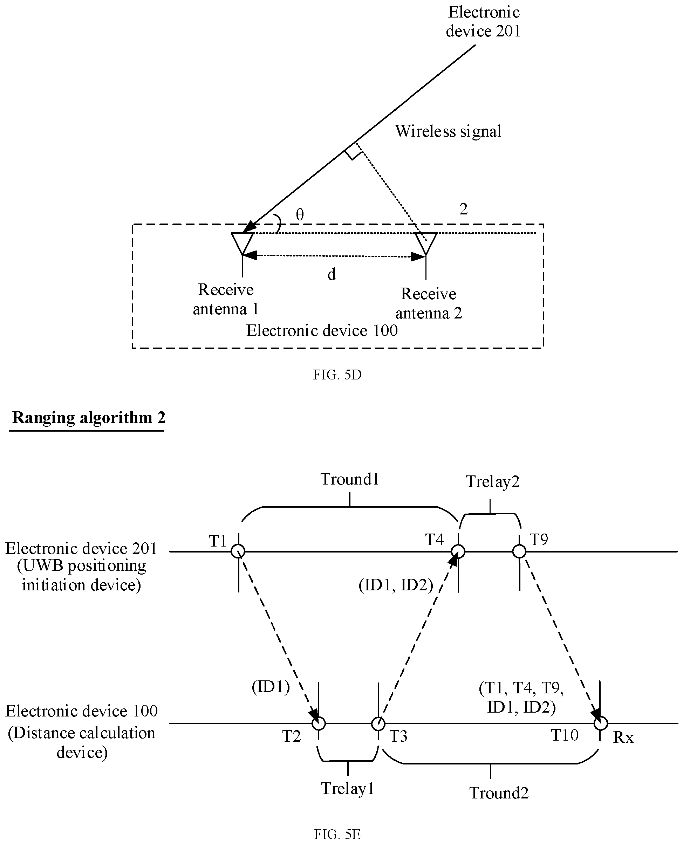

For example, as shown in FIG. 5D, the electronic device 100 receives a wireless signal sent by the electronic device 201, and an AOA of a signal on the electronic device 100 (that is, an incident angle $\theta$ of the wireless signal relative to a connection line between a receive antenna 1 and a receive antenna 2) may be determined based on a phase difference $\varphi$ of the signal on the receive antenna 1 and the receive antenna 2 of the electronic device 100. $\varphi$ may be represented as follows:

$$\varphi = 2 * \pi * d * \frac{\cos(\theta)}{\lambda} + \phi(\theta) \qquad \text{formula (2)}$$

$\lambda$ is a wavelength, and $\phi(\theta)$ is an antenna hardware phase difference. The incident angle $\theta$, that is, the AOA of the signal of the electronic device 201, may be determined by using the foregoing formula.

Refer to FIG. 3D and FIG. 3E. In some embodiments, that the user points the electronic device 100 to the electronic device 201 means that a Y axis of the electronic device 100 points to the electronic device 201. The electronic device 100 determines, based on a phase difference of a received signal on at least two of an antenna A, an antenna B, and an antenna C, an AOA of a signal that is sent by the electronic device 201 and that is received by the electronic device 100.

In some embodiments, the electronic device 100 determines, based on a phase difference of the antenna A and the antenna C, the AOA (that is, an incident angle relative to a Y axis) of the signal sent by the electronic device 201. A connection line between the antenna A and the antenna C is parallel to the Y axis. In this implementation, if the AOA of the signal of the electronic device 201 is closer to 0 degrees, it indicates that the electronic device 100 points to the electronic device 201 more. In some other embodiments, the electronic device 100 determines, based on the phase difference of the antenna A and the antenna B, the AOA of the signal (that is, an incident angle relative to an X axis) sent by the electronic device 201. The connection line between the antenna A and the antenna B is parallel to the X axis. In this implementation, if the AOA of the signal of the electronic device 201 is closer to 90 degrees, it indicates that the electronic device 100 points to the electronic device 201 more. In some other embodiments, the electronic device 100 determines, based on the phase difference of the antenna B and the antenna C, the AOA of the signal (that is, an incident angle relative to a Z axis) sent by the electronic device 201. A connection line between the antenna B and the antenna C is parallel to the Z axis. In this implementation, if the AOA of the signal of the electronic device 201 is closer to 90 degrees, it indicates that the electronic device 100 points to the electronic device 201 more.

It may be understood that the electronic device 100 may determine the AOA of the signal of the electronic device 201 based on the first measurement request in step S104A, or may determine the AOA of the signal of the electronic device 201 based on the second measurement response in step S104C, or may determine the AOA of the signal of the electronic device 201 based on an average value of AOAs of signals corresponding to the first measurement request and the second measurement response in step S104C. This is not specifically limited herein.

(3) The electronic device 100 determines an RRSI of the signal sent by the electronic device 201.

In some embodiments, the electronic device 100 determines, based on an average value of RRSIs corresponding to the first measurement request and the second measurement response, the RRSI of the signal sent by the electronic device 201. In some embodiments, the electronic device 100 determines, based on the RRSI corresponding to the first measurement request or the second measurement response, the RRSI of the signal sent by the electronic device 201.

It may be understood that the electronic device 100 may alternatively determine, based on the RRSI of the first measurement request in step S104A, the RRSI of the signal sent by the electronic device 201.

In this embodiment of this application, whether there is an obstacle between the electronic device 100 and the electronic device 201 may be determined based on the RRSI of the signal sent by the electronic device 201.

It may be understood that, in a non line-of-sight (Non line-of-sight, NLOS) propagation condition with an obstacle, signal attenuation is relatively large, and in a line-of-sight (line-of-sight, LOS) propagation condition without an obstacle, signal attenuation is relatively small. Under the same propagation condition, the longer the distance, the greater the signal attenuation. In this embodiment of this application, whether there is an obstacle between the electronic device 100 and the electronic device 201 may be determined based on the RRSI of the first measurement request signal and/or the RRSI of the second measurement response signal and the distance between the electronic device 100 and the electronic device 201.

In some embodiments, a preset RRSI of the signal that is sent by the electronic device 201 and that is received by the electronic device 100 may be determined based on the distance between the electronic device 100 and the electronic device 201. When the RRSI of the received signal sent by the electronic device 201 is less than the preset RRSI, it is determined that there is an obstacle between the electronic device 100 and the electronic device 201. When the RRSI of the received signal sent by the electronic device 201 is not less than the preset RRSI, it is determined that there is no obstacle between the electronic device 100 and the electronic device 201.

In some embodiments, an orientation parameter of the electronic device 201 may include a distance between the electronic device 100 and the electronic device 201, an AOA of a signal, and a first identity. The first identity of the electronic device 201 is used to represent whether there is an obstacle between the electronic device 100 and the electronic device 201. For example, if the first identity is equal to 1, it indicates that there is an obstacle, and if the first identity is equal to 0, it indicates that there is no obstacle.

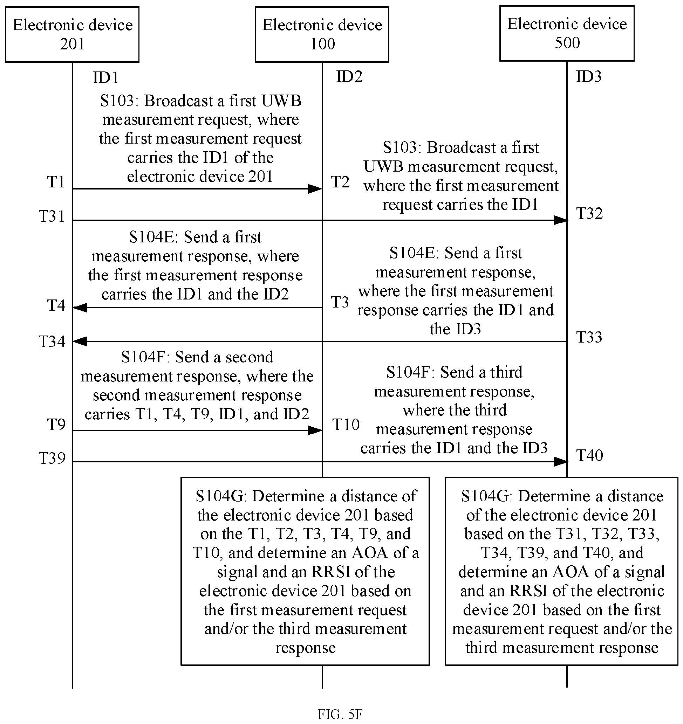

In some other embodiments, refer to FIG. 5E. The electronic device 201 initiates a UWB measurement request, the electronic device 100 calculates an orientation parameter of the electronic device 201, and the electronic device 100 may further determine a distance between the electronic device 100 and the electronic device 201 by using a ranging algorithm 2. Refer to FIG. 5F. Step S104 may further specifically include steps S104E to S104G.

That the electronic device 100 determines a distance between the electronic device 100 and the electronic device 201 based on T1, T2, T3, T4, T9, and T10 in step S104G specifically includes: The electronic device 100 determines an average one-way flight time T between the electronic device 100 and the electronic device 201 based on the T1, T2, T3, T4, T9, and T10. Then, it may be determined, based on a product of the one-way flight time T and a propagation speed C of an electromagnetic wave, that a distance D between the electronic device 100 and the electronic device 201 is C*T.

Refer to FIG. 5E. A time difference between the sending moment T1 of the first measurement request and the receiving moment T4 of the first measurement response is equal to Tround1, a time difference between the receiving moment T2 of the first measurement request and the sending moment T3 of the first measurement response is equal to Trelay1, and a time difference between the sending moment T3 of the first measurement response and the receiving moment T10 of the third measurement response is equal to Tround2, a time difference between the receiving moment T6 of the first measurement response and the sending moment T9 of the third measurement response is equal to Trelay2, and the one-way flight time T may be shown in formula 1.

In this embodiment of this application, the electronic device 100 may determine, based on one or more of the distances, the AOAs of the signals, and the RRSIs of the electronic device 201, the electronic device 202 and the electronic device 203, that the electronic device 201 is a target device.

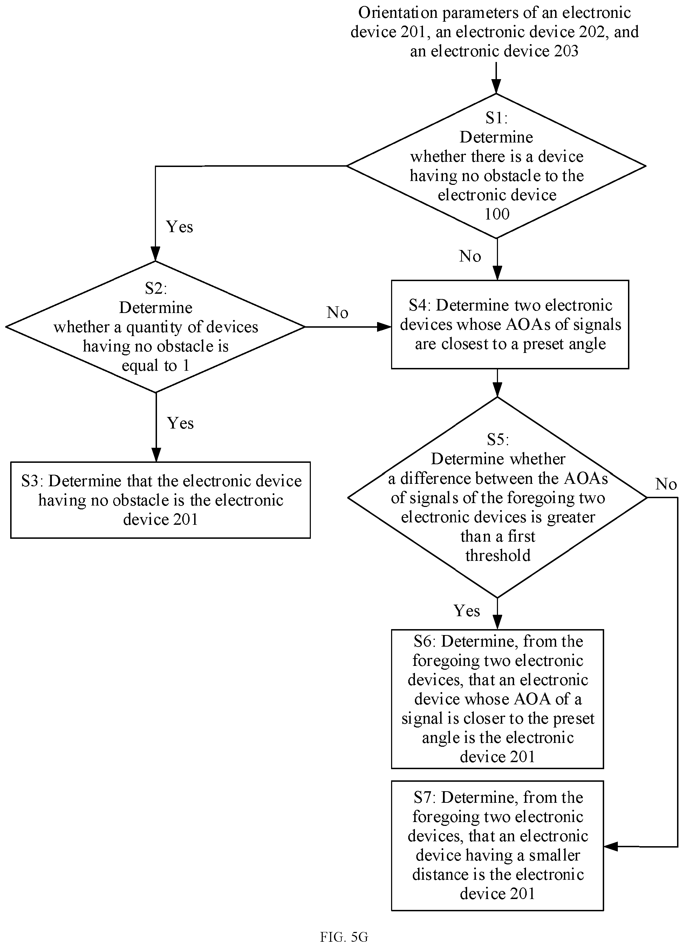

Refer to FIG. 5G. That the electronic device 100 determines, based on orientation parameters of the electronic device 201, the electronic device 202, and the electronic device 203, that the electronic device 201 is a target device in step S105 may specifically include the following steps.

S1: Determine, based on RRSIs (or first identities) in the orientation parameters of the electronic device 201, the electronic device 202, and the electronic device 203, whether there is a device having no obstacle to the electronic device 100; and if there is a device having no obstacle to the electronic device 100, perform step S2; or if there is no device having no obstacle to the electronic device 100, perform step S4.

In some embodiments, a preset RRSI of the signal that is sent by the electronic device 201 and that is received by the electronic device 100 may be determined based on the distance between the electronic device 100 and the electronic device 201. When the RRSI of the signal sent by the electronic device 201 is less than the preset RRSI, it is determined that there is an obstacle between the electronic device 100 and the electronic device 201. When the RRSI of the signal sent by the electronic device 201 is not less than the preset RRSI, it is determined that there is no obstacle between the electronic device 100 and the electronic device 201.

In some embodiments, when the first identity of the electronic device 201 is equal to a first value (for example, 1), there is no obstacle between the electronic device 201 and the electronic device 100; or when the first identity of the electronic device 201 is equal to a second value (for example, 0), there is an obstacle between the electronic device 201 and the electronic device 100.

S2: Determine whether a quantity of devices having no obstacle to the electronic device 100 among the electronic device 201, the electronic device 202, and the electronic device 203 is equal to 1; and if the quantity of devices having no obstacle to the electronic device 100 among the electronic device 201, the electronic device 202, and the electronic device 203 is equal to 1, perform step S3; or if the quantity of devices having no obstacle to the electronic device 100 among the electronic device 201, the electronic device 202, and the electronic device 203 is not equal to 1, perform step S4.

S3: Determine that an electronic device having no obstacle to the electronic device 100 is the electronic device 201.

It may be understood that when there is only one device nearby having no obstacle to the electronic device 100, it is determined that the device having no obstacle to the electronic device 100 is a target device that a user intends to wake up.

S4: Determine two electronic devices whose AOAs of signals are closest to a preset angle.

In some embodiments, if it is determined in step S1 that none of the electronic device 201, the electronic device 202, and the electronic device 203 has no obstacle to the electronic device 100, the electronic device 100 determines, in S4, two electronic devices whose AOAs of signals are closest to the preset angle from the electronic device 201, the electronic device 202, and the electronic device 203.

In some embodiments, if it is determined in step S2 that more than one of the electronic device 201, the electronic device 202, and the electronic device 203 has no obstacle to the electronic device 100, the electronic device 100 determines, in S4, two electronic devices whose AOAs of signals are closest to the preset angle from devices having no obstacle to the electronic device 100 among the electronic device 201, the electronic device 202, and the electronic device 203.

In some embodiments, the electronic device 100 determines, based on a phase difference of an antenna A and an antenna C, an AOA of a signal of the electronic device 201, and a connection line between the antenna A and the antenna C is parallel to a Y axis. In this implementation, the preset angle is equal to 0 degrees. In some other embodiments, the electronic device 100 determines, based on a phase difference of an antenna A and an antenna B, an AOA of a signal sent by the electronic device 201, and a connection line between the antenna A and the antenna B is parallel to an X axis. In this implementation, the preset angle is equal to 90 degrees. In some other embodiments, the electronic device 100 determines, based on a phase difference of an antenna B and an antenna C, an AOA of a signal sent by the electronic device 201, and a connection line between the antenna B and the antenna C is parallel to a Z axis. In this implementation, the preset angle is equal to 90 degrees.

It may be understood that the foregoing preset angle may vary with a manner of determining the AOA of the signal of the electronic device 201. In this embodiment of this application, the preset angle may alternatively be another value. This is not specifically limited herein.

S5: Determine whether a difference between AOAs of signals of the foregoing two electronic devices is greater than a first threshold; and if the difference between AOAs of signals of the foregoing two electronic devices is greater than the first threshold, perform step S6; or if the difference between AOAs of signals of the foregoing two electronic devices is not greater than the first threshold, perform step S7.

For example, the first threshold is 10 degrees.

S6: Determine that an electronic device, from the foregoing two electronic devices, whose AOA of a signal is closer to the preset angle is the electronic device 201.

S7: Determine, from the foregoing two electronic devices, that an electronic device having a smaller distance to the electronic device 100 is the electronic device 201.

It may be understood that, in the foregoing embodiment, the electronic device 100 determines, from devices having no obstacle to the electronic device 100 (or all devices), that an electronic device closest to the electronic device 100 and closest to a pointing direction of the electronic device 100 is a device that the user intends to wake up.

In some other embodiments of this application, the orientation parameters include a distance and an AOA of a signal. Step S105 may specifically include only steps S4 to S7. To be specific, the electronic device 100 determines, based on orientation parameters of nearby devices, from the nearby devices that a device whose AOA of a signal is closest to the preset angle or that is closest to the electronic device 100 is the electronic device 201.

It should be noted that, in some embodiments, the user may use one or more electronic devices (for example, a smartphone, a smart band, or a tablet) to control a nearby smart home device. After detecting a voice command (for example, a preset wake-up word) of the user, the smart home device broadcasts a UWB measurement request. An electronic device (for example, the electronic device 100 and the electronic device 500 shown in FIG. 5C and FIG. 5F) of the user that receives the UWB measurement request sends a measurement response to the electronic device 201, and may further determine an orientation parameter of the electronic device 201 relative to the electronic device 100 and the electronic device 500 respectively.

In some embodiments of this application, another method for determining a target device based on orientation parameters of a plurality of electronic devices is provided. For a specific implementation, refer to FIG. 5H-1 and FIG. 5H-2.

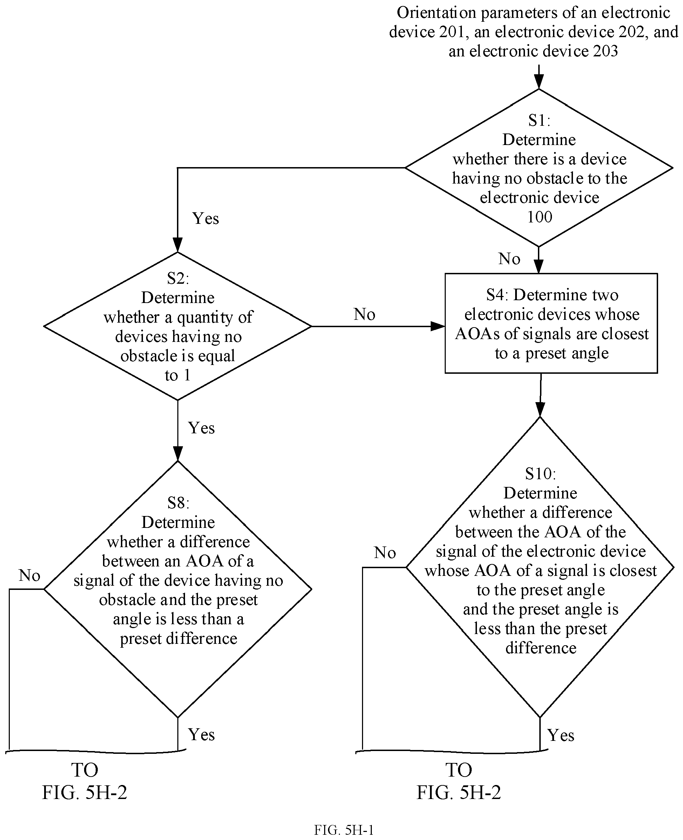

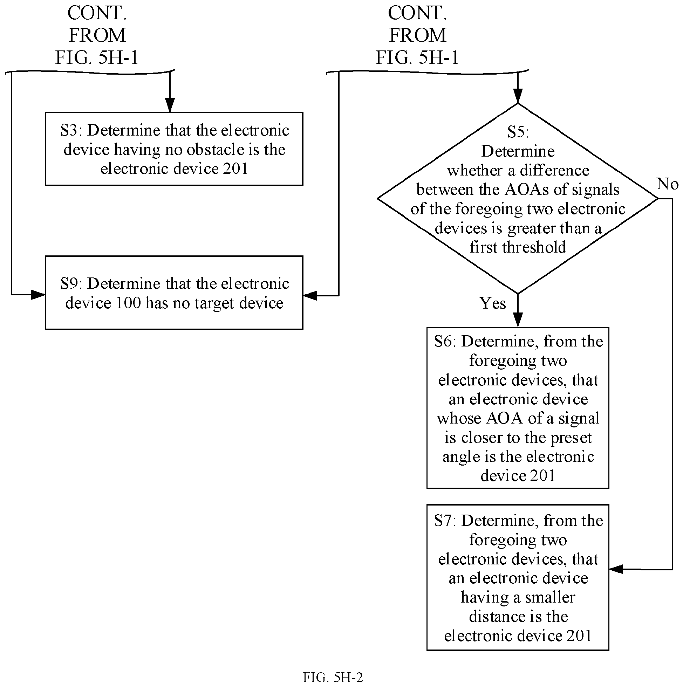

As shown in FIG. 5H-1, S8 may be further included after step S2.

S8: Determine whether a difference between an AOA of a signal of the nearby device having no obstacle and the preset angle is less than a preset difference; and if the difference between the AOA of the signal of the nearby device having no obstacle and the preset angle is less than the preset difference, perform step S3; or if the difference between the AOA of the signal of the nearby device having no obstacle and the preset angle is not less than the preset difference, perform S9.

For example, the preset difference is 20 degrees.

S9: Determine that the electronic device 100 has no target device.

As shown in FIG. 5H-1, S10 may be further included after step S4.

S10: Determine whether a difference between the AOA of the signal of the electronic device whose AOA of a signal is closest to the preset angle and the preset angle is less than the preset difference; and if the difference between the AOA of the signal of the electronic device whose AOA of a signal is closest to the preset angle and the preset angle is less than the preset difference, perform S5; or if the difference between the AOA of the signal of the electronic device whose AOA of a signal is closest to the preset angle and the preset angle is not less than the preset difference, perform S9.

In this way, when there are a plurality of user's electronic devices (for example, the electronic device 100 and the electronic device 500) that can control a smart home device, the proposed method can reduce a possibility of misjudgment of the target device.

FIG. 6A-1 and FIG. 6A-2 show another device control method according to an embodiment of this application. Devices in the method flowchart include the electronic device 100, the electronic device 201, the electronic device 202, and the electronic device 203. In the proposed method, when detecting a voice command (for example, a preset wake-up word) of a user, the electronic device 201 initiates a UWB measurement request, and the electronic device 201 may determine a distance between the electronic device 201 and the electronic device 100 based on a measurement response fed back by the electronic device 100. The foregoing device control method includes but is not limited to steps S201 to S209.

S201: The electronic device 201 collects ambient sound in real time.

S202: The electronic device 201 detects a voice command based on the ambient sound.

Specifically, refer to a related embodiment of step S102. Details are not described herein.

S203: The electronic device 201 broadcasts a UWB measurement request, and the electronic device 100 receives the UWB measurement request.

Specifically, the electronic device 201 broadcasts a first measurement request at a moment T1, where the first measurement request carries an ID 1, and the first measurement request is used to measure an orientation parameter of the electronic device 201. In addition, the electronic device 201 records a moment at which the first measurement request is sent as T1. The electronic device 100 receives, at a moment T2, the first measurement request sent by the electronic device 201, and records a receiving moment of the first measurement request as T2.

S204: The electronic device 100 sends a measurement response to the electronic device 201.

S205: The electronic device 201 determines the orientation parameter of the electronic device 201 based on the measurement response sent by the electronic device 100.

S206: The electronic device 201 sends the orientation parameter of the electronic device 201 to the electronic device 301.

S207: The electronic device 301 determines, based on the orientation parameters of the electronic device 201, the electronic device 202, and the electronic device 203, that the electronic device 201 is a target device.

Specifically, for how the electronic device 301 determines the target device based on the orientation parameters of the electronic device 201, the electronic device 202, and the electronic device 203, refer to related embodiments in FIG. 5G and FIG. 5H-1 and FIG. 5H-2. Details are not described herein.

S208: The electronic device 301 sends first indication information to the electronic device 201.

S209: The electronic device 201 sends response information in response to the first indication information and the voice instruction.

In some embodiments, as shown in FIG. 6B, the electronic device 201 initiates a UWB measurement request, and the electronic device 201 determines a distance between the electronic device 100 and the electronic device 201 by using a ranging algorithm 3. Refer to FIG. 6C. Step S204 may further include step S204A and step S204B.

S204A: The electronic device 100 determines, based on a phase difference of the first measurement request on different antennas, that an AOA of a signal of the electronic device 201 is an AOA1.

Specifically, for how the electronic device 100 determines the AOA1, refer to a related embodiment of step S104D. Details are not described herein again.

S204B: The electronic device 100 sends a first measurement response to the electronic device 201 at a moment T3, where the first measurement request carries AOA1, T2, T3, ID1, and ID2. The electronic device 201 receives the first measurement response sent by the electronic device 100 at a moment T4, and records a receiving moment of the first measurement response as T4.

It may be understood that, in the embodiment shown in FIG. 6B, the electronic device 100 determines the AOA of the signal of the electronic device 201. In some embodiments, the smart home device may distinguish a direction of a location of the electronic device 100 based on a signal sent by the electronic device 100, but cannot distinguish a pointing direction of the electronic device 100.

Step S205 specifically includes: for the electronic device 100, the electronic device 201 determines that the AOA of the signal of the electronic device 201 is the AOA1, the electronic device 201 determines a distance between the electronic device 100 and the electronic device 201 based on the T1, T2, T3, and T4, and the electronic device 201 determines an RRSI according to the first measurement response.

Specifically, for how the electronic device 201 determines, based on the RRSI of the first measurement response, whether the electronic device 201 has an obstacle, refer to step S104D. Details are not described herein again. The electronic device 201 determines an average one-way flight time T of a signal between the electronic device 100 and the electronic device 201 based on the T1, T2, T3, and T4. Then, it may be determined, based on a product of the one-way flight time T and a propagation speed C of an electromagnetic wave, a distance D=C*T between the electronic device 100 and the electronic device 201.

Refer to FIG. 6B. A time difference between the sending moment T1 of the first measurement request and the receiving moment T4 of the first measurement response is equal to Tround1, a time difference between the receiving moment T2 of the first measurement request and the sending moment T3 of the first measurement response is equal to Trelay1, and a one-way flight time T may be expressed as follows:

$$T = \frac{Tround1 - Trelay2}{2} \qquad\qquad \text{formula (3)}$$

In some embodiments, refer to FIG. 6C and FIG. 6D. The electronic device 201 may initiate a measurement request for a plurality of times, and obtain an average value of one-way flight times by using a ranging algorithm 4 shown in FIG. 6D based on the plurality of measurement requests, and receiving moments and sending moments of the plurality of measurement responses, to reduce a distance measurement error.

The following describes another device control method provided in this application with reference to a voice interaction scenario. Devices in the method flowchart include the electronic device 100, the electronic device 201, the electronic device 202, and the electronic device 203. Specifically, refer to FIG. 6E. The device control method includes but is not limited to steps S211 to S216.

S211: The electronic device 201 collects ambient sound in real time.

S212: When detecting a voice command based on the ambient sound, the electronic device 201 determines decibel information of the voice command.

S213: The electronic device 201 sends the decibel information determined by the electronic device 201 to the electronic device 301.

The electronic device 301 may be the electronic device 100, or may be one of nearby devices (for example, the electronic device 202), or may be a third-party device such as a router or a gateway. This is not specifically limited herein.

S214: The electronic device 301 determines, based on the decibel information of the electronic device 201, the electronic device 202, and the electronic device 203, that the electronic device 201 with highest decibel information is a target device.

S215: The electronic device 301 sends first indication information to the electronic device 201.

S216: The electronic device 201 sends response information in response to the first indication information and the voice command.

In some embodiments, when receiving and detecting a voice command, the electronic device 201 determines energy information of the voice command, and sends the energy information to the electronic device 301. The electronic device 301 may further determine, based on energy information of voice commands received by the electronic device 201, the electronic device 202, and the electronic device 203, that an electronic device with maximum energy information is a target device that a user intends to wake up.

In addition, with reference to a connection and pairing scenario, an embodiment of this application further provides another device control method. The proposed method can pair and connect the electronic device 100 to a target device through a simple operation.

For example, as shown in FIG. 7A, there are a plurality of smart home devices near a user, for example, the speaker 201, the refrigerator 202, the television 203, and the air conditioner 204. When the user intends to pair and connect the electronic device 100 to one of the plurality of smart home devices, the user points the electronic device 100 to the target device (for example, the speaker 201). In response to a detected first user operation (for example, the user taps a back cover of the electronic device 100), the electronic device 100 initiates measurement of orientation parameters (for example, distances, AOAs of signals, and RRSIs) of the plurality of smart home devices. It may be determined, based on the orientation parameters of the plurality of smart home devices, that the target device to which the user intends to pair and connect is the speaker 201. The electronic device 100 may obtain a connection parameter of the speaker 201, and establish a connection to the speaker 201 based on the connection parameter.

As shown in FIG. 7A, the electronic device 100 may be a Huawei mobile phone. After the electronic device 100 successfully establishes the connection to the speaker 201, the speaker 201 may send voice information "the connection to the Huawei mobile phone is established". For example, as shown in FIG. 7B, after the electronic device 100 successfully establishes the connection to the speaker 201, the electronic device 100 may also display prompt information 501, where the prompt information 501 is used to prompt the user that the electronic device 100 has established the connection to the speaker 201. Specific content of the prompt information 501 may be "the connection to the speaker is established".

In some embodiments, the user interface 10 shown in FIG. 7B as an example may be a home screen (Home screen). The user interface 10 may include a status bar, a navigation bar, a calendar indicator, and a weather indicator. The user interface 10 may further include a plurality of application icons, for example, a transfer icon, a gallery icon, a music icon, and a smart home icon.

In this embodiment of this application, after the electronic device 100 establishes the connection to the speaker 201, the user may control the speaker 201 by using the electronic device 100. For example, as shown in FIG. 7C-1 and FIG. 7C-2, the electronic device 100 may receive an input operation (for example, a tap operation) performed by the user based on the prompt information 501, and in response to the detected input operation, the electronic device 100 displays a control interface 11 of the speaker 201.

The user interface 11 may include an application title bar 601, a connection card 602, a music card 603, and a nearby device card 604.

The connection card 602 may include indication information 602A and a connection manner 602B. The indication information 602A is used to represent whether the speaker 201 is currently in an online state or an offline state. The online state means that the speaker 201 is currently connected to the Internet, and the offline state means that the speaker 201 is currently not connected to the Internet. The connection manner 602B is used to indicate a current connection manner between the speaker 201 and the electronic device 100. When the current connection manner between the speaker 201 and the electronic device 100 is a Bluetooth connection manner, the connection manner 602B may be presented on a Bluetooth icon. When the current connection manner between the speaker 201 and the electronic device 100 is a Wi-Fi connection manner, the connection manner 602B may be presented on a Wi-Fi icon.

The music card 603 may include a music name 603A, a pause control 603B, a previous control 603C, a next control 603D, a progress bar 603E, a volume 603F, and a more control 603H.

The pause control 603B may receive an input operation (for example, a tap operation) of the user, and in response to the detected user operation, the speaker 201 pauses playing music.

The previous control 603C may receive an input operation (for example, a tap operation) of the user, and in response to the detected user operation, the speaker 201 may play a song previous to a playing song in a music list.

The next control 603D may receive an input operation (for example, a tap operation) of the user, and in response to the detected user operation, the speaker 201 may play a next song of a playing song in a music list.

The progress bar 603E may indicate total duration (for example, 04:42) and played duration (for example, 00:42) of the playing song.

The volume 603F may receive an input operation (for example, a slide operation) of the user, and in response to the detected user operation, the speaker 201 adjusts a playback volume of the speaker 201.

The more control 603H may receive an input operation (for example, a slide operation) of the user, and in response to the detected user operation, the electronic device 100 may display more functional options of a music card, for example, sharing, deleting, and downloading.

The nearby device card 604 may include icons of one or more nearby devices, for example, an air conditioner icon 604A, a living room television icon 604B, and a refrigerator icon 604C. An arrangement order of icons of the plurality of nearby devices in the nearby device card 604 may be based on a factor such as a distance or a use frequency. The nearby device card 604 may receive an input operation (for example, a touch and hold operation) of the user, and in response to the detected user operation, the electronic device 100 may display icons of more nearby devices. The air conditioner icon 604A, the living room television icon 604B, or the refrigerator icon 604C may receive an input operation (for example, a tap operation) of the user, and in response to the detected user operation, the electronic device 100 may display a control interface corresponding to the device.

In addition to the manner of displaying the control interface 11 of the speaker 201 shown in 7C, there may be another manner, which is not specifically limited herein.

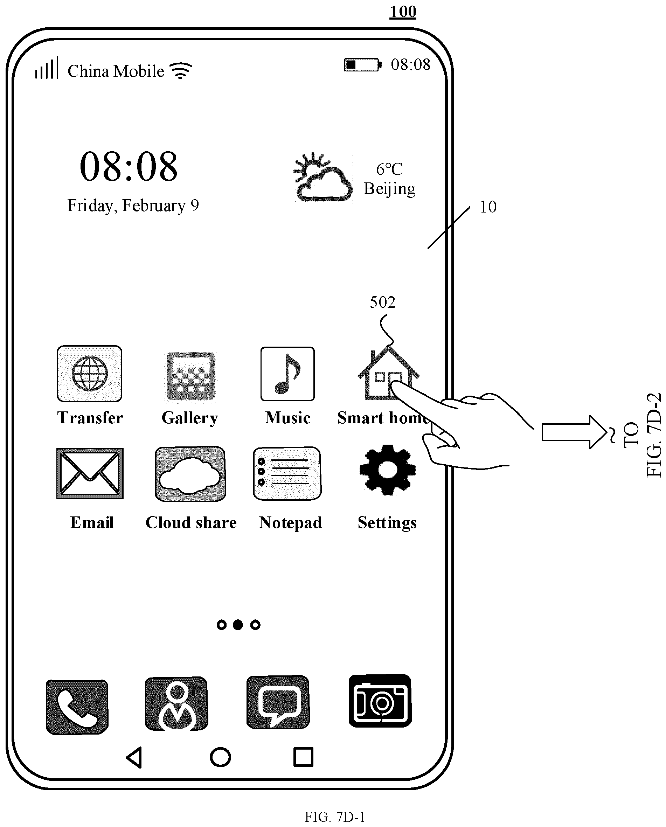

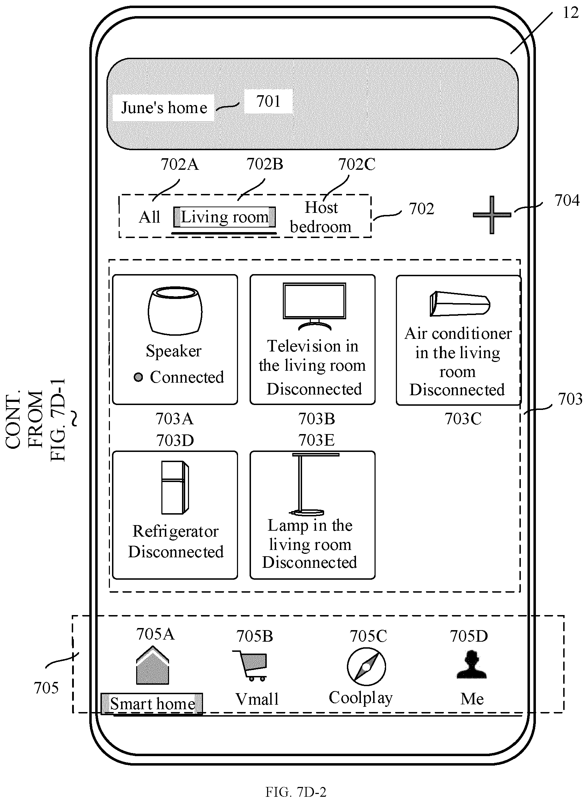

For example, as shown in FIG. 7D-1, the user interface 10 includes a smart home icon 502. The electronic device 100 may receive an input operation (for example, a tap operation) performed by the user on the smart home icon 502, and in response to the input operation, the electronic device 100 displays a user interface 12 of a smart home.

The user interface 12 may include an application title bar 701, a region selection bar 702, a home device display bar 703, an add control 704, and a function bar 705.

The region selection bar 702 may include: an all control 702A, a living room control 702B, and a host bedroom control 702C. Any one of the all control 702A, the living room control 702B, and the host bedroom control 702C may receive an input operation (for example, a tap operation) of the user, and in response to the detected input operation, the electronic device 100 may display, on the home device display bar 703, a home device in a region corresponding to the control.

As shown in FIG. 7D-2, the home device display bar 703 displays a plurality of home devices in a living room. The plurality of home devices include a speaker 703A, a living room television 703B, an air conditioner 703C in the living room, a refrigerator 703D, and a desk lamp 703E in the living room. Any one of the plurality of home devices displayed on the home device display bar 703 may receive an input operation (for example, a tap operation) of the user, and in response to the detected input operation, the electronic device 100 displays a control interface of the home device.

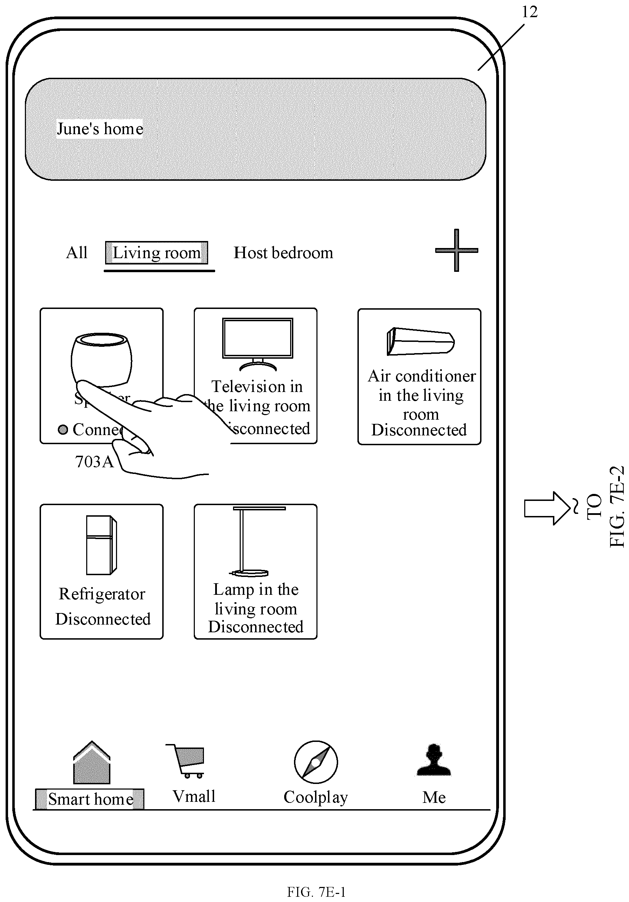

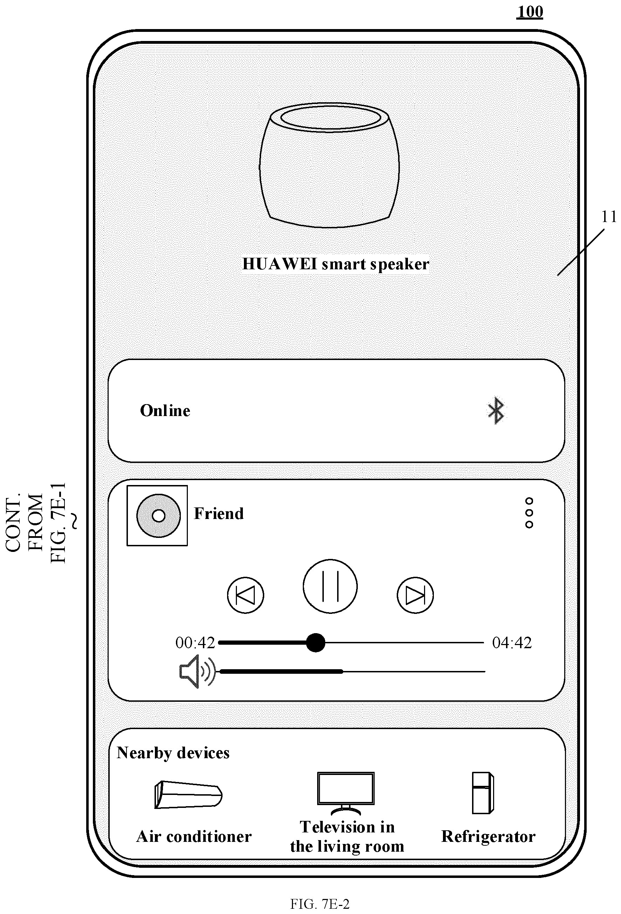

For example, as shown in FIG. 7E, the electronic device 100 receives a user operation (for example, a tap operation) performed by the user on the speaker 703A, and in response to the detected input operation, the electronic device 100 displays a control interface 11 of the speaker.

The add control 704 may receive an input operation (for example, a tap operation) of the user, and in response to the detected input operation, the electronic device 100 displays an interface used to add a home device.

The function bar 705 may include a smart home icon 705A, a mall icon 705B, a coolplay icon 705C, and a user center icon 705D. An input operation (for example, a tap operation) of the user is received. In response to the detected input operation, the electronic device 100 displays an interface corresponding to the icon.

For example, as shown in FIG. 7F, when the user intends to pair and connect the electronic device 100 to the television 203, the user points the electronic device 100 to the television 203. In response to detecting a first user operation of the user (for example, the user taps a back cover of the electronic device 100), the electronic device 100 measures orientation parameters of the plurality of smart home devices, and determines, based on the orientation parameters of the plurality of smart home devices, that the television 203 to which the user intends to pair and connect is a target device. The electronic device 100 obtains a connection parameter of the television 203, and establishes a connection to the television 203 based on the connection parameter. After the connection is established, prompt information (for example, text information "the connection to the Huawei mobile phone is established") may be displayed on a display of the television 203. In addition, after the connection between the electronic device 100 and the television 203 is established, the electronic device 100 may control the television 203 by using a control interface that is of the television 203 and that is displayed by the electronic device 100. For example, the control interface 13 of the television 203 is shown in FIG. 7G.

The following describes another device control method provided in this application with reference to a pairing and connection scenario. Devices in the method flowchart include the electronic device 100, the electronic device 201, the electronic device 202, and the electronic device 203. Devices in the method flowchart may include more or fewer devices. FIG. 8A is merely an example for explaining this application, and should not be construed as a limitation.

FIG. 8A shows a device control method according to an embodiment of this application. In the proposed method, when detecting a first user operation, the electronic device 100 initiates a UWB measurement request. The electronic device 100 determines a distance between the electronic device 100 and the electronic device 201 based on a measurement response of the electronic device 201. Specifically, the device control method includes but is not limited to steps S301 to S307.

S301: The electronic device 100 detects a first user operation.

In some embodiments, the electronic device 100 detects a posture change of the electronic device 100 by using an acceleration sensor and/or a gyro sensor, and determines a pointing operation of the electronic device 100 based on the posture change of the electronic device 100. The first user operation is the foregoing pointing operation.

In some embodiments, a user points the electronic device 100 to a nearby device (for example, the electronic device 201), and performs the first user operation. The electronic device 100 detects the first user operation by using an acceleration sensor and/or a gyro sensor. The first user operation may be tapping, by the user, a back cover of the electronic device 100, or tapping, by the user, a side bezel of the electronic device 100.

Being not limited to the foregoing first user operation, the user may further implement the first user operation by using a voice instruction. For example, specific content of the voice instruction may be "pairing and connection". The user may further implement the first user operation by using a button of the electronic device 100. This is not specifically limited herein.

S302: In response to the first user operation, the electronic device 100 broadcasts a UWB measurement request, and the electronic device 201 receives the UWB measurement request.

In some embodiments, refer to FIG. 8B. The electronic device 100 initiates a UWB measurement request, and the electronic device 100 determines a distance between the electronic device 100 and the electronic device 201 by using a ranging algorithm 3. Refer to FIG. 8C. Step S302 may specifically include: The electronic device 100 broadcasts a fourth measurement request at a moment T11, and records a moment at which the fourth measurement request is sent as T11, where the fourth measurement request carries ID2. The electronic device 201 receives, at a moment T12, the fourth measurement request sent by the electronic device 100, and records a receiving moment of the fourth measurement request as T12.

S303: The electronic device 201 sends a measurement response to the electronic device 100.

Specifically, refer to FIG. 8C. The electronic device 201 sends a fourth measurement response to the electronic device 201 at a moment T13, and the first measurement request carries T12, T13, ID1, and ID2. The electronic device 201 receives, at a moment T4, the fourth measurement response sent by the electronic device 100, and records a receiving moment of the fourth measurement response as the moment T14.

S304: The electronic device 100 determines an orientation parameter of the electronic device 201 based on the measurement response sent by the electronic device 201.

Specifically, the orientation parameter of the electronic device 201 may include one or more of a distance between the electronic device 201 and the electronic device 100, an AOA of a signal of the electronic device 201, and an RRSI of a signal sent by the electronic device 201. The electronic device 100 determines a one-way flight time of the signal based on the T11, T12, T13, T14, and formula (3), and determines the distance between the electronic device 201 and the electronic device 100 based on the one-way flight time. The electronic device 100 determines the AOA of the signal and the RRSI of the electronic device 201 based on the fourth measurement request. Specifically, for how the electronic device 100 determines the orientation parameter of the electronic device 201, refer to a related embodiment of step S104G. Details are not described herein.

S305: The electronic device 100 determines, based on the orientation parameters of the electronic device 201, the electronic device 202, and the electronic device 203, that the electronic device 201 is a target device.

Specifically, for how the electronic device 100 determines the target device based on the orientation parameters of the electronic device 201, the electronic device 202, and the electronic device 203, refer to a related embodiment in FIG. 5G. Details are not described herein.

S306: The electronic device 100 sends a connection request to the electronic device 201, and the electronic device 201 receives the connection request sent by the electronic device 100.

S307: The electronic device 201 sends first capability information and a corresponding connection parameter to the electronic device 100, where the first capability information is used to represent a communication mode that can be supported by the electronic device 201.

In some embodiments, when the first capability information represents a Wi-Fi communication mode, the corresponding connection parameter may include parameters such as a device ID and a pairing key. The electronic device 100 may establish a Wi-Fi connection to the electronic device 201 based on the foregoing connection parameter by using a connection process in the IEE802.11 standard.

In some embodiments, when the first capability information represents a Bluetooth communication mode, the corresponding connection parameter may include parameters such as a key, an encryption mode, and a service set identifier (Service Set Identifier, SSID). The electronic device 100 may establish a Bluetooth connection to the electronic device 201 based on the foregoing connection parameter by using a connection process in the IEE802.15.1 standard.

In some embodiments, when the first capability information represents a Wi-Fi communication mode and a Bluetooth communication mode, the electronic device 100 may preferably use a connection process in the IEE802.11 standard to establish a Wi-Fi connection to the electronic device 201 based on the foregoing connection parameter.

In some embodiments, the fourth measurement request may further carry second capability information, and the second capability information is used to represent all communication modes that can be supported by the electronic device 100, for example, Bluetooth and Wi-Fi. The fourth measurement response may further carry the first capability information and a corresponding connection parameter. The second capability information includes the first capability information, and the second capability information is determined by the electronic device 201 based on the second capability information. In this way, after step S305, the electronic device 100 may directly establish a connection to the electronic device 201 based on the first capability information and the corresponding connection parameter in the fourth measurement response, and does not need to send a connection request again.

In some embodiments, the electronic device 100 may alternatively initiate a measurement request for a plurality of times, and obtain an average value of one-way flight times by using a ranging algorithm 4 based on the plurality of measurement requests, and receiving moments and sending moments of the plurality of measurement responses, to reduce a distance measurement error.

FIG. 8D-1 and FIG. 8D-2 show another device control method according to an embodiment of this application. Devices in the method flowchart include the electronic device 100, the electronic device 201, the electronic device 202, and the electronic device 203. In the proposed method, when detecting a first user operation, the electronic device 100 initiates a UWB measurement request, and the electronic device 201 determines a distance between the electronic device 201 and the electronic device 100 based on the UWB measurement request. Specifically, the device control method includes but is not limited to steps S401 to S408.

S401: The electronic device 100 detects a first user operation.

S402: The electronic device 100 broadcasts a UWB measurement request in response to the first user operation.

In some embodiments, step 402 may specifically include: In response to the first user operation, the electronic device 100 broadcasts a fourth measurement request at a moment T11, and records a moment at which the fourth measurement request is sent as T11, where the fourth measurement request carries ID2. The electronic device 201 receives, at a moment T12, the fourth measurement request sent by the electronic device 100, and records a receiving moment of the fourth measurement request as T12.

S403: The electronic device 201 determines an orientation parameter of the electronic device 201 based on the UWB measurement request.

S404: The electronic device 201 sends the orientation parameter of the electronic device 201 to the electronic device 301.

S405: The electronic device 301 determines, based on the orientation parameters of the electronic device 201, the electronic device 202, and the electronic device 203, that the electronic device 201 is a target device.

Specifically, for how the electronic device 301 determines the target device based on the orientation parameters of the electronic device 201, the electronic device 202, and the electronic device 203, refer to a related embodiment in FIG. 5G. Details are not described herein.

S406: The electronic device 301 sends second indication information to the electronic device 100.

S407: The electronic device 100 sends a connection request to the electronic device 201 in response to the second indication information.

S408: The electronic device 201 sends first capability information and a corresponding connection parameter to the electronic device 100.

In some embodiments, refer to FIG. 8E. The electronic device 100 initiates a UWB measurement request, and the electronic device 201 calculates a distance between the electronic device 100 and the electronic device 201 by using a double-sided two-way ranging algorithm 2. Specifically, refer to FIG. 8F. Step S403 may further include steps S403A to S403D.

S403A: The electronic device 201 sends a fourth measurement response to the electronic device 100 at a moment T13, where the fourth measurement response carries ID 1 and ID 2.

Specifically, the electronic device 201 sends the fourth measurement response to the electronic device 100 at the moment T13, and records a sending moment of the fourth measurement response as T13, where the fourth measurement response carries ID 1 and ID 2. The electronic device 100 receives the fourth measurement response sent by the electronic device 201 at a moment T14, and records a receiving moment of the fourth measurement response as T14.

S403B: The electronic device 100 determines, based on a phase difference of the fourth measurement response on different antennas, that an AOA of a signal of the electronic device 201 is AOA3.

Specifically, for how to determine the AOA3 based on the phase difference of the fourth measurement response on different antennas, refer to a related embodiment of step S104G. Details are not described herein again.

S403C: The electronic device 100 sends a fifth measurement response to the electronic device 201, where the fifth measurement response carries AOA3, T11, T14, T15, ID1, and ID2.

S403D: Determine the AOA of the signal of the electronic device 201 as AOA3, determine a distance between the electronic device 201 and the electronic device 100 based on T11, T12, T13, T14, T15, and T16, and determine an RRSI of the electronic device 201 based on the fourth measurement request and/or the fifth measurement response.

Specifically, the electronic device determines a one-way flight time of a signal based on T11, T12, T13, T14, T15, T16, and formula (1), and determines the distance between the electronic device 201 and the electronic device 100 based on the one-way flight time.

Similarly, in some embodiments, the fourth measurement request may further carry first capability information, and the first capability information is used to represent one or more communication modes that can be supported by the electronic device 100, for example, Bluetooth or Wi-Fi. The fourth measurement response may further carry second capability information and a connection parameter, and the second capability information is used to represent a communication mode that is selected by the electronic device 201 and that is capable of being supported. In this way, after step S406, the electronic device 100 may directly establish a connection to the electronic device 201 based on the connection parameter in the fourth measurement response, and does not need to send a connection request again.

In some other embodiments, the electronic device 100 initiates a UWB measurement request, and the electronic device 201 may further determine a distance between the electronic device 201 and the electronic device 100 by using a ranging algorithm 1. For the ranging algorithm 1, refer to the embodiment in FIG. 5B. Details are not described herein again.

For example, FIG. 9A shows another device control method according to an embodiment of this application. Devices in the method flowchart include the electronic device 100, the electronic device 201, the electronic device 202, and the electronic device 203. In the provided method, the electronic device 201 broadcasts a UWB measurement request at a scheduled time. When the electronic device 100 detects a first user operation, the electronic device 100 determines an orientation parameter of the electronic device 201 based on the UWB measurement request broadcast by the electronic device 201. Specifically, the device control method includes but is not limited to steps S501 to S505.

S501: The electronic device 201 broadcasts a UWB measurement request at a scheduled time.

S502: The electronic device 100 determines an orientation parameter of the electronic device 201 based on the UWB measurement request in response to a detected first user operation.

Specifically, in response to the detected first user operation, the electronic device 100 determines the orientation parameter of the electronic device 201 based on a sixth measurement request broadcast by the electronic device 201, where the sixth measurement request carries ID1 and a sending moment T17 of the sixth measurement request. The electronic device 100 receives, at a moment T18, the fourth measurement request sent by the electronic device 100, and records a receiving moment of the fourth measurement request as T18.

S503: The electronic device 100 determines, based on orientation parameters of the electronic device 201, the electronic device 202, and the electronic device 203, that the electronic device 201 is a target device.

S504: The electronic device 100 sends a connection request to the electronic device 201.

S505: The electronic device 201 sends first capability information and a corresponding connection parameter to the electronic device 100.

In some embodiments, refer to FIG. 9B. The electronic device 201 initiates a UWB measurement request, and the electronic device 100 calculates a distance between the electronic device 100 and the electronic device 201 by using a ranging algorithm 2. Specifically, refer to FIG. 9C. Step S502 may further include steps S502A to S502C.

S502A: The electronic device 100, in response to a detected first user operation, sends a sixth measurement response to the electronic device 201 at a moment T19, and records a sending moment of the sixth measurement response as T19, where the sixth measurement response carries ID1 and ID2. The electronic device 201 receives, at a moment T20, the sixth measurement response sent by the electronic device 100, and records a receiving moment of the sixth measurement response as T20.

S502B: The electronic device 100 sends a seventh measurement response to the electronic device 201 at a moment T21, where the seventh measurement response carries T20, T21, ID1, and ID2. The electronic device 201 receives, at a moment T22, the seventh measurement response sent by the electronic device 100, and records a receiving moment of the seventh measurement response as T22.

S502C: The electronic device 100 determines a distance between the electronic device 201 and the electronic device 100 based on T17, T18, T19, T20, T21, and T22, and determines an AOA of a signal and an RRSI of the electronic device 201 based on the sixth measurement request and/or the seventh measurement response.

Specifically, the electronic device 100 determines a one-way flight time of a signal based on T17, T18, T19, T20, T21, T22, and formula (1), and further determines the distance between the electronic device 201 and the electronic device 100 based on the one-way flight time. For how to determine the AOA of the signal and the RRSI of the electronic device 201 based on the sixth measurement request and/or the seventh measurement response, refer to a related embodiment of step S 104G. Details are not described herein again.

In some embodiments, the sixth measurement request may further carry third capability information, and the third capability information is used to represent one or more communication modes that can be supported by the electronic device 201, for example, Bluetooth or Wi-Fi. The sixth measurement response may further carry fourth capability information, and the fourth capability information is used to represent a communication mode that is selected by the electronic device 100 based on the third capability information and that is capable of being supported. The seventh measurement response may further carry a connection parameter corresponding to the fourth capability information of the electronic device 201. In this way, after step S503, the electronic device 100 may directly establish a connection to the electronic device 201 based on the connection parameter in the seventh measurement response, and does not need to send a connection request again.

In some embodiments, refer to FIG. 9D. The electronic device 201 initiates a UWB measurement request, and the electronic device 100 may further calculate a distance between the electronic device 100 and the electronic device 201 by using a ranging algorithm 1. In some embodiments, refer to FIG. 6B. The electronic device 201 initiates a UWB measurement request, and the electronic device 201 may further calculate a distance between the electronic device 100 and the electronic device 201 by using a one-sided two-way ranging algorithm 1. In some embodiments, refer to FIG. 6D. The electronic device 201 initiates a UWB measurement request, and the electronic device 201 may further calculate a distance between the electronic device 100 and the electronic device 201 by using a one-sided two-way ranging algorithm 2. This is not specifically limited herein.

In embodiments of this application, a software system of the electronic device (for example, the electronic device 100) may use a layered architecture, an event-driven architecture, a microkernel architecture, a microservice architecture, or a cloud architecture. In this embodiment of this application, an Android system with a layered architecture is used as an example to describe a software structure of the electronic device 100.

FIG. 10A is a block diagram of an example of a software structure of an electronic device according to this embodiment of this application. The electronic device may determine orientation parameters (for example, distances, AOAs of signals, and RRSIs) of nearby devices by using a UWB positioning technology, and further determine, based on the orientation parameters of the plurality of nearby devices, a target device that a user intends to wake up or pair with. The electronic device may establish a wireless communication connection to the target device by using one or more wireless communication protocols of UWB, Bluetooth, WLAN, and infrared, to transmit data.

As shown in FIG. 10A, software is divided into several layers by using a layered architecture, and each layer has a clear role and task. The layers communicate with each other through a software interface. In some embodiments, the Android system may be divided into an application layer, an application framework layer, a protocol stack, a hardware abstraction layer (hardware abstraction layer, HAL), and a kernel (kernel) from top to bottom.

The application layer includes a series of application packages, for example, smart home, Bluetooth, and WLAN, and can further include an application such as a camera, a gallery, a call, music, or a video.

The smart home app is a software program that can select and control various smart home devices in a home, and is installed on the electronic device used by the user. The smart home app may be an application installed before delivery of the electronic device, or may be an application downloaded from a network or obtained from another device by the user in a process of using the electronic device. For the smart home app, refer to related descriptions of the embodiments in FIG. 7A to FIG. 7G.

The application framework layer provides an application programming interface (application programming interface, API) and a programming framework for an application at the application layer. The application framework layer includes some predefined functions.

As shown in FIG. 10A, the application framework layer may mainly include an API and a system service (System Service). The API is used to implement communication between the application layer and the protocol stack, the HAL, or the kernel (kernel). For example, communication between the "smart home" and the HAL layer and the kernel (kernel) may be provided. The API may include one or more of a UWB API, a Bluetooth API, a WLAN API, and an infrared API. Correspondingly, the system service may include one or more of a UWB service, a Bluetooth service, a WLAN service, and an infrared service. The electronic device 100 may invoke the corresponding system service by invoking one or more of the UWB API, the Bluetooth API, the WLAN API, and the infrared API, to detect an orientation parameter of a device near the electronic device 100. Alternatively, the corresponding system service may be invoked by invoking one or more of the UWB API, the Bluetooth API, the WLAN API, and the infrared API, to establish a wireless communication connection to a nearby device and transmit data.

The UWB service may specifically include one or more services, for example, a UWB positioning service. The UWB positioning service may include orientation parameter measurement, where the orientation parameter measurement includes one or more of distance measurement, AOA measurement, and RRSI measurement. For example, the electronic device 100 invokes the UWB positioning service by using the UWB API, to detect the orientation parameter of the device near the electronic device 100.

In this embodiment of this application, a motion detector (motion detector) may be further added to the application framework layer, to perform logical determining on an obtained input event and identify a type of the input event. For example, the motion detector determines, based on information such as touch coordinates and a timestamp of a touch operation included in the input event, that the input event is a knuckle touch event, a finger pad touch event, or the like. In addition, the motion detector may further record a track of the input event, determine a gesture rule of the input event, and respond to different operations based on different gestures. For example, the motion detector determines, based on information such as acceleration of the electronic device on three axes (for example, a finger of the user taps a back cover or a side bezel of the electronic device) included in the input event, that the input event is a tap event. For example, the motion detector determines, based on information such as a posture change of the electronic device and a timestamp of the posture change (for example, the user holds the electronic device to perform a pointing operation) included in the input event, that the input event is a pointing event.

The protocol stack defines a plurality of profiles (profiles) and core protocols (protocol). Each profile defines a corresponding message format and application rule, and the profile (profile) may be a UWB service (Application), a Bluetooth service, a WLAN service, or the like. For example, as shown in FIG. 9C, the protocol stack may include a UWB protocol stack, a UWB hardware service module, and a UWB time management module. The UWB protocol stack may define a message format of UWB receiving and sending signals (including receiving signals and sending signals), data format conversion of the UWB receiving and sending signals, a UWB positioning algorithm, and the like. The UWB hardware service module may be configured to manage a life cycle of UWB firmware and software update matching the UWB firmware. The UWB time management module may be configured to record and manage timestamps of the UWB receiving and sending signals. In some embodiments, the protocol stack may further include one or more of a Bluetooth protocol stack, a WLAN protocol stack, and an infrared protocol stack. For example, the UWB positioning service at the application framework layer sends a UWB measurement instruction to the UWB protocol stack, to instruct the UWB protocol stack to measure an orientation parameter.

The kernel is a layer between hardware and software. The kernel may include one or more of a UWB driver, a Bluetooth driver, and a WLAN driver, and may further include a display driver, a camera driver, an audio driver, a sensor driver, and the like. The HAL layer and the kernel (kernel) are configured to perform a corresponding operation in response to a function invoked by the system service in the application framework layer. For example, in response to the UWB measurement instruction sent by the UWB positioning service by invoking the UWB protocol stack, the UWB chip driver sends a UWB measurement request by using a hardware device (for example, a UWB chip).

In an example of this application, the software structural framework may be on an electronic device (for example, the electronic device 100 or the electronic device 500 in the foregoing embodiments) of a user, or may be on a smart home device (for example, the electronic device 201, the electronic device 202, the electronic device 203, or the electronic device 204 in the foregoing embodiments).

In a voice wakeup scenario, a UWB positioning initiation device is a smart home device (for example, the electronic device 201). In a pairing and connection scenario, the UWB positioning initiation device may be an electronic device (for example, the electronic device 201) of the user, or may be a smart home device (for example, the electronic device 201).

The following uses the pairing and connection scenario in the embodiment in FIG. 8A as an example to describe working procedures of software and hardware of the electronic device 100.

When an acceleration sensor detects a tap operation (for example, tapping a back cover of the electronic device, or tapping a side bezel of the electronic device), a corresponding hardware interrupt is sent to a kernel. The kernel processes the tap operation into an original input event (including information such as a tap location and a timestamp of the tap operation). The original input event is stored at the kernel. The application framework layer obtains the original input event from the kernel, and identifies that the input event is a pairing and connection to a smart home device (for example, the electronic device 201). A smart home application invokes the UWB API at the application framework layer to start the UWB positioning service. The UWB positioning service sends a UWB measurement instruction to a UWB HAL interface at the HAL by invoking the UWB protocol stack. The UWB HAL sends a UWB measurement request to the kernel. The kernel drives, according to the UWB measurement request, the UWB chip to broadcast the measurement request (for example, a first measurement request) by invoking the UWB chip driver, and records a timestamp of sending the UWB measurement request by using the UWB time management module.

In some embodiments of this application, refer to 8B. The electronic device 100 performs distance measurement by using a ranging algorithm 3, the electronic device 100 initiates UWB positioning measurement, and the electronic device 100 calculates an orientation parameter. After the UWB chip sends a measurement request (for example, the first measurement request) by using an antenna, when the UWB chip receives a measurement response (for example, a first measurement response) by using the antenna, a corresponding measurement parameter is sent to the kernel. The measurement parameter may include a timestamp (for example, a receiving moment of the first measurement request and a sending moment of the first measurement response) carried in the measurement response, a receiving moment of the first measurement response, phase difference information of the measurement response on different antennas, or an RSSI of the measurement response. The kernel sends the measurement parameter to the UWB protocol stack by invoking the UWB HAL interface. After processing the measurement parameter by using a UWB positioning measurement algorithm (for example, a ranging algorithm, an AOA measurement algorithm, or an RRSI measurement algorithm), the UWB protocol stack determines an orientation parameter (for example, a distance, an AOA of a signal, or an RRSI) of the electronic device 201. For example, the distance between the electronic device 100 and the electronic device 201 is determined by using the ranging algorithm 3 according to the time stamp carried in the measurement response, the receiving moment of the first measurement response, and the sending moment that is of the first measurement request and that is recorded by the UWB time management module. The UWB protocol stack sends the orientation parameter of the electronic device 201 to the UWB service at the application framework layer. The UWB service may determine, based on the orientation parameters of the plurality of nearby devices, that the electronic device 201 is a target device.

In some embodiments, after determining the target device, the UWB service at the application framework layer sends a first connection request to the HAL and the kernel by invoking the UWB protocol stack. The UWB chip at the kernel drives the UWB chip to send the connection request to the electronic device 201, to request to establish a UWB communication connection and transmit data. Optionally, the UWB service at the application framework layer may further invoke a Bluetooth service, a WLAN service, or an infrared service, to send the first connection request to the electronic device 201. For example, the UWB service starts the Bluetooth service, and invokes a Bluetooth protocol stack by using the Bluetooth service, to send the first connection request to the HAL and the kernel. The Bluetooth chip at the kernel drives the Bluetooth chip to send the first connection request to the electronic device 201, to request to establish a Bluetooth communication connection and transmit data.

For example, FIG. 10B is an example of a UWB software framework diagram of another electronic device according to an embodiment of this application. The software framework may be on an electronic device (for example, the electronic device 100 or the electronic device 500 in the foregoing embodiments) of a user, or may be on a smart home device (for example, the electronic device 201, the electronic device 202, the electronic device 203, or the electronic device 204 in the foregoing embodiments).

With reference to FIG. 10A and FIG. 10B, the following describes a correspondence between modules.

An application layer (Android Applications) in FIG. 10B corresponds to the application layer in FIG. 10A.

(Vendor UWB Frameworks APIs) in FIG. 10B corresponds to the API invoking of the application framework layer in FIG. 10A.

A ranging service layer (Ranging Service Layer) in FIG. 10B corresponds to the system service of the application framework layer in FIG. 10A.

A UWB control interface protocol stack (UCI stack) in FIG. 10B corresponds to the UWB protocol stack in FIG. 10A.

A UWB firmware download (HBCI UWB FW download) in FIG. 10B corresponds to the UWB management module in FIG. 10A.

A time management module (TML) in FIG. 10B corresponds to the UWB time management module in FIG. 10A.

A synchronous peripheral interface driver (SPI driver) in FIG. 10B corresponds to the kernel in FIG. 10A.

Hwlios HW in FIG. 10B is an example of a UWB chip provided in an embodiment of this application.

Herein, for functions of the layers in FIG. 10B, refer to the software framework embodiment shown in FIG. 10A. Details are not described herein again.

The following describes a hardware system architecture in this application. In this embodiment of this application, when an electronic device (for example, the electronic device 100) has at least two UWB antennas, AOA measurement may be performed by using a UWB positioning technology. When the electronic device has at least one UWB antenna, distance measurement and RRSI measurement may be implemented.

As shown in FIG. 10C, an embodiment of this application provides an example of a hardware system architecture, which may include but is not limited to an application processor 901, a UWB chip 902, radio frequency modules (including a radio frequency module 903A and a radio frequency module 903B), and antennas (an antenna 904A and an antenna 904B).

First ends of both the radio frequency module 903A and the radio frequency module 903B are connected to the UWB chip 902, a second end of the radio frequency module 903A is connected to the antenna 904A (for example, the antenna A shown in FIG. 3E), and a second end of the radio frequency module 903B is connected to the antenna 904B (for example, the antenna C shown in FIG. 3E). To support UWB AOA measurement, a distance between the antenna 904A and the antenna 904B is less than a half wavelength. In some embodiments, the hardware system shown in FIG. 10C further includes one or more other radio frequency modules. First ends of the one or more radio frequency modules are connected to the UWB chip 902, and second ends of the one or more radio frequency modules are respectively connected to one UWB antenna.

In some embodiments, when an electronic device (for example, the electronic device 201) receives and detects a wake-up word of a user, or when an electronic device (for example, the electronic device 100) detects a first user operation of a user, the application processor 901 enables a UWB positioning service, and sends a measurement instruction to the UWB chip 902 by using the UWB positioning service, to instruct the UWB chip 902 to measure an orientation parameter. According to the foregoing measurement instruction, the UWB chip 902 broadcasts the UWB measurement request by using the radio frequency module (the radio frequency module 903A and/or the radio frequency module 903B) and the corresponding antenna.

In this embodiment of this application, the electronic device may perform distance measurement, AOA measurement, and RRSI measurement by using a UWB chip and an antenna corresponding to the UWB chip. The electronic device may also perform wireless data transmission by using the UWB chip and the antenna corresponding to the UWB chip.

In some embodiments, the hardware system shown in FIG. 10C may further include one or more of a Bluetooth chip 905, a WLAN chip 906, and an infrared chip 907. Any one of the Bluetooth chip 905, the WLAN chip 906, and the infrared chip 907 is connected to an antenna by using one or more radio frequency modules. Antennas connected to any two of the UWB chip 902, the Bluetooth chip 905, the WLAN chip 906, and the infrared chip 907 by using the radio frequency module may be multiplexed, or may be independent of each other. Alternatively, the electronic device may perform wireless data transmission by using one or more of the Bluetooth chip 905, the WLAN chip 906, and the infrared chip 907. In some embodiments, the UWB chip 902 may be integrated into an SOC, or the UWB chip 902 may be integrated with another chip (for example, the Bluetooth chip 905).

In an example of this application, the hardware system architecture may be on an electronic device (for example, the electronic device 100 or the electronic device 500 in the foregoing embodiments) of a user, or may be on a smart home device (for example, the electronic device 201, the electronic device 202, the electronic device 203, or the electronic device 204 in the foregoing embodiments).

The following describes a system architecture 900 of a UWB chip in this application.

As shown in FIG. 10D, an embodiment of this application provides the UWB chip system architecture 900, which may include but is not limited to the application processor (AP) 901 and the UWB chip 902. The application processor 901 may include a UWB positioning service 901A and a UWB protocol stack 901B, and the UWB chip 902 may include a UWB positioning management module 902A and a UWB positioning measurement module 902B. The UWB positioning service 901A may be a function/service/application that requires distance measurement, AOA measurement, and/or RRSI measurement.

In an example of this application, the UWB chip system 900 may be on an electronic device (for example, the electronic device 100 or the electronic device 500 in the foregoing embodiments) of a user, or on a smart home device (for example, the electronic device 201, the electronic device 202, the electronic device 203, or the electronic device 204 in the foregoing embodiments).

The pairing and connection scenario in the embodiment in FIG. 8A is used as an example. For a UWB positioning initiation device (for example, the electronic device 100), the UWB chip system 900 may implement the following steps:

1: The UWB positioning service 901A sends an initiation instruction to the UWB protocol stack 901B, to instruct the UWB protocol stack 901B to perform UWB positioning, that is, start an orientation parameter measurement (including distance measurement, AOA measurement, and RRSI measurement).

2: The UWB protocol stack 901B may send a UWB positioning broadcast instruction to the UWB positioning management module 902A, to instruct the UWB positioning management module 902A to perform positioning broadcast.

3: The UWB positioning management module 902A may trigger the UWB positioning measurement module 902B to broadcast a UWB positioning measurement request (for example, a third measurement request).

4: The UWB positioning measurement module 902B may send a measurement response to the UWB positioning management module 901A after receiving the UWB positioning measurement response (for example, a third measurement response) sent by a nearby device (for example, the electronic device 201).

5: After receiving the measurement response, the UWB positioning management module 901A may parse out measurement parameters such as a receiving moment of the measurement request, a sending moment of the measurement response, phase difference information, and an RSSI of the measurement response according to the measurement response. Then, the UWB positioning management module 901A may send the measurement parameter to the UWB positioning protocol stack 901B.

6: After receiving the measurement parameter, the UWB positioning protocol stack 901B determines, by using a UWB positioning algorithm, an orientation parameter of the nearby device (including determining a distance by using a ranging algorithm, determining an AOA of a signal by using an AOA measurement algorithm, and determining, based on the distance and the RSSI according to the measurement response, whether the electronic device 201 has an obstacle by using the RRSI).

7: After calculating the orientation parameter, the UWB protocol stack 901B may send the orientation parameter of the nearby device to the UWB positioning service 901A.

8: The UWB positioning service 901A may determine a target device based on orientation parameters of a plurality of nearby devices.

Based on the foregoing embodiments, the following describes a device control method provided in embodiments of this application. The device control method includes but is not limited to steps S601 to S603.

S601: A second device sends a first message, where the first message carries an identity of the second device; and a third device sends a second message, where the second message carries an identity of the third device.

The second device may be the electronic device 201 in the foregoing embodiment, the third device may be the electronic device 202 or the electronic device 203 in the foregoing embodiment, the identity of the second device may be an ID1 of the electronic device 201, and the identity of the third device may be an identity document of the electronic device 202. Refer to a related embodiment in FIG. 2. The electronic device 201, the electronic device 202, or the electronic device 203 may be a smart home device such as a television, a speaker, or an air conditioner.

In some embodiments, the first device may initiate positioning measurement, and the first device determines an AOA of a signal of the second device and an AOA of a signal of the third device. The first message and the second message may be the UWB measurement request in the embodiment related to FIG. 5A, or may be the first measurement request in the embodiments related to FIG. 5C and FIG. 5F. The first message and the second message may alternatively be the fourth measurement response in the embodiment related to FIG. 8C. In some embodiments, the second device and the third device may initiate positioning measurement, and the first device determines an AOA of a signal of the second device and an AOA of a signal of the third device. The first message and the second message may be the UWB measurement request in the embodiment related to FIG. 9A, or may be the sixth measurement request in the embodiment related to FIG. 9C.

S602: The first device determines the angle of arrival AOA of the signal of the second device based on the received first message, and the first device determines the AOA of the signal of the third device based on the received second message.

The first device may be the electronic device 100 in the foregoing embodiment, and the identity of the first device may be an ID2 of the electronic device 100. Refer to a related embodiment in FIG. 2. The electronic device 100 may be a portable terminal device such as a smartphone, a smart band, or a tablet. For how to determine an AOA of a signal, refer to the related embodiment in FIG. 5D. Details are not described herein again.

S603: The first device sends a third message to the second device based on the AOA of the signal of the second device and the AOA of the signal of the third device, and the second device performs a response operation in response to the received third message.

Refer to FIG. 5A to FIG. 5F. For a voice interaction scenario, the first device (for example, the electronic device 100) may initiate positioning measurement, and the first device (for example, the electronic device 100) determines the AOA of the signal of the second device (for example, the electronic device 201) and the AOA of the signal of the third device (for example, the electronic device 202).

In some embodiments, that the second device sends a first message includes: The second device sends the first message in response to a detected voice command. That the third device sends a second message includes: The third device sends the second message in response to the detected voice command. That the second device performs a response operation in response to the received third message includes: The second device outputs response information in response to the received third message and the voice command. The first message and the second message may be the UWB measurement request in the embodiment related to FIG. 5A, or may be the first measurement request in the embodiments related to FIG. 5C and FIG. 5F. The third message may be the first indication information in the embodiment related to FIG. 5A.

For a voice interaction scenario, the first device may further initiate positioning measurement, and the first device determines the AOA of the signal of the second device and the AOA of the signal of the third device.

In some embodiments, before that the second device sends a first message and before that the third device sends a second message, the method further includes: The first device sends a fourth message in response to the detected voice instruction, where the fourth message carries an identity of the first device. That the second device sends a first message includes: The second device sends the first message to the first device based on the fourth message. That the third device sends a second message includes: The third device sends the second message to the first device based on the fourth message. That the second device performs a response operation in response to the received third message includes: The second device outputs response information in response to the received third message and the voice command.

It may be understood that, in a smart home scenario, when a user intends to control a target device among smart home devices (for example, including a television, a speaker, and the like) by using a voice, the user may point the mobile phone to the target device and say a voice command. When detecting the voice command of the user, the smart home device or the mobile phone of the user may initiate measurement of an AOA of a signal, and the mobile phone of the user calculates an AOA of a signal of each smart home device. Further, the mobile phone may determine the target device of the user based on the AOA of the signal of each smart home device. One of a plurality of smart home devices can be accurately controlled through a simple operation.

Refer to FIG. 8A to FIG. 8C. For a pairing and connection scenario, the first device may initiate positioning measurement, and the first device determines the AOA of the signal of the second device and the AOA of the signal of the third device.

In some embodiments, before that the second device sends a first message and before that the third device sends a second message, the method further includes: The first device sends a fourth message in response to a detected first user operation, where the fourth message carries an identity of the first device. That the second device sends a first message includes: The second device sends the first message to the first device based on the fourth message. That the third device sends a second message includes: The third device sends the second message to the first device based on the fourth message. The fourth message may be the UWB measurement request in the embodiment related to FIG. 8A, or may be the fourth measurement request in the embodiment related to FIG. 8C. The first message and the second message may be the fourth measurement response in the embodiment related to FIG. 8C. In an implementation, the third message may be the connection request in the embodiment related to FIG. 8A, and the third message is used to instruct the second device to send a connection parameter.

Refer to FIG. 9A to FIG. 9D. For a pairing and connection scenario, the second device and the third device may initiate positioning measurement, and the first device determines the AOA of the signal of the second device and the AOA of the signal of the third device.

In some embodiments, that the first device determines an angle of arrival AOA of a signal of the second device based on the received first message, and that the first device determines an AOA of a signal of the third device based on the received second message include: In response to the detected first user operation, the first device determines the angle of arrival AOA of the signal of the second device based on the received first message, and determines the AOA of the signal of the third device based on the received second message. The first message and the second message may be the UWB measurement request in the embodiment related to FIG. 9A, or may be the sixth measurement request in the embodiment related to FIG. 9C.

It may be understood that, in a smart home scenario, when a user intends to pair and connect a mobile phone to a target device among smart home devices (including a television, a speaker, and the like), the user may point the mobile phone to the target device, and implement a first user operation. In an implementation, when detecting the first user operation, the mobile phone of the user may initiate measurement on an AOA of a signal, and the mobile phone calculates an AOA of a signal of each smart home device. In another implementation, each smart home device initiates positioning measurement at a scheduled time. When detecting the first user operation, the mobile phone of the user calculates an AOA of a signal of each smart home device in response to the positioning measurement sent by each smart home device. Further, the mobile phone may determine the target device of the user based on the AOA of the signal of each smart home device. One of a plurality of smart home devices can be controlled through a simple operation.

In some embodiments, before that the first device sends a third message to the second device based on the AOA of the signal of the second device and the AOA of the signal of the third device, the method further includes: The first device determines a distance between the first device and the second device based on the received first message; and the first device determines a distance between the first device and the third device based on the received second message. That the first device sends a third message to the second device based on the AOA of the signal of the second device and the AOA of the signal of the third device includes: The first device sends the third message to the second device based on the AOA of the signal of the second device, the distance between the first device and the second device, the AOA of the signal of the third device, and the distance between the first device and the third device. Refer to FIG. 5A to FIG. 5F, FIG. 8A to FIG. 8C, and FIG. 9A to FIG. 9D. The first device (the electronic device 100) may determine the distance between the first device (the electronic device 100) and the second device (the electronic device 201) or the third device (the electronic device 202) based on a received signal. In this way, a target device may be determined from the second device and the third device from two dimensions: an AOA of a signal and a distance. This improves a possibility of accurately controlling a target device in a plurality of devices.

In some embodiments, before that the first device sends a third message to the second device based on the AOA of the signal of the second device and the AOA of the signal of the third device, the method further includes: The first device determines a received signal strength indicator RRSI of the second device based on the received first message; and the first device determines an RRSI of the third device based on the received second message. That the first device sends a third message to the second device based on the AOA of the signal of the second device and the AOA of the signal of the third device includes: The first device sends the third message to the second device based on the AOA of the signal of the second device, the distance between the first device and the second device, the RRSI of the second device, the AOA of the signal of the third device, the distance between the first device and the third device, and the RRSI of the third device. In this way, a target device may be determined from the second device and the third device from three dimensions: an AOA of a signal, a distance, and an RRSI. This improves a possibility of accurately controlling a target device in a plurality of devices. Refer to FIG. 5A to FIG. 5F, FIG. 8A to FIG. 8C, and FIG. 9A to FIG. 9D. The first device (the electronic device 100) may determine the RRSI of the first device (the electronic device 100), the second device (electronic device 201) or the third device (the electronic device 202) based on a received signal. In this way, a target device may be determined from the second device and the third device from three dimensions: an AOA of a signal, a distance, and an RRSI. This improves a possibility of accurately controlling a target device in a plurality of devices.

In some embodiments, that the first device sends a third message to the second device based on the AOA of the signal of the second device and the AOA of the signal of the third device includes: When the first device determines, from the second device and the third device, that a device whose AOA of a signal is closest to 0 degrees is the second device, the first device sends the third message to the second device.

Specifically, when the first device determines, from the second device and the third device, that a device whose AOA of a signal is closest to a preset angle is the second device, the first device sends the third message to the second device. The preset angle may be determined based on distribution, on the first device, of a UWB antenna used to determine an AOA of a signal. For details, refer to the related embodiment in FIG. 5D. For example, the preset angle may be 0 degrees or 90 degrees.

In some embodiments, that the first device sends the third message to the second device based on the AOA of the signal of the second device, the distance between the first device and the second device, the AOA of the signal of the third device, and the distance between the first device and the third device includes: The first device sends the third message to the second device when a difference between the AOA of the signal of second device and the AOA of the signal of the third device is greater than a first threshold, and the first device determines, from the second device and the third device, that a device whose AOA of a signal is smaller is the second device; or the first device sends the third message to the second device when a difference between the AOA of the signal of the second device and the AOA of the signal of third device is less than or equal to a second threshold, and the first device determines, from the second device and the third device, that a device with a smaller distance to the first device is the second device. Specifically, for how to determine a target device from a plurality of devices based on an AOA of a signal and a distance, refer to a related embodiment in FIG. 5G.

In some embodiments, that the first device sends the third message to the second device based on the AOA of the signal of the second device, the distance between the first device and the second device, the RRSI of the second device, the AOA of the signal of the third device, the distance between the first device and the third device, and the RRSI of the third device includes: The first device sends the third message to the second device when the RRSI of the second device is greater than a preset RRSI, and the RRSI of the third device is less than or equal to the preset RRSI; or the first device determines, from the second device and the third device, that a device whose AOA of a signal is smaller is the second device, and the first device sends the third message to the second device when both the RRSI of the second device and the RRSI of the third device are greater than or less than or equal to a preset RRSI, and when a difference between the AOA of the signal of second device and the AOA of the signal of the third device is greater than a first threshold; or the first device determines, from the second device and the third device, that a device with a smaller distance to the first device is the second device, and the first device sends the third message to the second device when both the RRSI of the second device and the RRSI of the third device are greater than or less than or equal to a preset RRSI, and when a difference between the AOA of the signal of second device and the AOA of the signal of the third device is less than or equal to a second threshold. Specifically, for how to determine a target device from a plurality of devices based on an AOA of a signal, a distance, and an RRSI, refer to related embodiments in FIG. 5G and FIG. 5H-1 and FIG. 5H-2.

In some embodiments, the second threshold is equal to the first threshold. For example, the first threshold is equal to 10 degrees. In some embodiments, the second threshold is not equal to the first threshold. For example, the first threshold is equal to 25 degrees, and the second threshold is equal to 20 degrees.

In this embodiment of this application, for a ranging algorithm in which the first device initiates positioning measurement and the first device calculates a distance, refer to the ranging algorithm 3 and the ranging algorithm 4 in the foregoing embodiments. For a ranging algorithm in which the second device and the third device initiate positioning measurement and the first device calculates a distance, refer to the ranging algorithm 1 and the ranging algorithm 2 in the foregoing embodiments.

In some embodiments, before that the first device determines a distance between the first device and the second device based on the received first message, and before that the first device determines a distance between the first device and the third device based on the received second message, the method further includes: The first device receives the first message and sends a fifth message to the second device; the second device receives the fifth message and sends a sixth message to the first device; the first device receives the second message and sends a seventh message to the second device; the second device receives the seventh message and sends an eighth message to the first device; and the first device determines the distance between the first device and the second device based on the received first message. That the first device determines a distance between the first device and the third device based on the received second message includes: The first device determines the distance between the first device and the second device based on receiving moments and sending moments of the first message, the fifth message, and the sixth message; and the first device determines the distance between the first device and the third device based on receiving moments and sending moments of the second message, the seventh message, and the eighth message.

For example, in a voice interaction scenario, the ranging algorithm 2 shown in the embodiments in FIG. 5E and FIG. 5F is used as an example. The second device (for example, the electronic device 201) initiates measurement, and the first device (for example, the electronic device 100) performs distance calculation. The first message may be the first measurement request in the embodiment in FIG. 5F, the fifth message may be the first measurement response in the embodiment in FIG. 5F, and the sixth message may be the second measurement response in the embodiment in FIG. 5F.

For example, in a pairing and connection scenario, the ranging algorithm 2 shown in the embodiments in FIG. 9B and FIG. 9C is used as an example. The second device (for example, the electronic device 201) initiates measurement, and the first device (for example, the electronic device 100) performs distance calculation. The first message may be the sixth measurement request in the embodiment in FIG. 9C, the fifth message may be the sixth measurement response in the embodiment in FIG. 5F, and the sixth message may be the seventh measurement response in the embodiment in FIG. 5F.

In some embodiments, before that the second device receives the fifth message and sends a sixth message to the first device, the method further includes: The first device sends a ninth message to the second device; and the second device receives the ninth message. That the first device determines the distance between the first device and the second device based on receiving moments and sending moments of the first message, the fifth message, and the sixth message includes: The first device determines the distance between the first device and the second device based on receiving moments and sending moments of the first message, the fifth message, the sixth message, and the ninth message

For example, in a voice interaction scenario, the ranging algorithm 1 shown in the embodiments in FIG. 5B and FIG. 5C is used as an example. The second device (for example, the electronic device 201) initiates measurement, and the first device (for example, the electronic device 100) performs distance calculation. The first message may be the first measurement request in the embodiment in FIG. 5C, the fifth message may be the first measurement response in the embodiment in FIG. 5C, the ninth message may be the second measurement request in the embodiment in FIG. 5C, and the sixth message may be the second measurement response in the embodiment in FIG. 5C. For example, in a pairing and connection scenario, refer to the ranging algorithm 1 in the embodiment in FIG. 9D.

In some embodiments, the sixth message carries moments at which the second device sends the first message, receives the fifth message, and sends the sixth message.

In some embodiments, the sixth message carries moments at which the second device sends the first message, receives the fifth message, receives the ninth message, and sends the sixth message.

It may be understood that the sending moment of the first message may alternatively be carried in the first message.

In some embodiments, before that the first device sends a third message to the second device based on the AOA of the signal of the second device and the AOA of the signal of the third device, the method further includes: A fourth device sends a tenth message, where the tenth message carries an identity of the fourth device; and the first device determines an angle of arrival AOA of a signal of the fourth device based on the received tenth message. That the first device sends a third message to the second device based on the AOA of the signal of the second device and the AOA of the signal of the third device includes: The first device sends the third message to the second device based on the AOA of the signal of the second device, the AOA of the signal of the third device, and the AOA of the signal of the fourth device.

The fourth device may be the electronic device 202 or the electronic device 203 in the foregoing embodiment. In some embodiments, the first device may initiate positioning measurement, and the first device determines the AOA of the signal of the fourth device. The tenth message may be the UWB measurement request in the embodiment related to FIG. 5A, or may be the first measurement request in the embodiments related to FIG. 5C and FIG. 5F. The tenth message may alternatively be the fourth measurement response in the embodiment related to FIG. 8C. In some embodiments, the fourth device may initiate positioning measurement, and the fourth device determines the AOA of the signal of the fourth device. The tenth message may be the UWB measurement request in the embodiment related to FIG. 9A, or may be the sixth measurement request in the embodiment related to FIG. 9C.

In some embodiments, before that the first device sends a third message to the second device based on the AOA of the signal of the second device and the AOA of the signal of the third device, the method further includes: The first device determines a distance between the first device and the fourth device and an RRSI of the fourth device based on the received tenth message. That the first device sends a third message to the second device based on the AOA of the signal of the second device and the AOA of the signal of the third device includes: The first device sends the third message to the second device based on the AOA of the signal of the second device, the distance between the first device and the second device, the AOA of the signal of the third device, and the distance between the first device and the third device. In this way, a target device may be determined from the second device, the third device, and the fourth device from three dimensions: an AOA of a signal, a distance, and an RRSI. This improves a possibility of accurately controlling a target device in a plurality of devices.

In some embodiments, before that the first device sends a third message to the second device based on the AOA of the signal of the second device and the AOA of the signal of the third device, the method further includes: The first device determines a received signal strength indicator RRSI of the second device based on the received first message; and the first device determines an RRSI of the third device based on the received second message. That the first device sends a third message to the second device based on the AOA of the signal of the second device and the AOA of the signal of the third device includes: The first device sends the third message to the second device based on the AOA of the signal of the second device, the distance between the first device and the second device, the RRSI of the second device, the AOA of the signal of the third device, the distance between the first device and the third device, the RRSI of the third device, the distance between the first device and the fourth device, and the RRSI of the fourth device. In this way, a target device may be determined from the second device, the third device, and the fourth device from three dimensions: an AOA of a signal, a distance, and an RRSI. This improves a possibility of accurately controlling a target device in a plurality of devices.

In some embodiments, refer to FIG. 5G. That the first device sends the third message to the second device based on the AOA of the signal of the second device, the distance between the first device and the second device, the RRSI of the second device, the AOA of the signal of the third device, the distance between the first device and the third device, the RRSI of the third device, the distance between the first device and the fourth device, and the RRSI of the fourth device includes: The first device sends the third message to the second device when only the RRSI of the second device is greater than a preset RRSI among the second device, the third device and the fourth device; or when more than one of the second device, the third device and the fourth device has an RRSI greater than a preset RRSI, two devices whose AOAs of signals are closest to a preset angle are determined from devices whose RRSIs are greater than the preset RRSI and that are of the second device, the third device and the fourth device; or when none of the second device, the third device and the fourth device have RRSIs greater than a preset RRSI, two devices whose AOAs of signals are closest to a preset angle are determined from the second device, the third device and the fourth device, and when a difference between the AOAs of the signals of the two devices is greater than a first threshold, a device with a smaller AOA of a signal is determined from the two devices as the second device, and the first device sends the third message to the second device; or when more than one of the second device, the third device and the fourth device has an RRSI greater than a preset RRSI, two devices whose AOAs of signals are closest to a preset angle are determined from devices whose RRSIs are greater than the preset RRSI and that are of the second device, the third device and the fourth device; or when none of the second device, the third device and the fourth device have RRSIs greater than a preset RRSI, two devices whose AOAs of signals are closest to a preset angle are determined from the second device, the third device and the fourth device, and when a difference between the AOAs of the signals of the two devices is less than or equal to a second threshold, a device with a smaller distance to the first device is determined from the two devices as the second device, and the first device sends the third message to the second device. Specifically, for how to determine a target device from a plurality of devices based on an AOA of a signal, a distance, and an RRSI, refer to related embodiments in FIG. 5G and FIG. 5H-1 and FIG. 5H-2.

All or some of foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, all or some of the procedures or functions according to embodiments of this application are generated. The computer may be a general purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

**Claims**

1.   A device control method, wherein the method is applied to a communication system, the communication system comprises a first device, a second device, and a third device, the first device, the second device, and the third device communicate with each other by using a near field communication technology, and the method comprises:

sending, by the second device, a first message, wherein the first message carries an identity of the second device;

sending, by the third device, a second message, wherein the second message carries an identity of the third device;

determining, by the first device, an angle of arrival AOA of a signal of the second device based on the received first message, and determining, by the first device, an AOA of a signal of the third device based on the received second message;

sending, by the first device, a third message to the second device based on the AOA of the signal of the second device and the AOA of the signal of the third device; and

performing, by the second device, a response operation in response to the received third message.

2. A device control method, wherein the method comprises:

receiving, by a first device, a first message sent by a second device, wherein the first message carries an identity of the second device;

receiving, by the first device, a second message sent by a third device, wherein the second message carries an identity of the third device;

determining, by the first device, an angle of arrival AOA of a signal of the second device based on the first message, and determining, by the first device, an AOA of a signal of the third device based on the second message; and

sending, by the first device, a third message to the second device based on the AOA of the signal of the second device and the AOA of the signal of the third device, wherein the third message is used to indicate the second device to perform a response operation.

3. The method according to claim 2, wherein the first message is sent by the second device in response to a detected voice command, the second message is sent by the third device in response to the detected voice command, and the third message is used to indicate the second device to output response information in response to the voice command.

4. The method according to claim 2, wherein before the receiving, by a first device, a first message sent by a second device, and before the receiving, by the first device, a second message sent by a third device, the method further comprises:

sending, by the first device, a fourth message in response to a detected first user operation, wherein the fourth message carries an identity of the first device, the first message is sent by the second device based on the fourth message, and the second message is sent by the third device based on the fourth message.

5. The method according to claim 2, wherein before the sending, by the first device, a third message to the second device based on the AOA of the signal of the second device and the AOA of the signal of the third device, the method further comprises:

determining, by the first device, a distance between the first device and the second device based on the first message, and determining, by the first device, a distance between the first device and the third device based on the second message; and

the sending, by the first device, a third message to the second device based on the AOA of the signal of the second device and the AOA of the signal of the third device comprises:

sending, by the first device, the third message to the second device based on the AOA of the signal of the second device, the distance between the first device and the second device, the AOA of the signal of the third device, and the distance between the first device and the third device.

6. The method according to claim 5, wherein before the sending, by the first device, a third message to the second device based on the AOA of the signal of the second device and the AOA of the signal of the third device, the method further comprises:

determining, by the first device, a received signal strength indicator RRSI of the second device based on the first message, and determining, by the first device, an RRSI of the third device based on the second message; and

the sending, by the first device, a third message to the second device based on the AOA of the signal of the second device and the AOA of the signal of the third device comprises:

sending, by the first device, the third message to the second device based on the AOA of the signal of the second device, the distance between the first device and the second device, the RRSI of the second device, the AOA of the signal of the third device, the distance between the first device and the third device, and the RRSI of the third device.

7. The method according to claim 2, wherein the sending, by the first device, a third message to the second device based on the AOA of the signal of the second device and the AOA of the signal of the third device comprises: sending the third message to the second device when the first device determines, from the second device and the third device, that a device whose AOA of a signal is closest to 0 degrees is the second device.

8. The method according to claim 5, wherein the sending, by the first device, the third message to the second device based on the AOA of the signal of the second device, the distance between the first device and the second device, the AOA of the signal of the third device, and the distance between the first device and the third device comprises:

sending the third message to the second device when a difference between the AOA of the signal of second device and the AOA of the signal of the third device is greater than a first threshold, and the first device determines, from the second device and the third device, that a device whose AOA of a signal is smaller is the second device; or sending the third message to the second device when a difference between the AOA of the signal of the second device and the AOA of the signal of third device is less than or equal to a second threshold, and the first device determines, from the second device and the third device, that a device with a smaller distance to the first device is the second device.

9. The method according to claim 6, wherein the sending, by the first device, the third message to the second device based on the AOA of the signal of the second device, the distance between the first device and the second device, the RRSI of the second device, the AOA of the signal of the third device, the distance between the first device and the third device, and the RRSI of the third device comprises:

sending the third message to the second device when the RRSI of the second device is greater than a preset RRSI, and the RRSI of the third device is less than or equal to the preset RRSI; or when both the RRSI of the second device and the RRSI of the third device are greater than or less than or equal to a preset RRSI, and when a difference between the AOA of the signal of second device and the AOA of the signal of the third device is greater than a first threshold, determining, by the first device from the second device and the third device, that a device whose AOA of a signal is smaller is the second device, and sending the third message to the second device; or when both the RRSI of the second device and the RRSI of the third device are greater than or less than or equal to a preset RRSI, and when a difference between the AOA of the signal of second device and the AOA of the signal of the third device is less than or equal to a second threshold, determining, by the first device from the second device and the third device, that a device with a smaller distance to the first device is the second device, and sending the third message to the second device.

10. The method according to claim 5, wherein before the determining, by the first device, a distance between the first device and the second device based on the first message, and before the determining, by the first device, a distance between the first device and the third device based on the second message, the method further comprises:

sending, by the first device, a fifth message to the second device based on the received first message; receiving, by the first device, a sixth message sent by the second device; sending, by the first device, a seventh message to the second device based on the received second message; and receiving, by the first device, an eighth message sent by the third device; and the determining, by the first device, a distance between the first device and the second device based on the first message, and the determining, by the first device, a distance between the first device and the third device based on the second message comprise: determining, by the first device, the distance between the first device and the second device based on receiving moments and sending moments of the first message, the fifth message, and the sixth message, and determining, by the first device, the distance between the first device and the third device based on receiving moments and sending moments of the second message, the seventh message, and the eighth message.

11. The method according to claim 10, wherein before the receiving, by the first device, a sixth message sent by the second device, the method further comprises:

sending, by the first device, a ninth message to the second device; and

the determining, by the first device, the distance between the first device and the second device based on receiving moments and sending moments of the first message, the fifth message, and the sixth message comprises:

determining, by the first device, the distance between the first device and the second device based on receiving moments and sending moments of the first message, the fifth message, the sixth message, and the ninth message.

12. The method according to claim 10, wherein the sixth message carries moments at which the second device sends the first message, receives the fifth message, and sends the sixth message.

13. The method according to claim 11, wherein the sixth message carries moments at which the second device sends the first message, receives the fifth message, receives the ninth message, and sends the sixth message.

14. A terminal, wherein the terminal is a first device and comprises a processor, a near field communication module, a memory, and one or more programs, wherein the processor is coupled to the memory, the processor is connected to the near field communication module, the one or more programs are stored in the memory, the one or more programs comprise instructions, and the instructions are used to execute the method according to claims 2 to 13.

15. The terminal according to claim 14, wherein the terminal further comprises two UWB antennas, the near field communication module is a UWB communication module, and the UWB communication module is connected to the two UWB antennas, wherein

the near field communication module is configured to receive, by using the two UWB antennas, a first message sent by a second device;

the near field communication module is configured to receive, by using the two UWB antennas, a second message sent by a third device;

the processor is configured to determine an angle of arrival AOA of a signal of the second device based on a phase difference of the first message on the two UWB antennas; and

the processor is configured to determine an AOA of a signal of the third device based on a phase difference of the second message on the two UWB antennas.

16. A computer-readable medium, configured to store one or more programs, wherein the one or more programs are executed by one or more processors, the one or more programs comprise instructions, and the instructions are used to perform the method according to claims 2 to 13.

FIG. 1A

FIG. 1B

**System architecture 300**

FIG. 2

Electronic device 100

Antenna 1       Antenna 2

| Mobile communication module 2G/3G/4G/5G [150] | Wireless communication module UWB/BT/WLAN/GNSS/NFC/IR/FM [160] |

Speaker [170A]

Receiver [170B]

Microphone [170C]

Headset jack [170D]

Audio module [170]

Displays 1 to N [194]

Cameras 1 to N [193]

Indicator [192]

Motor [191]

Button [190]

Internal memory [121]

SIM card interfaces 1 to N [195]

External memory interface [120]

USB interface [130]

Charging input

Charging management module [140]

Power management module [141]

Battery [142]

Processor [110]

Sensor module [180]

Pressure sensor [180A]

Gyro sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 3A

FIG. 3B

FIG. 3C

FIG. 3D

+Z

+Y

Top

Antenna
B

Antenna
A

Right

+X

Antenna D

Left

Antenna
C

Bottom

z axis

Y axis

d1

Antenna A

Antenna B

X axis

d2

d3

Antenna C

Antenna D

FIG. 3E

**Electronic device 201**

FIG. 4

| Electronic device 201 | Electronic device 202 | Electronic device 203 | Electronic device 100 |
|---|---|---|---|

S101: Collect ambient sound in real time

S101: Collect ambient sound in real time

S101: Collect ambient sound in real time

S102: Detect a voice command based on the ambient sound

S102: Detect a voice command based on the ambient sound

S102: Detect a voice command based on the ambient sound

S103: Broadcast a UWB measurement request

S103: Broadcast a UWB measurement request

S103: Broadcast a UWB measurement request

S104: Determine an orientation parameter of the electronic device 201 based on the UWB measurement request

S105: Determine, based on orientation parameters of the electronic device 201, the electronic device 202, and the electronic device 203, that the electronic device 201 is a target device

S106: Send first indication information

S107: Send response information in response to the first indication information and the voice command

FIG. 5A

**Ranging algorithm 1**

FIG. 5B

| Electronic device 201 | Electronic device 100 | Electronic device 500 |
|---|---|---|

ID1 ID2 ID3

**T1**
S103: Broadcast a first UWB measurement request, where the first measurement request carries the ID1 of the electronic device 201

**T2**
S103: Broadcast a first UWB measurement request, where the first measurement request carries the ID1 of the electronic device 201

**T31** **T32**

**T4**
S104A: Send a first measurement response, where the first measurement response carries the ID1 and the ID2 of the electronic device 100

**T3**
S104A: Send a first measurement response, where the first measurement response carries the ID1 and the ID3 of the electronic device 500

**T34** **T33**

**T6**
S104B: Send a second measurement request, where the first measurement request carries the ID1 and the ID2

**T5**
S104B: Send a first measurement request, where the first measurement request carries the ID1 and the ID3

**T36** **T35**

**T7**
S104C: Send a second measurement response, where the second measurement response carries T1, T4, T6, T7, ID1, and ID2

**T8**
S104C: Send a second measurement response, where the second measurement response carries the ID1 and the ID3

**T37** **T38**

S104D: Determine a distance of the electronic device 201 based on the T1, T2, T3, T4, T5, T6, T7, and T8, and determine an AOA of a signal and an RRSI of the electronic device 201 based on the first measurement request and/or the second measurement response

S104D: Determine a distance of the electronic device 201 based on the T31, T32, T33, T34, T35, T36, T37, and T38, and determine an AOA of a signal and an RRSI of the electronic device 201 based on the first measurement request and/or the second measurement response

FIG. 5C

Electronic
device 201

Wireless signal

2

θ

d

Receive
antenna 1

Receive
antenna 2

Electronic device 100

FIG. 5D

## Ranging algorithm 2

Tround1

Trelay2

Electronic device 201
(UWB positioning
initiation device)

T1

T4

T9

(ID1, ID2)

(ID1)

(T1, T4, T9,
ID1, ID2)

Electronic device 100
(Distance calculation
device)

T2

T3

T10

Rx

Trelay1

Tround2

FIG. 5E

| Electronic device 201 | | Electronic device 100 | | Electronic device 500 |
|---|---|---|---|---|
| ID1 | | ID2 | | ID3 |

T1 — S103: Broadcast a first UWB measurement request, where the first measurement request carries the ID1 of the electronic device 201 → T2

S103: Broadcast a first UWB measurement request, where the first measurement request carries the ID1

T31 → T32

T4 ← S104E: Send a first measurement response, where the first measurement response carries the ID1 and the ID2 — T3

S104E: Send a first measurement response, where the first measurement response carries the ID1 and the ID3

T34 ← T33

T9 — S104F: Send a second measurement response, where the second measurement response carries T1, T4, T9, ID1, and ID2 → T10

S104F: Send a third measurement response, where the third measurement response carries the ID1 and the ID3

T39 → T40

S104G: Determine a distance of the electronic device 201 based on the T1, T2, T3, T4, T9, and T10, and determine an AOA of a signal and an RRSI of the electronic device 201 based on the first measurement request and/or the third measurement response

S104G: Determine a distance of the electronic device 201 based on the T31, T32, T33, T34, T39, and T40, and determine an AOA of a signal and an RRSI of the electronic device 201 based on the first measurement request and/or the third measurement response

FIG. 5F

Orientation parameters of an electronic
device 201, an electronic device 202, and
an electronic device 203

S1:
Determine
whether there is a device
having no obstacle to the
electronic device
100

Yes

No

S2:
Determine
whether a quantity of devices
having no obstacle is
equal to 1

No

S4: Determine two electronic
devices whose AOAs of signals
are closest to a preset angle

Yes

S3: Determine that the electronic device
having no obstacle is the electronic
device 201

S5:
Determine whether
a difference between the AOAs
of signals of the foregoing two
electronic devices is greater
than a first
threshold

No

Yes

S6: Determine, from the
foregoing two electronic
devices, that an electronic
device whose AOA of a
signal is closer to the preset
angle is the electronic
device 201

S7: Determine, from the
foregoing two electronic
devices, that an electronic
device having a smaller
distance is the electronic
device 201

FIG. 5G

Orientation parameters of an electronic device 201, an electronic device 202, and an electronic device 203

S1: Determine whether there is a device having no obstacle to the electronic device 100

Yes

No

S2: Determine whether a quantity of devices having no obstacle is equal to 1

No

S4: Determine two electronic devices whose AOAs of signals are closest to a preset angle

Yes

S8: Determine whether a difference between an AOA of a signal of the device having no obstacle and the preset angle is less than a preset difference

No

Yes

S10: Determine whether a difference between the AOA of the signal of the electronic device whose AOA of a signal is closest to the preset angle and the preset angle is less than the preset difference

No

Yes

TO
FIG. 5H-2

TO
FIG. 5H-2

FIG. 5H-1

CONT.
FROM
FIG. 5H-1

CONT.
FROM
FIG. 5H-1

S3: Determine that the electronic device having no obstacle is the electronic device 201

S5: Determine whether a difference between the AOAs of signals of the foregoing two electronic devices is greater than a first threshold

No

S9: Determine that the electronic device 100 has no target device

Yes

S6: Determine, from the foregoing two electronic devices, that an electronic device whose AOA of a signal is closer to the preset angle is the electronic device 201

S7: Determine, from the foregoing two electronic devices, that an electronic device having a smaller distance is the electronic device 201

FIG. 5H-2

| Electronic device 201 | Electronic device 202 | Electronic device 203 | Electronic device 100 | Electronic device 301 |
|---|---|---|---|---|
| S201: Collect ambient sound in real time | S201: Collect ambient sound in real time | S201: Collect ambient sound in real time | | |
| S202: Detect a preset voice based on the ambient sound | S202: Detect a preset voice based on the ambient sound | S202: Detect a preset voice based on the ambient sound | | |

S203: Broadcast a UWB measurement request →

S203: Broadcast a UWB measurement request →

S203: Broadcast a UWB measurement request →

S204: Send a measurement response ←

S204: Send a measurement response ←

S204: Send a measurement response ←

| S205: Determine an orientation parameter of the electronic device 201 | S205: Determine an orientation parameter of the electronic device 202 | S205: Determine an orientation parameter of the electronic device 202 | | |

TO
FIG. 6A-2

TO
FIG. 6A-2

FIG. 6A-1

CONT.
FROM
FIG. 6A-1

CONT.
FROM
FIG. 6A-1

| S206: Send the orientation parameter of the electronic device 201 | | | |
|---|---|---|---|
| | S206: Send the orientation parameter of the electronic device 202 | | |
| | | S206: Send the orientation parameter of the electronic device 202 | |
| | | | S207: Determine, based on the orientation parameters of the electronic device 201, the electronic device 202, and the electronic device 203, that the electronic device 201 is a target device |
| S208: Send first indication information | | | |
| S209: Send response information in response to the first indication information and a voice instruction | | | |

FIG. 6A-2

**Ranging algorithm 3**

Tround1

Electronic device 201
(UWB positioning initiation device)
(Distance calculation device)

T1

T4

(AOA1, T2, T3,
ID1, ID2)

(D1)

Electronic device 100

T2

T3

Trelay1

FIG. 6B

| Electronic device 201 | Electronic device 100 | Electronic device 500 |
|---|---|---|

ID1                 ID2                 ID3

S203: Broadcast a first UWB measurement request, where the first measurement request carries the ID1

T1 ⟶ T2

S203: Broadcast a first UWB measurement request, where the first measurement request carries the ID1

T31 ⟶ T32

S204A: Determine an AOA1 based on a phase difference of the first measurement request on different antennas

S204A: Determine an AOA2 based on a phase difference of the first measurement request on different antennas

S204B: Send a first measurement response, where the first measurement response carries the AOA1, T2, T3 and ID1, and the ID2 of the electronic device 100

S204B: Send a first measurement response, where the first measurement response carries the AOA2, the ID1, and the ID3

T4 ⟵ T3

T34 ⟵ T33

S205: For the electronic device 100, determine that an AOA of a signal is the AOA1, determine a distance of the electronic device 201 based on the T1, T2, T3, and T4, and determine an RSSI of the first measurement response

S205: For the electronic device 500, determine that an AOA of a signal is the AOA2, determine a distance of the electronic device 201 based on the T31, T32, T33, and T34, and determine an RSSI of the first measurement response

FIG. 6C

**Ranging algorithm 4**

FIG. 6D

| Electronic device 201 | Electronic device 202 | Electronic device 203 | Electronic device 100 | Electronic device 301 |
|---|---|---|---|---|
| S211: Collect ambient sound in real time | S211: Collect ambient sound in real time | S211: Collect ambient sound in real time | | |
| S212: When a voice command is determined based on the ambient sound, determine decibel information of the voice command | S212: When a voice command is determined based on the ambient sound, determine decibel information of the voice command | S212: When a voice command is determined based on the ambient sound, determine decibel information of the voice command | | |

S213: Send the decibel information

S213: Send the decibel information

S213: Send the decibel information

S214: The electronic device 301 determines, based on the decibel information of the electronic device 201, the electronic device 202, and the electronic device 203, that the electronic device 201 with highest decibel information is a target device

S215: Send first indication information

S216: Send response information in response to the first indication information and the voice command

FIG. 6E

FIG. 7A

501

**100**

A connection to a speaker is established

8

08:08

Friday, February 9

6°C
Beijing

10

Transfer    Gallery    Music    Smart home

Email    Cloud share    Notepad    Settings

FIG. 7B

501

**100**

A connection to a speaker is established

8

08:08

Friday, February 9

6°C
Beijing

10

**Transfer**

**Gallery**

**Music**

**Smart home**

**Email**

**Cloud share**

**Notepad**

**Settings**

○ ● ○

TO
FIG. 7C-2

FIG. 7C-1

100

HUAWEI smart speaker

601

602

602A

Online

602B

603

603A

Friend

603C

603B

603G

603D

603E

00:42    04:42

603F

Nearby devices

604

604A

604B

604B

Air conditioner

Television in the
living room

Refrigerator

FIG. 7C-2

EP 4 171 135 A1

100

ıllll China Mobile 🛜　　　🔋 08:08

08:08
Friday, February 9

6°C
Beijing

10

502

Transfer　Gallery　Music　Smart home

Email　Cloud share　Notepad　Settings

○ ● ○

◁　　○　　▢

TO
FIG. 7D-2

FIG. 7D-1

73

June's home ⁓ 701

702A  702B  702C

All | Living room | Host bedroom ⁓ 702  + ⁓ 704

12

CONT. FROM FIG. 7D-1

703

Speaker
◉ Connected

703A

Television in the living room
Disconnected

703B

Air conditioner in the living room
Disconnected

703C

703D  703E

Refrigerator
Disconnected

Lamp in the living room
Disconnected

705A  705B  705C  705D

705

| Smart home | Vmall | Coolplay | Me |

FIG. 7D-2

12

June's home

All  [Living room]  Host bedroom

＋

Speaker
● Conne
703A

Television in
the living room
Disconnected

Air conditioner
in the living
room
Disconnected

Refrigerator
Disconnected

Lamp in the
living room
Disconnected

Smart home    Vmall    Coolplay    Me

TO
FIG. 7E-2

FIG. 7E-1

100

11

HUAWEI smart speaker

Online

Friend

00:42 ——————●———— 04:42

Nearby devices

Air conditioner | Television in the living room | Refrigerator

CONT. FROM FIG. 7E-1

FIG. 7E-2

EP 4 171 135 A1

FIG. 7F

77

**100**

13

HUAWEI smart television

Volume up + 

Volume down −

Input source
HDMI 1

Projection

**Nearby devices**

**Air conditioner**

**Speaker**

**Refrigerator**

FIG. 7G

| Electronic device 201 | Electronic device 202 | Electronic device 203 | Electronic device 100 |
|---|---|---|---|
| | | | S301: Detect a first input operation |
| S302: Broadcast a UWB measurement request | | | |
| | | S302: Broadcast a UWB measurement request | |
| | S302: Broadcast a UWB measurement request | | |
| | | S303: Send a measurement response | |
| | | S303: Send a measurement response | |
| | S303: Send a measurement response | | |
| | | | S304: Determine an orientation parameter of the electronic device 201 |
| | | | S305: Determine, based on orientation parameters of the electronic device 201, the electronic device 202, and the electronic device 203, that the electronic device 201 is a target device |
| S306: Send a connection request | | | |
| | | | S307: Send first capability information and a corresponding connection parameter, where the first capability information is used to represent a communication mode that can be supported by the electronic device 201 |

FIG. 8A

**Ranging algorithm 3**

Tround1

Electronic device 100

(UWB positioning initiation device)

(Distance calculation device)

T11

(T2, T3, ID1, ID2)

T14

(D2)

Electronic device 201

T12

T13

Trelay1

FIG. 8B

| Electronic device 100 | Electronic device 201 |
|---|---|
| ID2 | ID1 |

T11　　S302: Broadcast a fourth UWB measurement request, where the fourth measurement request carries the ID2　　T12

T14　　S303: Send a fourth measurement response, where the fourth measurement response carries the T12, T13, ID1, and ID2　　T13

S304: Determine a distance of the electronic device 201 based on the T11, T12, T13, and T14, and determine an AOA of a signal and an RRSI of the electronic device 201 based on the fourth measurement request

FIG. 8C

| Electronic device 201 | Electronic device 202 | Electronic device 203 | Electronic device 100 | Electronic device 301 |
|---|---|---|---|---|

S401: Detect a first user operation

S402: Broadcast a UWB measurement request

S402: Broadcast a UWB measurement request

S402: Broadcast a UWB measurement request

S403: Determine an orientation parameter of the electronic device 201

S403: Determine an orientation parameter of the electronic device 202

S403: Determine an orientation parameter of the electronic device 203

S404: Send the orientation parameter of the electronic device 201

S404: Send the orientation parameter of the electronic device 202

TO FIG. 8D-2

TO FIG. 8D-2

FIG. 8D-1

CONT.
FROM
FIG. 8D-1

CONT.
FROM
FIG. 8D-1

S404: Send the orientation parameter of the electronic device 203

S405: Determine, based on the orientation parameters of the electronic device 201, the electronic device 202, and the electronic device 203, that the electronic device 201 is a target device

S407: Send a connection request in response to the second indication information

S406: Send second indication information

S408: Send the first capability information and a corresponding connection parameter

FIG. 8D-2

82

**Ranging algorithm 2**

FIG. 8E

EP 4 171 135 A1

| Electronic device 100 | | Electronic device 201 |
|---|---|---|

ID2                                                    ID1

S402: Broadcast a fourth UWB
measurement request, where the fourth
measurement request carries the ID2

T11 ─────────────────────────────────► T12

S403A: Send a fourth measurement
response, where the fourth measurement
response carries the ID1 and the ID2

T14 ◄───────────────────────────────── T13

S403B: Determine, based on a phase
difference of the fourth measurement
response on different antennas, an AOA of a
signal as AOA3

S403C: Send a fifth measurement response,
where the fifth measurement response carries
the AOA3, T11, T14, T15, ID1, and ID2

T15 ─────────────────────────────────► T16

S403D: Determine the AOA of the signal as
AOA3, determine a distance of the
electronic device 201 based on T11, T12,
T13, T14, T15, and T16, and determine an
RRSI based on the fourth measurement
request and/or the fifth measurement
response

FIG. 8F

| Electronic device 201 | Electronic device 202 | Electronic device 203 | Electronic device 100 |
|---|---|---|---|

S501: Broadcast a UWB measurement request at a scheduled time

S501: Broadcast a UWB measurement request at a scheduled time

S501: Broadcast a UWB measurement request at a scheduled time

S502: Determine an orientation parameter of the electronic device 201 based on the UWB measurement request in response to a detected first user operation

S503: Determine, based on orientation parameters of the electronic device 201, the electronic device 202, and the electronic device 203, that the electronic device 201 is a target device

S504: Send a connection request

S505: Send a connection parameter

FIG. 9A

**Ranging algorithm 2**

FIG. 9B

Electronic device 201

Electronic device 100

ID1

ID2

S501: Broadcast a sixth UWB measurement request, where the sixth measurement request carries the ID1 and a sending moment T17 of the sixth measurement request

T17

T18

S502A: Send a sixth measurement response in response to a detected first user operation, where the sixth measurement response carries the ID1 and ID2

T20

T19

S502B: Send a seventh measurement response, where the seventh measurement response carries the T19, T21, ID1, and ID2

T21

T22

S502C: Determine a distance of the electronic device 201 based on the T17, T18, T19, T20, T21, and T22, and determine an AOA of a signal and an RRSI of the electronic device 201 based on the sixth measurement request and/or the seventh measurement response

FIG. 9C

**Ranging algorithm 1**

FIG. 9D

Application layer

| Bluetooth | WLAN | Smart home | ... |

Application framework layer

API invoking

UWB API | API1 | API2

Bluetooth API

System services

UWB service | API1 | API2

Bluetooth service | WLAN service | Infrared service

System library

UWB hardware service module

UCI protocol stack

UWB time management module

Bluetooth protocol stack

Hardware abstraction layer HAL

Kernel

UWB chip driver

Bluetooth chip driver

FIG. 10A

Android Applications
Android applications

Vendor UWB Frameworks APIs
Vendor ultra-wideband frameworks APIs

Ranging Service Layer
Ranging service layer

UWB-JIN

UCI stack
UWB control protocol interface stack

HBCI UWB FW
download
UWB firmware
download

HAL
Hardware
abstraction
layer

OSAL Layer
Operating
system
abstraction
layer

TML
Time management module

SPI driver
Synchronous peripheral interface driver

Hwlios HW

FIG. 10B

FIG. 10C

FIG. 10D

## INTERNATIONAL SEARCH REPORT

| | International application No. |
|---|---|
| | **PCT/CN2021/105455** |

**A. CLASSIFICATION OF SUBJECT MATTER**

H04W 64/00(2009.01)i; G01S 5/06(2006.01)i; G01S 11/06(2006.01)i; G10L 15/30(2013.01)i; G10L 15/22(2006.01)i

According to International Patent Classification (IPC) or to both national classification and IPC

**B. FIELDS SEARCHED**

Minimum documentation searched (classification system followed by classification symbols)

H04W; G01S; G10L

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE: 华为, 电器, 波达角, 到达角, 家电, 控制, 唤醒, 设备, 选择, 强度, 信号, 蓝牙, 传输, 智能, 声音, 声控, AOA, DOA, ID, RRSI, device, message, signal, control, voice, response

**C. DOCUMENTS CONSIDERED TO BE RELEVANT**

| Category* | Citation of document, with indication, where appropriate, of the relevant passages | Relevant to claim No. |
|---|---|---|
| X | CN 107690679 A (QUALCOMM TECH. INT. LTD.) 13 February 2018 (2018-02-13) description, paragraphs [0021]-[0162], and figures 1-7 | 1-7, 10-16 |
| X | CN 111212182 A (SHENZHEN NUORUIXIN TECHNOLOGY CO., LTD.) 29 May 2020 (2020-05-29) description, paragraphs [0017]-[0138], and figures 1-25 | 1-5, 7, 10-16 |
| A | CN 106936669 A (MIDEA GROUP CO., LTD.) 07 July 2017 (2017-07-07) entire document | 1-16 |
| A | JP 2009303014 A (NIPPON TELEGRAPH & TELEPHONE CORPORATION) 24 December 2009 (2009-12-24) entire document | 1-16 |

| ☐ Further documents are listed in the continuation of Box C. | ☑ See patent family annex. |
|---|---|

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 September 2021** | **27 September 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/105455**

| Patent document cited in search report | | | Publication date (day/month/year) | Patent family member(s) | | | Publication date (day/month/year) |
|---|---|---|---|---|---|---|---|
| CN | 107690679 | A | 13 February 2018 | JP | 6400863 | B1 | 03 October 2018 |
| | | | | EP | 3304515 | A1 | 11 April 2018 |
| | | | | CN | 107690679 | B | 09 April 2019 |
| | | | | US | 2016358459 | A1 | 08 December 2016 |
| | | | | JP | 2018532168 | A | 01 November 2018 |
| | | | | WO | 2016192916 | A1 | 08 December 2016 |
| | | | | EP | 3764332 | A1 | 13 January 2021 |
| | | | | US | 9536421 | B2 | 03 January 2017 |
| | | | | IN | 201727039224 | A | 07 June 2019 |
| CN | 111212182 | A | 29 May 2020 | None | | | |
| CN | 106936669 | A | 07 July 2017 | None | | | |
| JP | 2009303014 | A | 24 December 2009 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010658726X